(19) **Europäisches Patentamt**

**European Patent Office**

**Office européen des brevets**

(11) **EP 0 799 983 B1**

(12) **EUROPEAN PATENT SPECIFICATION**

(45) Date of publication and mention
of the grant of the patent:
**18.06.2003 Bulletin 2003/25**

(51) Int Cl.$^7$: **F02D 41/14**, F02D 41/34,
G01M 15/00

(21) Application number: **97105581.9**

(22) Date of filing: **04.04.1997**

(54) **Method of detection of angular velocity and torque in an internal combustion engine**

Verfahren zum Erfassen der Winkelgeschwindigkeit und des Drehmoments einer Brennkraftmaschine

Méthode de détection de la vitesse angulaire et du couple dans un moteur à combustion interne

(84) Designated Contracting States:
**DE FR GB**

(30) Priority: **05.04.1996 JP 8415396**
**16.04.1996 JP 9410796**
**22.04.1996 JP 10032796**
**24.05.1996 JP 13015096**

(43) Date of publication of application:
**08.10.1997 Bulletin 1997/41**

(73) Proprietor: **TOYOTA JIDOSHA KABUSHIKI
KAISHA
Aichi-ken (JP)**

(72) Inventor: **Shibagaki, Nobuyuki
Toyota-shi, Aichi (JP)**

(74) Representative: **Kügele, Bernhard et al
Novagraaf SA
25, Avenue du Pailly
1220 Les Avanchets - Geneva (CH)**

(56) References cited:
**US-A- 5 086 741**       **US-A- 5 117 681**
**US-A- 5 144 927**

## Description

### BACKGROUND OF THE INVENTION

#### 1. Field of the Invention

The present invention relates to a method of detection in an internal combustion engine.

#### 2. Description of the Related Art

Known in the art is an internal combustion engine which finds a first angular velocity of the crankshaft in the time required for the crankshaft to rotate from $30°$ to $60°$ after top dead center of the compression stroke from this period, finds a second angular velocity of the crankshaft in the time required for the crankshaft to rotate from $90°$ to $120°$ after top dead center of the compression stroke from this time, finds the torque generated by a cylinder from the square of the first angular velocity and the square of the second angular velocity, and calculates the amount of fluctuation of the torque from the amount of fluctuation of the generated torque (see Japanese Examined Patent Publication (Kokoku) No. 7-33809).

That is, when combustion is performed in a cylinder, the combustion pressure causes the angular velocity of the crankshaft to rise from a first angular velocity $\omega a$ to a second angular velocity $\omega b$. At this time, if the moment of inertia of rotation of the engine is I, the combustion pressure causes the kinetic energy to rise from $(1/2) \cdot I \omega a^2$ to $(1/2) \cdot I \omega b^2$. Roughly speaking, the amount of rise of the kinetic energy $(1/2) \cdot I \cdot (\omega b^2 - \omega a^2)$ causes a torque to be generated, so the generated torque becomes proportional to $(\omega b^2 - \omega a^2)$. Therefore, the generated torque is found from the difference between the square of the first angular velocity $\omega a$ and the square of the second angular velocity $\omega b$ and; therefore, in the above-mentioned internal combustion engine, the amount of fluctuation of the torque is calculated from the thus found generated torque.

However, if the generated torque is calculated based on the angular velocities $\omega a$ and $\omega b$ in this way, when for example the engine drive system experiences torsional vibration, the generated torque calculated based on the angular velocities $\omega a$ and $\omega b$ will no longer express the true generated torque. That is, when the engine drive system does not experience a torsional vibration, the second angular velocity $\omega b$ increases from the first angular velocity $\omega a$ by exactly the amount of increase of the angular velocity caused by the combustion pressure. As opposed to this, when the engine drive system experiences a torsional vibration, the second angular velocity $\omega b$ will include in addition to the amount of increase of the angular velocity caused by the combustion pressure the amount of change of the angular velocity caused by the torsional vibration of the engine drive system in the period from detection of the first an-

gular velocity $\omega a$ to detection of the second angular velocity $\omega b$. For example, if the angular velocity increased due to the torsional vibration of the engine drive system in the period from detection of the first angular velocity $\omega a$ to detection of the second angular velocity $\omega b$, the amount of increase of the second angular velocity $\omega b$ with respect to the first angular velocity $\omega a$ will include in addition to the amount of increase of the angular velocity due to the combustion pressure the amount of increase of the angular velocity due to the torsional vibration of the engine drive system. Therefore, in this case, in so far as the amount of increase of the angular velocity due to the torsional vibration of the engine drive system is not subtracted from the second angular velocity $\omega b$, the difference between the square of the first angular velocity $\omega a$ and the square of the second angular, velocity $\omega b$ will not express the generated torque.

However, in the above-mentioned internal combustion engine, no consideration at all is given to the amount of change of the angular velocity due to the torsional vibration of the engine drive system and therefore, in the above mentioned internal combustion engine, when the engine drive system experienced torsional vibration, there was the problem that it was not possible to detect the true generated torque.

### SUMMARY OF THE INVENTION

It would be desirable to provide a method of detection in an engine, capable of accurately detecting an operating parameter representing the drive output from a cylinder, such as an output torque or an output driving force, and an amount of fluctuation of the output torque.

According to the present invention, there is provided a method of detecting a parameter representing the drive output from a cylinder in an internal combustion engine, comprising the steps of:

setting a first crank angle range in a crank angle region from the end of a compression stroke to the beginning of an expansion stroke,
setting a second crank angle range in a crank angle region in the middle of the expansion stroke a predetermined crank angle away from the first crank angle range,
detecting a first angular velocity of the crankshaft in the first crank angle range,
detecting a second angular velocity of the crankshaft in the second crank angle range,
finding the amount of change of the angular velocity between cylinders from the difference of the first angular velocity of a cylinder previously performing combustion and the first angular velocity of a cylinder next performing combustion,
correcting the second angular velocity of the cylinder previously performing the combustion in the direction of decrease when the amount of change of the angular velocity between cylinders has increased,

correcting the second angular velocity of the cylinder previously performing the combustion in the direction of increase when the amount of change of the angular velocity between cylinders has decreased, and finding said parameter representing the drive output generated from a corresponding cylinder based on the first angular velocity and the corrected second angular velocity.

BRIEF DESCRIPTION OF THE DRAWINGS

The present invention may be more fully understood from the description of the preferred embodiments of the invention set forth below together with the accompanying drawings, in which:

Fig. 1 is an overall view of an internal combustion engine;

Fig. 2 is a view of a map of the basic fuel injection time;

Fig. 3 is a view of the amount of generation of NOx and torque fluctuation;

Fig. 4 is a view of a map of a lean correction coefficient;

Fig. 5 is a view of a map of a lean limit feedback correction coefficient;

Figs. 6A and 6B are time charts of the changes in the elapsed times Ta(i) and Tb(i) of 30° crank angle;

Fig. 7 is a time chart of the changes in the elapsed time Ta(i) of 30° crank angle;

Fig. 8 is a time chart of the changes in the elapsed times Ta(i) and Tb(i) of 30° crank angle;

Fig. 9 is a time chart of the changes in the elapsed times Ta(i) and Tb(i) of 30° crank angle;

Fig. 10 is a time chart of the changes in the elapsed time Ta(i) of 30° crank angle;

Fig. 11 is a flowchart of the interruption routine;

Fig. 12 is a flowchart for calculating the elapsed times Ta(i) and Tb(i);

Figs. 13 to 15 are flowcharts for checking the permission for calculation of the torque;

Fig. 16 is a time chart of the changes of the elapsed time Ta(i) and the changes of the flags XMXREC and XMNREC;

Fig. 17 is a flowchart for calculating the torque;

Figs. 18 and 19 are flowcharts for calculating the ratios KTa(i) and KTb(i);

Fig. 20 is a flowchart for processing of the counter CDLNIX;

Fig. 21 is a view of the timings for calculation of various values;

Figs. 22A and 22B are views of a target torque fluctuation value;

Figs. 23A and 23B are views of the of fluctuation amount judgement values DH(n) and DL(n) and the levels of torque fluctuation LVLH(n) and LVLL(n) ;

Fig. 24 is a flowchart showing a main routine;

Figs. 25 and 26 are flowcharts for calculating the torque fluctuation value;

Fig. 27 is a flowchart of the calculation of a lean limit feedback correction coefficient;

Fig. 28 is a flowchart for calculating the fuel injection time;

Fig. 29 is a view of the relationship of the amplitude of the torsional vibration of the crankshaft and the engine speed N;

Figs. 30A and 30B are views of changes in the angular velocity;

Fig. 31 is a view of the relationship of the crankshaft position and the amplitude of the torsional speed;

Fig. 32 is a flowchart of an interruption.routine;

Fig. 33 is a flowchart for calculating the elapsed times Ta(i) and Tb(i);

Figs. 34 and 35 are flowcharts for calculating the torque;

Fig. 36 is a flowchart showing a main routine;

Figs. 37 and 38 are flowcharts for calculating the torque fluctuation value;

Fig. 39 is a flowchart for calculating the fuel injection time;

Fig. 40 is a time chart of the changes in the elapsed times Ta(i) and Tb(i) of 30° crank angle;

Figs. 41A and 41B are time charts of the changes in the elapsed times Ta(i) and Tb(i) of 30° crank angle;

Fig. 42 is a view of the amount of increase of the elapsed time;

Fig. 43 is an enlarged side view of a rotor;

Fig. 44 is a view of the amount of increase of the elapsed time;

Fig. 45 is a flowchart of an interruption routine;

Fig. 46 is a flowchart for checking the permission for calculation of the torque;

Figs. 47 to 49 are flowcharts for calculating the torque;

Figs. 50 and 51 are flowcharts for calculating the ratios KTa(i) and KTb(i);

Fig. 52 is a flowchart for processing of the counter CDLNIX;

Fig. 53 is a view of the timings for calculation of various values;

Fig. 54 is a flowchart showing a main routine;

Figs. 55 and 56 are flowcharts for calculating the torque fluctuation value;

Fig. 57 is a flowchart for calculating the fuel injection time;

Fig. 58 is a time chart of the changes in the elapsed time Ta(i) of 30° crank angle and the elapsed time Tb(i) of 50° crank angle;

Fig. 59 is a time chart of the changes in the elapsed time Ta(i) of 30° crank angle and the elapsed time Tb(i) of 50° crank angle;

Fig. 60 is a time chart of the changes in the elapsed time Ta(i) of 30° crank angle and the elapsed time Tb(i) of 50° crank angle;
Fig. 61 is a flowchart of an interruption routine;
Fig. 62 is a flowchart for calculating the elapsed times Ta(i) and Tb(i);
Figs. 63 to 65 are flowcharts for checking the permission for calculation of the torque;
Fig. 66 is a flowchart for calculating the torque; and
Fig. 67 is a flowchart showing a main routine.

## DESCRIPTION OF THE PREFERRED EMBODIMENTS

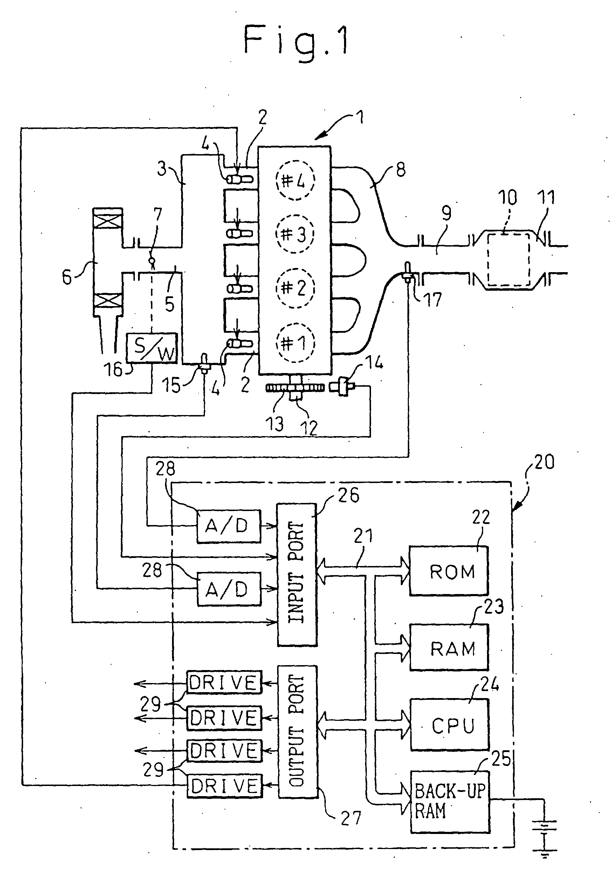

Referring to Fig. 1, 1 shows an engine body provided with four cylinders consisting of the No. 1 cylinder #1, No. 2 cylinder #2, No. 3 cylinder #3, and No. 4 cylinder #4. The cylinders #1, #2, #3, and #4 are respectively connected through the corresponding intake pipes 2 to a surge tank 3. In the intake tubes 2 are provided fuel injectors 4 for injecting fuel toward the corresponding intake ports. The surge tank 3 is connected through an intake duct 5 to an air cleaner 6. In the intake duct 5, a throttle valve 7 is arranged. On the other hand, the cylinders #1, #2, #3, and #4 are connected through an intake manifold 8 and an exhaust pipe 9 to a casing 11 accommodating an NOx absorbent 10. This NOx absorbent 10 has the function of absorbing the NOx included in the exhaust gas when the air-fuel ratio is lean and discharging the absorbed NOx when the air-fuel ratio is the stoichiometric air-fuel ratio or rich.

The electronic control unit 20 is comprised of a digital computer and is provided with a ROM (read only memory) 22, a RAM (random access memory) 23, a CPU (microprocessor) 24, a backup RAM 25 connected to a constant power supply, an input port 26, and an output port 27 connected with each other by a bidirectional bus 21. The output shaft of the engine 12 has attached to it a rotor 13 with outer teeth. A crank angle sensor 14 comprising an electromagnetic pickup is arranged facing the outer teeth of the rotor 13. As shown in Fig. 1, in this embodiment, the rotor 13 has an outer tooth formed on its periphery at every 30° crank angle and, for example, has part of the outer teeth removed for detecting the top dead center of the compression stroke of the No. 1 cylinder. Therefore, except for the portion where the outer teeth are removed, that is, the non-tooth portion, the crank angle sensor 14 generates an output pulse every time the output shaft 12 turns by 30° crank angle. This output pulse is input to the input port 26.

The surge tank 3 has attached to it a pressure sensor 15 for generating an output voltage proportional to the absolute pressure in the surge tank 3. The output voltage of this pressure sensor 15 is input through a corresponding AD converter 28 to the input port 26. Further, the throttle valve 7 has attached to it an idle switch 16 for detecting when the throttle valve 7 is at the idling opening position. The output signal of this idle switch 16 is input to the input port 26. Further, the intake manifold 8 has disposed in it an air-fuel ratio sensor ($O_2$ sensor) 17 for detecting the air-fuel ratio. The output signal of this air-fuel ratio sensor 17 is input through the corresponding AD converter 28 to the input port 26. On the other hand, the output port 27 is connected through the corresponding drive circuit 29 to the fuel injectors 4.

In the internal combustion engine shown in Fig. 1, the fuel injection time TAU is calculated based on the following equation:

$$TAU = TP \cdot FLEAN \cdot FLLFB \cdot FAF + TAUV$$

Here, TP shows a basic fuel injection time, FLEAN a lean correction coefficient, FLLFB a lean limit feedback correction coefficient, FAF a stoichiometric air-fuel ratio feedback correction coefficient, and TAUV an invalid injection time.

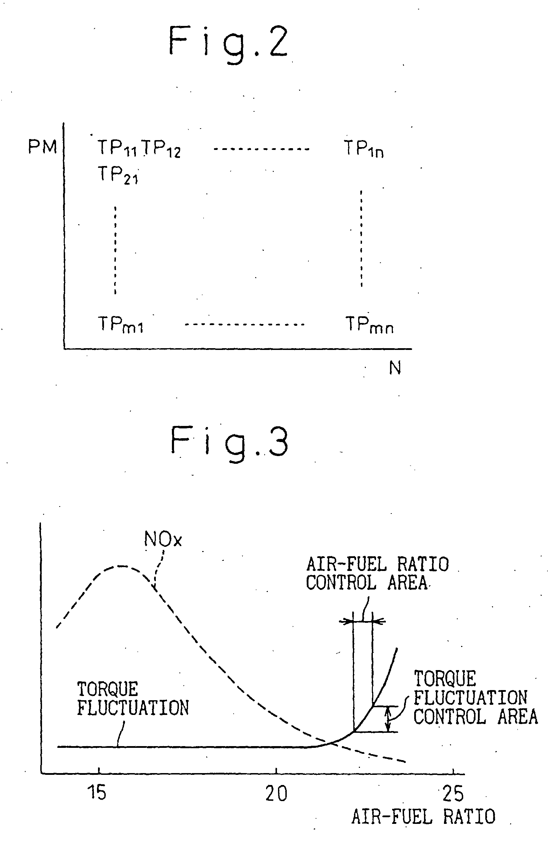

The basic fuel injection time TP shows the injection time required for making the air-fuel ratio the stoichiometric air-fuel ratio. This basic fuel injection time TP is found from experiments. This basic fuel injection time TP is stored in the ROM 22 in advance in the form of a map shown in Fig. 2 as a function of the absolute pressure PM in the surge tank 3 and the engine speed N.

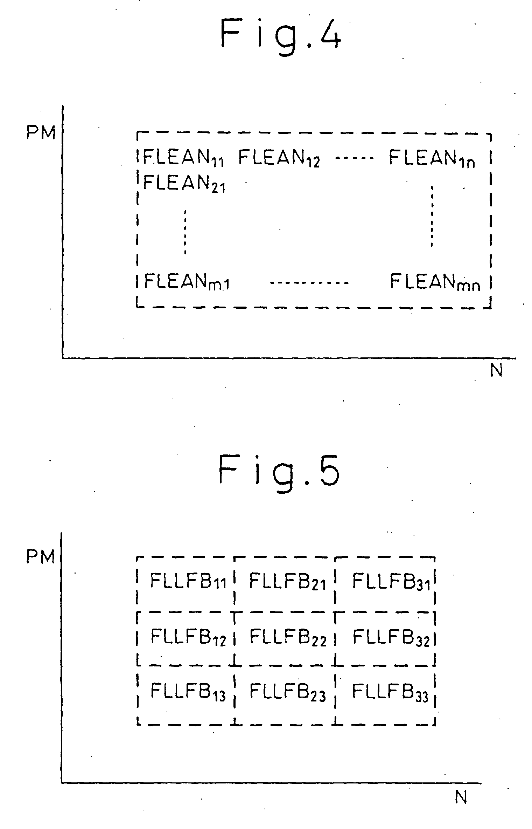

The lean correction coefficient FLEAN is a correction coefficient for making the air-fuel ratio a target lean air-fuel ratio. This lean correction coefficient FLEAN is stored in advance in the ROM 22 in the form of the map shown in Fig. 4 as a function of the absolute pressure PM in the surge tank 3 and the engine speed N.

The lean limit feedback correction coefficient FLLFB is a correction coefficient for maintaining the air-fuel ratio at the lean limit. In this embodiment according to the present invention, the learning region for the lean air-fuel ratio feedback control for the absolute pressure PM in the surge tank 3 and the engine speed N is divided into nine regions as shown in Fig. 5 for example. Lean limit feedback correction coefficients FLLFB 11 to FLLFB 33 are set for the learning regions.

The stoichiometric air-fuel ratio feedback correction coefficient FAF is a coefficient for maintaining the air-fuel ratio at the stoichiometric air-fuel ratio. The stoichiometric air-fuel ratio feedback correction coefficient FAF is controlled based on the output signal of the air-fuel ratio sensor 17 so as to maintain the air-fuel ratio at the stoichiometric air-fuel ratio. At this time, the stoichiometric air-fuel ratio feedback correction coefficient FAF varies substantially about 1.0.

The lean correction coefficient FLEAN is set in accordance with the operating state of the engine for the operating region enclosed by the broken lines in Fig. 4. In this operating region, the air-fuel ratio is maintained at the target lean air-fuel ratio. As opposed to this, in the operating region outside the region enclosed by the broken line in Fig. 4, the air-fuel ratio is maintained at the stoichiometric air-fuel ratio. When the air-fuel ratio is to be maintained at the stoichiometric air-fuel ratio, the lean correction coefficient FLEAN and the lean limit feedback correction coefficient FLLFB are fixed at 1.0 and the stoichiometric air-fuel ratio feedback correction coefficient FAF is controlled based on the output signal of the air-fuel ratio sensor 17.

On the other hand, when the air-fuel ratio is to be maintained at the target lean air-fuel ratio, the stoichiometric air-fuel ratio feedback correction coefficient FAF is fixed at 1.0, that is, the feedback control based on the output signal of the air-fuel ratio sensor 17 is stopped, and the lean correction coefficient FLEAN and the lean limit feedback correction coefficient FLLFB are used to control the air-fuel ratio to the target lean air-fuel ratio.

Next, the lean limit feedback control will be explained referring to Fig. 3. Fig. 3 shows the relationship between the amount of fluctuation of the torque of the engine output and the amount of generation of NOx and the air-fuel ratio. The leaner the air-fuel ratio, the smaller the fuel consumption rate. Further, the leaner the air-fuel ratio, the smaller the amount of generation of NOx. Therefore, viewed from these points, the air-fuel ratio should desirably be made as lean as possible. Note, however, that when the air-fuel ratio becomes leaner than a certain extent, the combustion becomes unstable and, as a result, as shown in Fig. 3, the amount of fluctuation of the torque becomes large. Therefore, in this embodiment according to the present invention, as shown in Fig. 3, the air-fuel ratio is maintained in the air-fuel ratio control region where the torque fluctuation starts to increase.

That is, explaining this in more detail, the lean correction coefficient FLEAN is determined so that the air-fuel ratio becomes the middle of the air-fuel ratio control region shown in Fig. 3 when the lean limit feedback correction coefficient FLLFB is made 1.0. On the other hand, the lean limit feedback correction coefficient FLLFB is controlled to within the torque fluctuation control region shown in Fig. 3 in accordance with the amount of fluctuation of the torque. When the amount of fluctuation of the torque becomes larger, the lean limit feedback correction coefficient FLLFB is increased, that is, the air-fuel ratio is made smaller, while when the amount of fluctuation of the torque becomes smaller, the lean limit feedback correction coefficient FLLFB is reduced, that is, the air-fuel ratio is made larger. In this way, the air-fuel ratio is controlled to within the air-fuel ratio control region shown in Fig. 3.

Note that, as will be understood from a comparison of Fig. 4 and Fig. 5, the lean limit feedback correction coefficient FLLFB is set to substantially the same region as the engine operating region where the lean correction coefficient FLEAN is set.

If the amount of fluctuation of the torque is controlled to within the torque fluctuation control region shown in Fig. 3, an excellent drivability of the vehicle may be ensured while the fuel consumption rate and the amount of generation of NOx can be greatly reduced. However, since the amount of fluctuation of the torque is controlled to be within the torque fluctuation control region in this way, the amount of fluctuation of the torque must be detected and the torque must be detected to detect the amount of fluctuation of the torque.

Various methods have been proposed in the past for calculating the output torque of each cylinder. That is, if it were possible to calculate the output torque of each cylinder, the thus calculated output torque could be used not only to enable the control of the lean air-fuel ratio as explained above, but also other various types of control, so finding the best method for calculating the output torque of each cylinder has great significance. Therefore, in the past, various methods have been proposed for calculating the output torque of each cylinder. Mentioning typical ones, there are the method of providing a combustion pressure sensor in the combustion chamber and calculating the output torque based on the output signal of this combustion pressure sensor or the method of, as explained at the beginning, calculating the output torque from the difference between the square of the first angular velocity ωa and the square of the second angular velocity ωb.

If a combustion pressure sensor is used, there is the advantage that the torque generated in the cylinder provided with the combustion pressure sensor can be reliably detected, but there is conversely the disadvantage that the combustion pressure sensor is required. As opposed to this, the angular velocities ωa and ωb can be calculated from the output signal of the crank angle sensor provided in the internal combustion engine in the past, so when calculating the output torque . based on the angular velocities ωa and ωb, there is the advantage that there is no need to mount a new sensor. However, in this case, as explained at the beginning, if the engine drive system experiences torsional vibration, there is the problem that the generated torque can no longer be accurately detected. It is clear, however, that if this problem could just be solved, then the method of calculation of the torque based on the angular velocity, which does not require a new sensor, would be preferable. Therefore, the present invention calculates the generated torque based on the angular velocity and thereby can accurately detect the generated torque even if the engine drive system experiences torsional vibration.

Next, the new method according to the present invention for calculating the drive force generated by each cylinder and the torque generated in each cylinder will be explained.

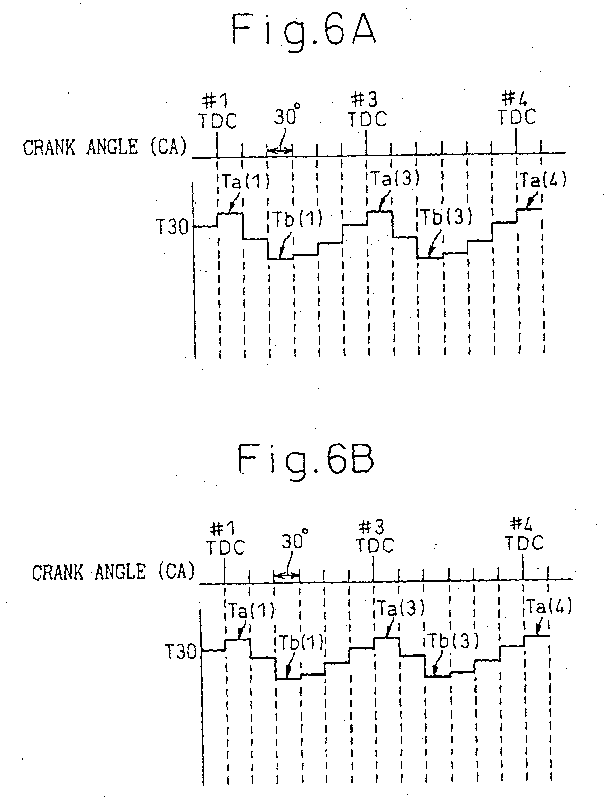

First, the method of calculating the drive force generated by each cylinder and the torque generated in each cylinder will be explained while referring to Figs. 6A and 6B showing the steady operating state where the engine drive system does not experience torsional vibration. As explained above, the crank angle sensor 14 produces an output pulse each time the crankshaft rotates by 30° crank angle. Further, the crank angle sensor 14 is arranged to generate an output pulse at the top dead center TDC of the compression stroke of the cylinders #1, #2, #3, and #4. Therefore, the crank angle sensor 14 produces an output pulse for each 30° crank angle from the top dead center TDC of the compression stroke of the cylinders #1, #2, #3, and #4. Note that, the ignition sequence of the internal combustion engine used in the present invention is 1-3-4-2.

In Figs. 6A and 6B, the vertical axis T30 shows the elapsed time of 30° crank angle from when the crank angle sensor 14 produces an output pulse to when it produces the next output pulse. Further, Ta(i) shows the elapsed time from the top dead center of the compression stroke (hereinafter referred to as TDC) to 30° after top dead center of the compression stroke (hereinafter referred to as ATDC) of the No. i cylinder, while Tb(i) shows the elapsed time from ATDC 60° to ATDC 90° of the No. i cylinder. Therefore, for example, since Ta(1) shows the elapsed time from TDC to ATDC 30° of the No. 1 cylinder, while Tb(1) shows the elapsed time from ATDC 60° to ATDC 90° of the No. 1 cylinder. On the other hand, if the 30° crank angle is divided by the elapsed time T30, the result of the division shows the angular velocity $\omega$. In this embodiment according to the present invention, 30° crank angle/Ta(i) is referred to as the first angular velocity $\omega a$ in the No. i cylinder, while 30° crank angle /Tb(i) is referred to as the second angular velocity $\omega b$ in the No. i cylinder. Therefore, 30° crank angle/Ta (1) shows the first angular velocity $\omega a$ of the No. 1 cylinder, while 30° crank angle/Tb(1) shows the second angular velocity $\omega b$ of the No. 1 cylinder.

Taking note of the No. 1 cylinder of Figs. 6A and 6B, when the combustion is started and the combustion pressure rises, the elapsed time falls from Ta(1) to Tb(1) then rises from Tb(1). In other words, the angular velocity of the crankshaft $\omega$ rises from the first angular velocity $\omega a$ to the second angular velocity $\omega b$, then falls again from the second angular velocity $\omega b$. That is, the combustion pressure causes the angular velocity $\omega$ of the crankshaft to increase from the first angular velocity $\omega a$ to the second angular velocity $\omega b$. Fig. 6A shows the case where the combustion pressure is relatively high, while Fig. 6B shows the case where the combustion pressure is relatively low. From Figs. 6A and 6B, when the combustion pressure is high, the amount of reduction of the elapsed time (Ta(i)-Tb(i)) becomes larger compared with when the combustion pressure is low, therefore the amount of increase ($\omega b$-$\omega a$) of the angular velocity $\omega$ becomes larger. When the combustion pressure becomes higher, the drive force generated by the cylinder becomes larger, therefore if the amount of increase ($\omega b$-$\omega a$) of the angular velocity $\omega$ becomes larger, the drive force generated by the cylinder becomes larger. Therefore, it is possible to calculate the drive force generated by a cylinder from the difference ($\omega b$-$\omega a$) between the first angular velocity $\omega a$ and the second angular velocity $\omega b$.

On the other hand, if the moment of inertia of rotation of the engine is I, the combustion pressure causes the kinetic energy to increase from $(1/2)\,I\omega a^2$ to $(1/2)\,I\omega b^2$. The amount of increase of the kinetic energy $(1/2)\cdot I\cdot(\omega b^2-\omega a^2)$ expresses the torque generated by that cylinder, therefore it becomes possible to calculate the torque generated by a cylinder from the difference $(\omega b^2-\omega a^2)$ between the square of the first angular velocity $\omega a$ and the square of the second angular velocity $\omega b$.

By detecting the first angular velocity $\omega a$ and the second angular velocity $\omega b$ in this way, it becomes possible to calculate the drive force generated by the corresponding cylinder and the torque generated by the corresponding cylinder from the detection values. Note that the change in the elapsed time T30 shown in Figs. 6A and 6B differs somewhat depending on the engine, therefore the crank angle range for detecting the first angular velocity $\omega a$ and the crank angle range for detecting the second angular velocity $\omega b$ are set in accordance with the engine so that ($\omega b$-$\omega a$) best expresses the drive force generated by the engine or so that $(\omega b^2-\omega a^2)$ best expresses the torque generated by the engine. Therefore, depending on the engine, the crank angle range for detecting the first angular velocity $\omega a$ may be from before the top dead center of the compression stroke BTDC 30° to TDC, while the crank angle range for detecting the second angular velocity $\omega b$ may be from ATDC 90° to ATDC 120°.

Therefore, explaining the method of detecting the angular velocities $\omega a$ and $\omega b$ in general terms, the first crank angle range is set in the crank angle region from the end of the compression stroke to the beginning of the expansion stroke, the second crank angle range is set in a crank angle region in the middle of the expansion stroke a predetermined crank angle away from the first crank angle range, the first angular velocity $\omega a$ of the crankshaft in the first crank angle range is detected, and the second angular velocity of the crankshaft $\omega b$ in the second crank angle range is detected.

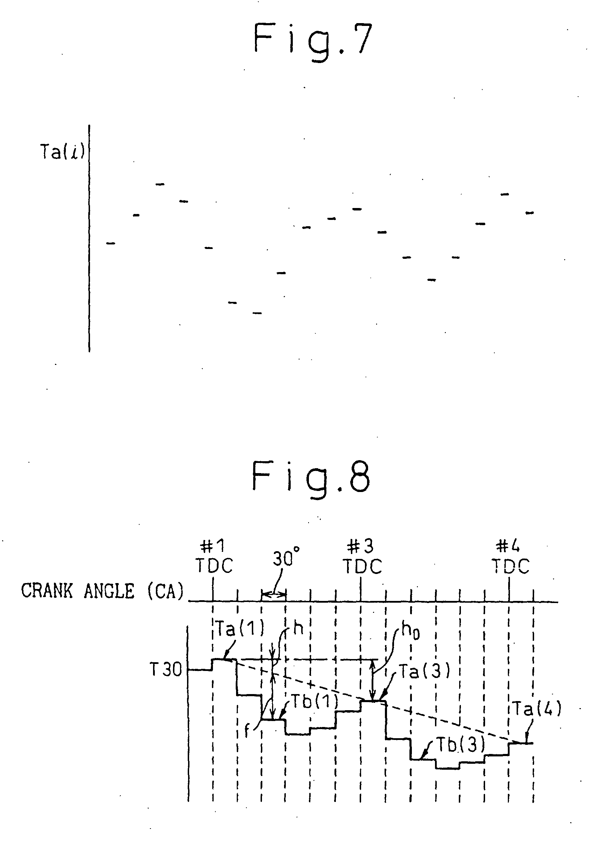

As explained above, by detecting the angular velocities $\omega a$ and $\omega b$, it becomes possible to calculate the drive force and the torque generated by a corresponding cylinder based on the detected values. The engine drive system, however, experiences torsional vibration occurring at the natural frequency of the drive system due to the successive explosive actions of the cylinders. If the engine drive system experiences such torsional vibration, it no longer becomes possible to accurately detect the drive force and the torque generated by a cylinder based on the angular velocities $\omega a$ and $\omega b$. Next, this will be explained with reference to Fig. 7 and Fig. 8.

Fig. 7 shows the changes in the elapsed time Ta(i) successively calculated for each cylinder when the engine drive system experiences torsional vibration. When the engine drive system experiences torsional vibration, this torsional vibration causes the angular velocity of a crankshaft to be cyclically increased and decreased, so the elapsed time Ta(i) increases and decreases cyclically as shown in Fig. 7.

On the other hand, Fig. 8 shows the portion where the elapsed time Ta(i) is reduced in an enlarged manner. As shown in Fig. 8, the elapsed time Ta(i) falls by ho between Ta(1) and Ta(3). This reduction of ho is believed to be due to an increase in the amount of torsion due to the torsional vibration. In this case, the amount of decrease of the elapsed time due to the torsional vibration between Ta(1) and Ta(3) is believed to increase substantially linearly along with the elapse of time, therefore this amount of decrease of the elapsed time due to the torsional vibration is shown by the difference between the broken line connecting Ta(1) and Ta(3) and the horizontal line passing through Ta(1). Therefore, between Ta(1) and Tb(1), the torsional vibration causes the elapsed time to fall by exactly h.

That is, Tb(1) is lower in elapsed time than Ta(1), but this lower elapsed time includes the amount of decrease f of the elapsed time due to the combustion pressure and the amount of decrease h of the elapsed time due to the torsional vibration. Therefore, to find just the elapsed time Tb'(1) decreased due to the combustion pressure, it becomes necessary to add h to Tb(1). That is, when the elapsed time Ta(i) decreases between cylinders (Ta(1)→Ta(3)), to find just the elapsed time Tb'(1) decreased due to the combustion pressure, the detected elapsed time Tb(1) must be corrected in the upward direction. In other words, when the first angular velocity ωa increases between cylinders, the second angular velocity ωb of the cylinder where the combustion was first performed must be corrected in the downward direction.

As opposed to this, when Ta(3) increases with respect to Ta(2), the elapsed time Tb(1) reduced from Ta(1) includes the amount of decrease of the elapsed time due to the combustion pressure and the amount of increase of the elapsed time due to the torsional vibration. Therefore, in this case, to find just the elapsed time Tb'(1) reduced due to the combustion pressure, the amount of increase of the elapsed time due to the torsional vibration must be subtracted from Tb(1). That is, when the elapsed time Ta(i) increases between cylinders, to find just the elapsed time Tb'(1) decreased due to the combustion pressure, the detected elapsed time Tb(1) must be corrected in the downward direction. In other words, when the first angular velocity ωa decreases between cylinders, the second angular velocity ωb of the cylinder where the combustion was first performed must be corrected in the upward direction.

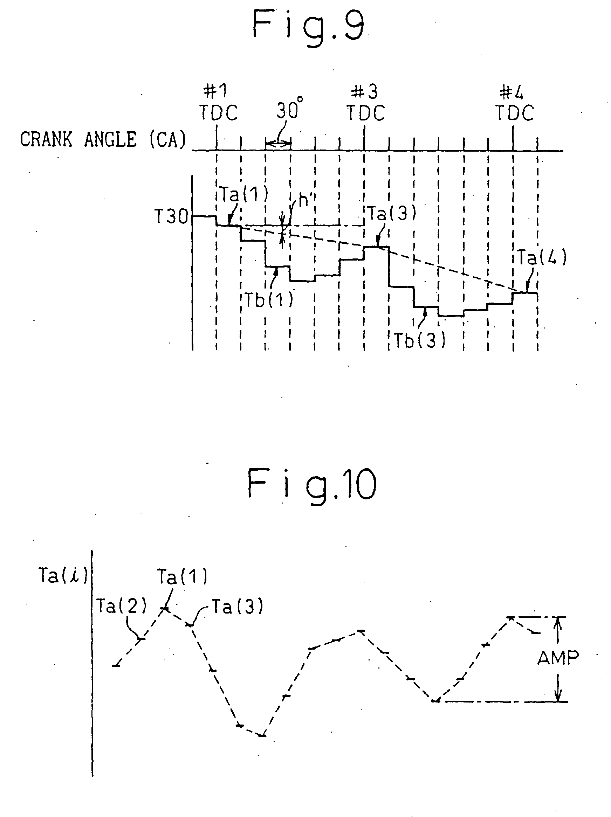

As explained above, correction of the second angular velocity ωb enables the drive force generated by each cylinder to be accurately detected from the difference (ωb-ωa) between the first angular velocity ωa and the second angular velocity ωb even when the engine drive system experiences torsional vibration and enables the torque generated by each cylinder to be accurately calculated from the difference (ωb²-ωa²) between the square of the first angular velocity ωa and the square of the second angular velocity ωb. Note, however, that if there is variation in the spaces between the outer teeth formed along the outer periphery of the rotor 13 (Fig. 1), even if the second angular velocity ωb is corrected as explained above, the drive force and the torque generated by a cylinder cannot be accurately detected. Next, this will be explained with reference to Fig. 9.

Fig. 9 shows the case where the space between the outer tooth of the rotor 13 showing the TDC of the No. 1 cylinder #1 and the outer tooth of the rotor 31 showing ATDC 30° is smaller than the space between other outer teeth. In this case, as will be understood from a comparison of Fig. 8 and Fig. 9, the elapsed time Ta(1) will end up becoming smaller than the correct elapsed time for 30° crank angle. Further, at this time, as will be understood from a comparison of Fig. 8 and Fig. 9, the amount of decrease h' of the elapsed time due to the torsional vibration will end up becoming smaller than the correct amount of decrease h and therefore the value of Tb'(1) expressing just the elapsed time decreased due to the combustion pressure will also end up becoming smaller than the correct value.

Therefore, in this embodiment according to the present invention, the ratio KTa(i) (= Ta(i)m/Ta(i)) between the mean value Ta(i)m of the elapsed times Ta(i) of all of the cylinders and the elapsed time Ta(i) of each cylinder and the ratio KTb(i) (= Tb(i)m/Tb(i)) between the mean value Tb(i)m of the elapsed times Tb(i) of all of the cylinders and the elapsed time Tb(i) of each cylinder at the time of when the supply of fuel has been stopped in a deceleration operation when the engine drive system does not experience torsional vibration are found. When the fuel is being supplied, the actually detected elapsed time Ta(i) for each cylinder is multiplied by the ratio KTa(i) so as to find the final elapsed time Ta(i) for each cylinder and the actually detected elapsed time Tb(i) for each cylinder is multiplied by the ratio KTb(i) so as to find the final elapsed time Tb(i) for each cylinder.

Therefore, for example, when, as explained above, the elapsed time Ta(1) actually detected for the No. 1 cylinder #1 is shorter than the correct elapsed time, the ratio KTa(1) becomes larger than even 1.0, therefore the final elapsed time Ta(1) obtained by multiplying the actually detected elapsed time Ta(1) with the ratio KTa(1) becomes considerably close to the correct elapsed time Ta(1). Further, by finding the amount of decrease of the elapsed time due to the torsional vibration h based on the thus obtained final elapsed time Ta(i), this amount of decrease h substantially matches with the correct amount of decrease, therefore even the value of Tb'(1) expressing just the elapsed time due to the combustion pressure substantially shows the correct value. In this way, in this embodiment according to the present invention, even if there is a variation in the spaces between the outer teeth of the rotor 13, the drive force and the torque generated at each cylinder can be accurately detected.

On the other hand, the Ta(i) for each cylinder fluctuates when the vehicle is traveling over a bumpy road. Further, at this time, sometimes the amount of fluctuation of Ta(i) becomes extremely large. Fig. 10 shows the fluctuation in Ta(i) when the vehicle is traveling over a bumpy road. AMP of Fig. 10 shows the difference between the minimum Ta(i) and maximum Ta(i), that is, the amplitude. When this amplitude AMP is small, by calculating h shown in Fig. 8 by the method explained up to now, the value of Tb'(i) expressing only the elapsed time due to the combustion pressure can be accurately detected.

However, when the amplitude AMP becomes large, the drive force or the torque generated at a cylinder at which Ta(i) becomes maximum or minimum can no longer be accurately detected. That is, in Fig. 10, when for example the cylinder giving the maximum Ta(i) is first the No. 1 cylinder, the amount of decrease h due to the torsional vibration for calculating the Tb'(1) of the No. 1 cylinder #1 is found from the inclination of the broken line connecting Ta(1) and Ta(3) in Fig. 10. However, near when the No. 1 cylinder #1 reaches TDC, the amount of increase or the amount of decrease of the elapsed time due to the torsional vibration changes by the smooth curve passing through Ta(2), Ta(1), and Ta(3). Therefore, if the value of the amount of decrease h of the No. 1 cylinder #1 with respect to Tb(1) is found from the inclination of the broken line connecting Ta(1) and Ta(3), the value of this amount of decrease h is calculated considerably larger than even the actual value. As a result, Tb'(1) no longer shows the correct value, therefore the drive force and the torque generated at the cylinder can no longer be accurately detected. When the amplitude AMP becomes large, the same thing occurs at the cylinder giving the minimum Ta(i).

Further, in a cylinder where Ta(i) changes sharply from the Ta(i) of the cylinder at which the combustion was performed one time before, the value of h deviates from the actual value, therefore the drive force and the torque generated by the cylinder can no longer be accurately detected. Therefore, in this embodiment according to the present invention, when the amplitude AMP is large, the drive force or the torque for the cylinder at which Ta(i) becomes maximum or minimum is not sought. Further, the drive force or the torque is also not sought for a cylinder where the Ta(i) rapidly changes from the Ta(i) for the cylinder at which the combustion was performed one time before.

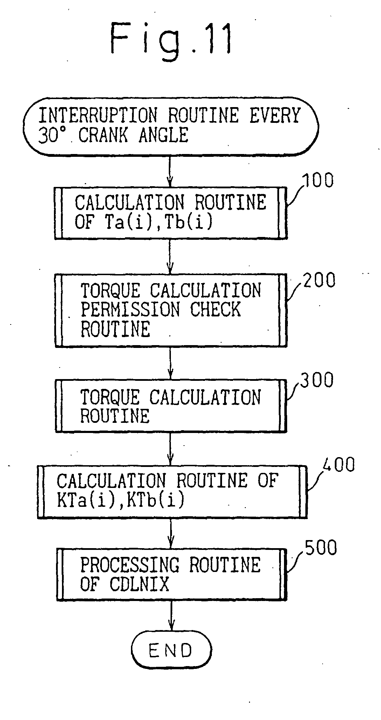

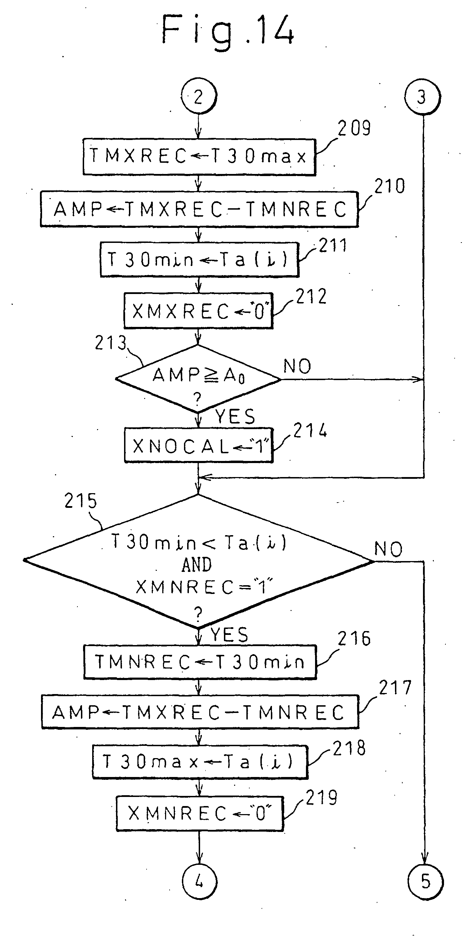

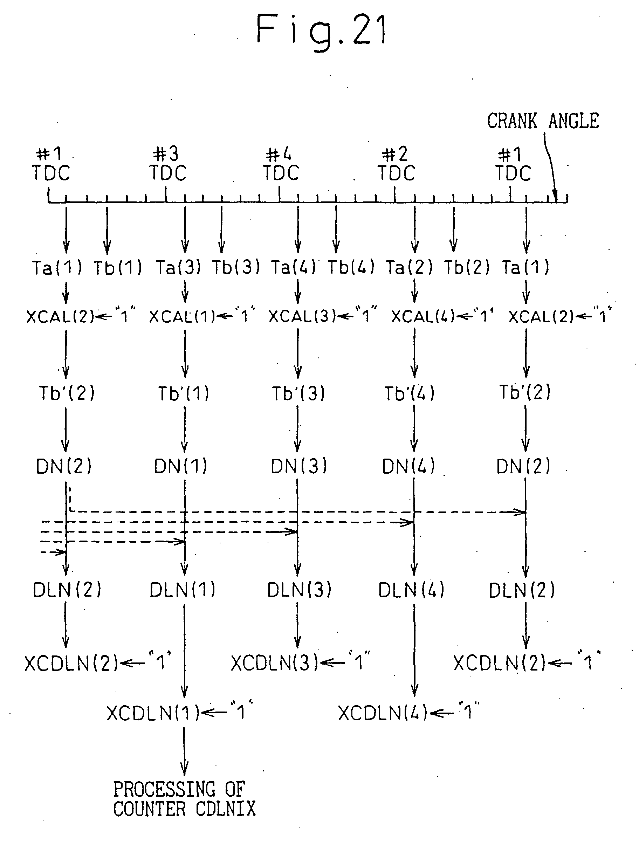

Next, the routines for finding the torque generated at each cylinder will be explained referring to Fig. 11 to Fig. 21. Note that, Fig. 21 shows the timing for calculation of the various values performed in each routine.

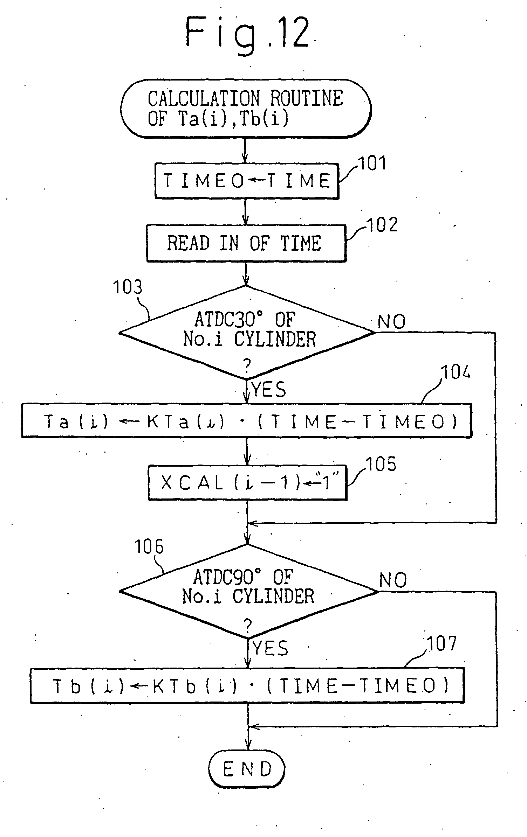

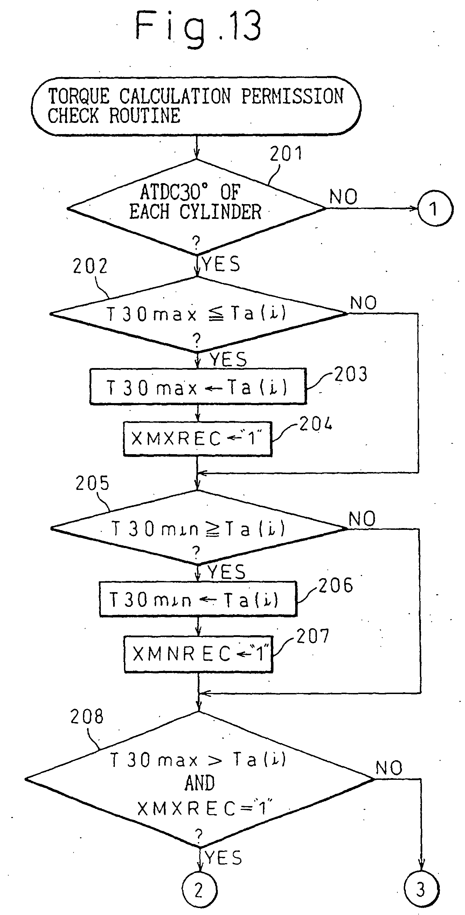

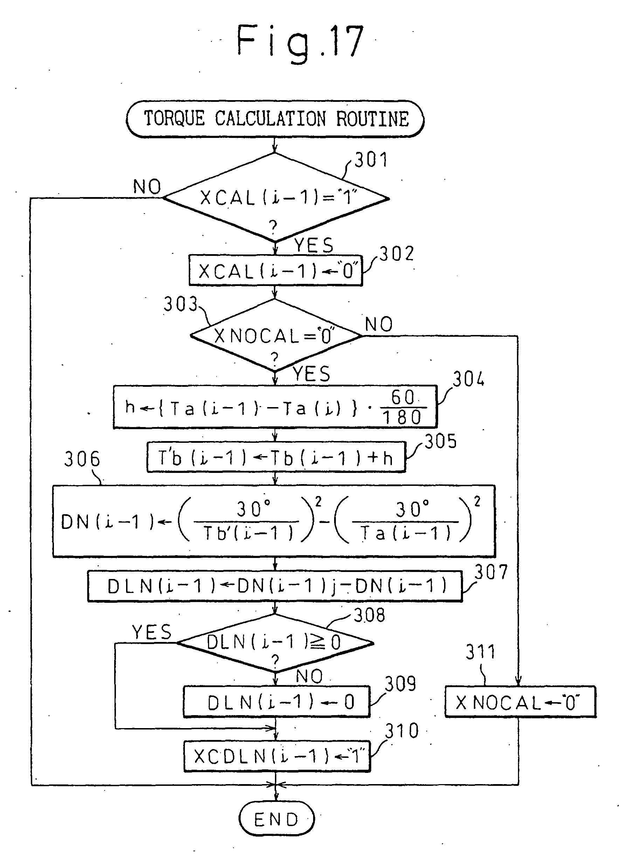

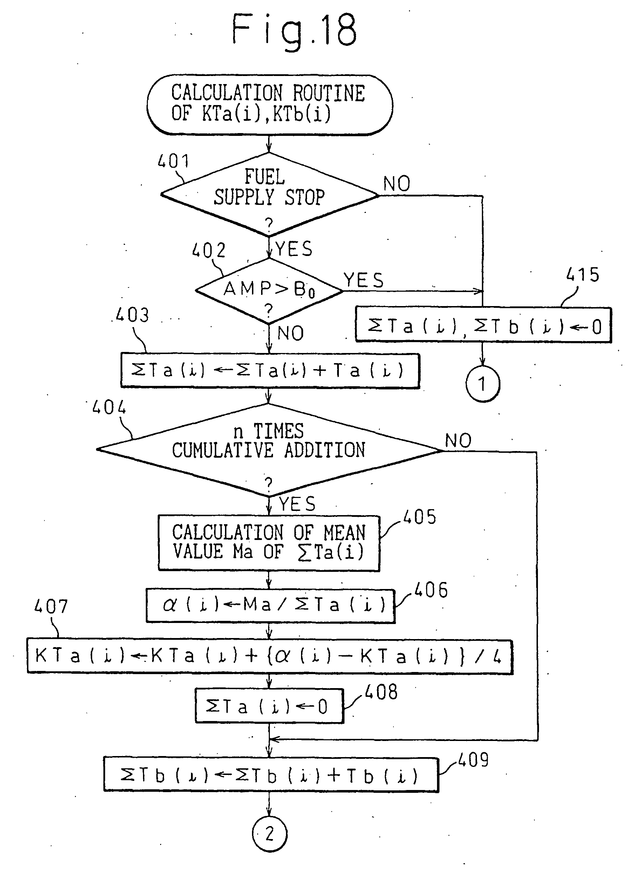

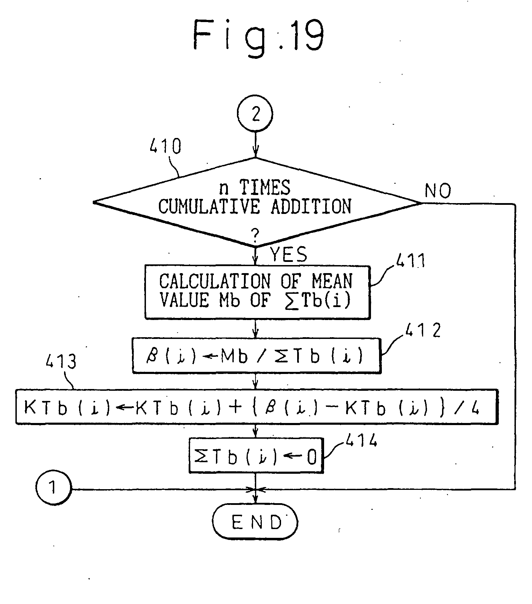

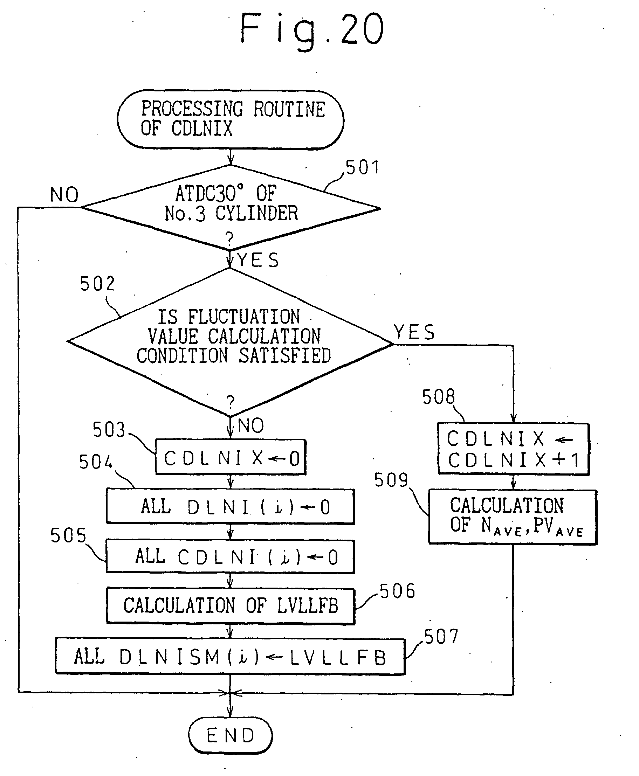

Fig. 11 shows an interruption routine performed at every 30° crank angle. Referring to Fig. 11, first the routine (step 100) for calculating the elapsed times Ta(i) and Tb(i) is proceeded to. This routine is shown in Fig. 12. Next, the routine (step 200) for checking if calculation of the torque is permitted or not is proceeded to. This routine is shown in Fig. 13 to Fig. 15. Next, the routine for calculating the torque (step 300) is proceeded to. This routine is shown in Fig. 17. Next, the routine for calculating the ratios KTa(i) and KTb(i) (step 400) is proceeded to. This routine is shown in Fig. 18 and Fig. 19. Next, the routine for processing of the counter CDLNIX used for calculation of the torque fluctuation value is proceeded to. This routine is shown in Fig. 20.

Referring to Fig. 12 showing the routine for calculation of the elapsed times Ta(i) and Tb(i), first, at step 101, the time is made the TIME0. The electronic control unit 20 is provided with a free run counter showing the time. The time is calculated from the count value of this free run counter. Next, at step 102, the current time is fetched. Therefore, the TIME0 of step 101 expresses the time of 30° crank angle before.

Next, at step 103, whether the No. 1 cylinder is currently at ATDC 30° or not is judged. When the No. 1 cylinder is not currently at ATDC 30°, step 106 is jumped to, where whether the No. 1 cylinder is currently at ATDC 90° or not is judged. When the No. 1 cylinder is not currently at ATDC 90°, the routine for calculation of the elapsed times Ta(i) and Tb(i) is ended.

As opposed to this, when it is judged at step 103 that the No. 1 cylinder is currently at ATDC 30°, step 104 is proceeded to, where the final elapsed time Ta(i) from TDC to ATDC 30° of the No. 1 cylinder is calculated based on the following equation:

$$Ta(i) = KTa(i) \cdot (TIME\text{-}TIME0)$$

That is, for example, when the No. 1 cylinder #1 is currently at ATDC 30°, the final elapsed time Ta(1) from TDC to ATDC 30° of the No. 1 cylinder #1 is calculated from $KTa(1) \cdot (TIME\text{-}TIME0)$. Here, (TIME-TIME0) expresses the elapsed time Ta(1) actually measured from the crank angle sensor 14 and KTa(1) is a ratio for correction of the error due to the spaces of the outer teeth of the rotor 13, therefore the final elapsed time Ta(1) obtained by multiplying (TIME-TIME0) with KTa(1) comes to accurately express the elapsed time when the crankshaft rotates by 30° crank angle.

Next, at step 105, the flag XCAL(i-1) of the No. (i-1) cylinder where combustion had been performed one time before showing that the generated torque should be calculated is set (XCAL(i-1) - "1"). In this embodiment according to the present invention, as explained above, since the ignition sequence is 1-3-4-2, when the No. 1 cylinder #1 is currently at ATDC 30°, the flag XCAL(2) of the No. 2 cylinder #2 where the combustion had been performed one time before showing that the generated torque should be calculated is set. In the same way, when the final elapsed time Ta(3) is calculated as shown in Fig. 21, the flag XCAL (1) is set, when the final elapsed time Ta(4) is calculated, the flag XCAL (3) is set, and when the final elapsed time Ta(2) is calculated, the flag XCAL (4) is set.

On the other hand, when it is judged at step 106 that the No. 1 cylinder is currently at ATDC 90°, step 107 is proceeded to, where the final elapsed time Tb(i) from ATDC 60° to ATDC 90° of the No. 1 cylinder is calculated based on the following equation:

$$Tb(i) = KTb(i) \cdot (TIME-TIME0)$$

That is, for example, when the No. 1 cylinder #1 is currently at ATDC 90°, the final elapsed time Tb(1) from ATDC 60° to ATDC 90° of the No. 1 cylinder #1 is calculated from $KTb(1) \cdot (TIME-TIME0)$. In this case as well, since the ratio KTb(1) for correcting the error due to the spaces of the outer teeth of the rotor 13 is multiplied with (TIME-TIME0), the final elapsed time Tb(1) accurately expressed the elapsed time in the period when the crankshaft rotates by 30° crank angle.

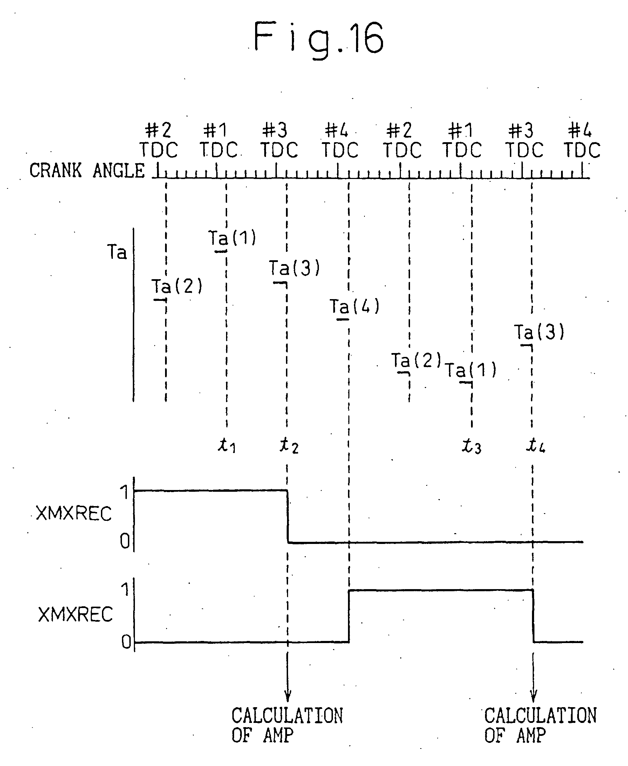

Next, the routine for checking permission for calculation of the torque shown in Fig. 13 to Fig. 15 will be explained referring to Fig. 16. This routine is set so as to prohibit the calculation of the torque for a specific cylinder when the amplitude AMP of the fluctuation of Ta(i) (Fig. 10) becomes large due to the vehicle traveling over a bumpy road.

That is, referring to Fig. 13 to Fig. 15, first, at step 201, whether one of the cylinders is currently at ATDC 30° or not is judged. When none of the cylinders is currently at ATDC 30°, the processing cycle is ended, while when one of the cylinders is at ATDC 30°, step 202 is proceeded to.

At step 202 to step 204, the maximum elapsed time T30max when the elapsed time Ta(i) increases and then decreases is calculated. That is, at step 202, whether the Ta(i) calculated at the routine shown in Fig. 12 is larger than the maximum elapsed time T30max or not is judged. When T30max > Ta(i), step 205 is jumped to, while when T30max $\leq$ Ta(i), step 203 is proceeded to, where Ta(i) is made T30max. Next, at step 204, the increase flag XMXREC showing that Ta(i) is increasing is set (XMXREC $\leftarrow$ "1"), then step 205 is proceeded to.

A step 205 to step 207, the minimum elapsed time T30min when the elapsed time Ta(i) decreases and then increases is calculated. That is, at step 205, whether the Ta(i) calculated by the routine shown in Fig. 12 is smaller than the calculated minimum elapsed time T30min or not is judged. When T30min < Ta(i), step 208 is jumped to, while when T30min $\geq$ Ta(i), step 206 is proceeded to, where Ta(i) is made T30min. Next, at step 207, the decrease flag XMNREC showing that Ta(i) has decreased is set (XMNREC - "1"), then step 208 is proceeded to.

At step 208 to step 214, when the amplitude AMP of the fluctuation of Ta(i) (Fig. 10) has exceeded the setting $A_0$, the prohibition flag prohibiting the calculation of the torque for the cylinder where Ta(i) becomes maximum is set. That is, at step 208, whether T30max > Ta(i) and XMXREC = "1" or not is judged. When

T30max $\leq$ Ta(i) or the increase flag XMXREC is reset (XMXREC = "0"), step 215 is jumped to, while when T30max > Ta(i) and XMXREC = "1", step 209 is proceeded to.

That is, as shown in Fig. 16, assume that at the time $t_1$, the elapsed time Ta(1) of the No. 1 cylinder #1 has become maximum. In this case, in the interruption routine performed at the time $t_1$ in Fig. 16, step 202 to step 203 is proceeded to, where the Ta(1) is made T30max, then, at step 204, the increase flag XMXREC is set. On the other hand, in the interruption routine performed at the time $t_2$ of Fig. 16, step 202 to step 205 is jumped to. At this time, since it is judged at step 208 that T30max > Ta(3) and XMXREC = "1", step 209 is proceeded to. That is, step 209 is proceeded to at the time $t_2$ when the elapsed time Ta(i) starts to decrease. At step 209, the maximum elapsed time T30max is made TMXREC. Next, at step 210, the maximum elapsed time TMXREC is subtracted by the minimum elapsed-time TMNREC (found at the later explained step 216) so as to calculate the amplitude AMP of the fluctuation of Ta(i). Next, at step 211, the initial value of the minimum elapsed time T30min is made Ta(i). Next, at step 212, the increase flag XMXREC is reset (XMXREC - "0"). Next, at step 213, whether the amplitude AMP is larger than the setting $A_0$ or not is judged. When AMP < $A_0$, step 215 is jumped to. As opposed to this, when AMP $\geq$ $A_0$, step 214 is proceeded to, where the torque calculation prohibition flag XNOCAL is set (XNOCAL - "1"). That is, in the interruption routine performed at the time $t_2$ of Fig. 16, as explained above, the generated torque of the No. 1 cylinder #1 is calculated. Therefore, in this interruption routine, when AMP $\geq$ $A_0$ and the torque calculation prohibition flag XNOCAL is set, the calculation of the generated torque of the No. 1 cylinder #1, that is, the calculation of the generated torque of the cylinder giving the maximum Ta(i), is prohibited.

At step 215 to step 221, when the amplitude AMP of the fluctuation of Ta(i) has exceeded the setting $A_0$, the prohibition flag prohibiting the calculation of the torque of the cylinder giving the minimum Ta(i) is set. That is, at step 215, whether T30min < Ta(i) and XMNREC = "1" or not is judged. when T30min $\geq$ Ta(i) or the decrease flag XMNREC is reset (XMNREC = "0"), step 222 is jumped to, while when T30min < Ta(i) and XMNREC = "1", step 216 is proceeded to.

That is, as shown in Fig. 16, at the time $t_3$, the elapsed time Ta(1) of the No. 1 cylinder #1 is considered to have become the minimum. In this case, at the interruption routine performed at the time $t_3$, step 205 to step 206 is proceeded to, where the Ta(1) is made T30min, then at step 207, the decrease flag XMNREC is set. On the other hand, the interruption routine performed at the time $t_4$ of Fig. 16 jumps from step 205 to step 208. At this time, since it is judged at step 215 that T30min < Ta(3) and XMNREC = "1", step 216 is proceeded to. That is, step 216 is proceeded to at the time $t_4$ where the elapsed time Ta(i) starts to be increased. At step 216, the minimum elapsed time T30min is made TMNREC. Next, at step 217, the minimum elapsed time TMNREC is subtracted from the maximum elapsed time TMXREC whereby the amplitude AMP of the fluctuation of Ta(i) is calculated. Next, at step 218, the initial value of the maximum elapsed time T30max is made Ta(i). Next, at step 219, the decrease flag XMNREC is reset (XMNREC ← "0"). Next, at step 220, whether the amplitude AMP is larger than the setting $A_0$ or not is judged. When AMP $< A_0$, step 222 is jumped to. As opposed to this, when AMP $\geq A_0$, step 221 is proceeded to, where the torque calculation prohibition flag XNOCAL is set (XNOCAL-"1") "1"). That is, in the interruption routine performed at the time $t_4$ of Fig. 16, the generated torque of the No. 1 cylinder #1 is calculated. Therefore, in this interruption routine, when AMP $\geq A_0$ and the torque calculation prohibition flag XNOCAL is set, the calculation of the generated torque of the No. 1 cylinder #1, that is, the calculation of the generated torque of the cylinder where Ta(i) becomes smallest, is prohibited.

At step 222 and step 223, the calculation of the torque of a cylinder where the elapsed time Ta(i) changes sharply is prohibited. That is, at step 222, whether |Ta(i-2)-Ta(i-1)| is larger than $K_0$·|Ta(i-1)-Ta(i)| or not is judged. Here, the constant $K_0$ is a value of about 3.0 to 4.0. When it is judged at step 222 that |Ta(i-2)-Ta(i-1)| < $K_0$·|Ta(i-1)-Ta(i)|, the processing routine is ended, while when it is judged that |Ta(i-2)-Ta(i-1)| $\geq K_0$·|Ta(i-1)-Ta(i)|, step 223 is proceeded to, where the torque calculation prohibition flag XNOCAL is set.

That is, when the interruption routine is at the time $t_3$ of Fig. 16, whether at this time |Ta(4)-Ta(2)| is $K_0$·|Ta(2)-Ta(1)| or not is judged. As shown in Fig. 16, when Ta(2) changes rapidly from Ta(4), |Ta(4)-Ta(2)| becomes larger than $K_0$·|Ta(2)-Ta(1)|. At this time, the torque calculation prohibition flag is set and the calculation of the torque of the No. 2 cylinder #2 where the elapsed time Ta(i) has changed sharply is prohibited.

Next, the torque calculation routine shown in Fig. 17 will be explained. Referring to Fig. 17, first, at step 301, whether the flag XCAL(i-1) showing that the generated torque of the No. (i-1) cylinder where combustion had been performed one time before should be calculated is set or not is judged. When the flag XCAL (i-1) = "0", that is when the flag XCAL(i-1) is not set, the processing cycle is ended. As opposed to this, when the flag XCAL(i-1) = "1", that is, the flag XCAL(i-1) is set, step 302 is proceeded to, where the 'flag XCAL(i-1) is reset, then step 303 is proceeded to.

At step 303, whether the prohibition flag XNOCAL prohibiting the calculation of the torque for the cylinder at which the combustion was performed one time before is reset (XNOCAL = "0") or not is judged. When this prohibition flag is set (XNOCAL = "1"), step 310 is proceeded to, where the prohibition flag XNOCAL is reset. As opposed to this, when prohibition flag is reset, step 304 is proceeded to. That is, only when the flag XCAL is set and prohibition flag XNOCAL is reset is step 304 proceeded to.

At step 304, the amount of change h of the elapsed time due to the torsional vibration of the engine drive system (Fig. 8) is calculated based on the following equation:

$$h = \{Ta(i-1)-Ta(i)\}•60/180$$

That is, as will be understood from Fig. 8, the amount of change h of the elapsed time becomes one-third of $h_0$ (= Ta(i-1)-Ta(i)). Next, at step 305, Tb'(i-1) expressing only the elapsed time decreased due to the combustion pressure is calculated based on the following equation:

$$Tb'(i-1) = Tb(i-1)+h$$

That is, when finding Tb'(1) for the No. 1 cylinder #1, h = {Ta(1)-Ta(3)}·60/180 and Tb'(1) = Tb(1)+h. Further, when finding Tb'(3) for the No. 3 cylinder #3, h = {Ta(3)-Ta(4)}·60/180 and Tb'(3) = Tb(3)+h.

Next, at step 306, the generated torque DN(i-1) of the cylinder at which the combustion was performed one time before is calculated based on the following equation:

$$DN(i-1) = \omega b^2-\omega a^2 = (30°/Tb'(i-1))^2-(30°/Ta(i-1))^2$$

This generated torque DN(i-1) expresses the torque after elimination of the effect due to the torsional vibration of the engine drive system and the effect due to the variation in spaces of the outer teeth of the rotor 13, therefore this generated torque DN(i-1) expresses the true torque generated due to the combustion pressure.

Note that, when finding the drive force GN(i-1) generated by each cylinder, this drive force GN(i-1) may be calculated based on the following equation:

$$GN(i-1) = (30°/Tb'(i-1))-(30°/Ta(i-1))$$

When the generated torque DN(i-1) is calculated at step 306, step 307 is proceeded to, where the amount of fluctuation of the torque DLN(i-1) in a single cycle of the same cylinder is calculated based on the following equation:

$$DLN(i-1) = DN(i-1)j-DN(i-1)$$

Here, DN(i-1) j expresses the generated torque of the same cylinder one cycle (720° crank angle) before for DN(i-1).

Next, at step 308, whether the amount of fluctuation of the torque DLN(i-1) is positive or not is judged. When DLN(i-1) ≥ 0, step 310 is jumped to, where the cumulative addition request flag XCDLN(i-1) showing that the amount of fluctuation of the torque DLN(i-1) of the cylinder at which the combustion was performed one time before should be cumulatively added is set (XCDLN(i-1) - "1"). As opposed to this, When DLN(i-1) < 0, step 309 is proceeded to, where DLN(i-1) is made zero. Next, at step 310 is proceeded to. Note that, the torque of each cylinder repeatedly rises and falls, so in this case to find the amount of fluctuation of the torque, it is sufficient to cumulatively add either the amount of increase of the torque or the amount of decrease of the torque. In the routine shown in Fig. 17, just the amount of decrease of the torque is cumulatively added, therefore, as explained above, when DLN(i-1) < 0, DLN(i-1) is made zero.

Next, the routine for calculating the ratios KTa(i) and KTb(i) will be explained referring to Fig. 18 and Fig. 19.

Referring to Fig. 18 and Fig. 19, first, at step 401, whether the supply of fuel has been stopped during the deceleration operation or not, that is, whether the fuel has been cut or not. is judged. When the fuel has not been cut, step 415 is proceeded to, where the cumulative values $\Sigma Ta(i)$ and $\Sigma Tb(i)$ of the elapsed times Ta(i) and Tb(i) are cleared, then the processing cycle is completed. As opposed to this, when the fuel has been cut, step 402 is proceeded to, where whether the amplitude AMP calculated in the routine for checking permission for calculation of the torque is larger than the setting $B_0$ or not is judged. When AMP > $B_0$, step 415 is proceeded to, while when AMP ≤ $B_0$, step 403 is proceeded to.

At step 403 to step 408, KTa(i) is calculated. That is, at step 403, the corresponding elapsed time Ta(i) for each cylinder is added to the cumulative value $\Sigma Ta(i)$. For example, Ta(1) is added to $\Sigma Ta(1)$ and Ta(2) is added to $\Sigma Ta(2)$. Next, at step 404, whether the Ta(i) for each cylinder has been cumulatively added n number of times each or not is judged. When not cumulatively added n number of times each, step 409 is jumped to, while when cumulatively added n number of times, step 405 is proceeded to. At step 405, the mean value Ma (= $\{\Sigma Ta(1)+\Sigma Ta(2)+\Sigma Ta(3)+\Sigma Ta(4)\}/4$) of the cumulative values $\Sigma Ta(i)$ of the cylinders is calculated. Next, at step 406, the correction value $\alpha(i)$ (= Ma/$\Sigma Ta(i)$) for the cylinders is calculated. Next, at step 407, the ratio KTa(i) is updated based on the following equation:

$$KTa(i) - KTa(i)+\{\alpha(i)-KTa(i)\}/4$$

In this way, the ratios KTa(1), KTa(2), KTa(3), and KTa(4) for the cylinders are calculated. For example, if $\alpha(1)$ has become larger than the KTa(1) used up to then, one-quarter of the difference between $\alpha(1)$ and KTa(1) $\{\alpha(1)-KTa(1)\}$ is added to KTa(1), therefore KTa

(1) gradually approaches $\alpha(1)$. At step 407, the KTa(i) for each cylinder is calculated, then step 408 is proceeded to, where the cumulative value $\Sigma Ta(i)$ for each cylinder is cleared.

On the other hand, at step 409 to step 414, KTb(i) is calculated. That is, at step 409, the corresponding elapsed time Tb(i) for each cylinder is added to the cumulative value $\Sigma Tb(i)$. For example, Tb(1) is added to $\Sigma Tb(1)$ and Tb(2) is added to $\Sigma Tb(2)$. Next, at step 410, whether the Tb(i) for each cylinder has each been cumulatively added n number of times or not is judged. When not cumulatively added n number of times each, the processing cycle is ended, while when cumulatively added n number of times, step 411 is proceeded to. At step 411, the mean value Mb (= $\{\Sigma Tb(1)+\Sigma Tb(2)+\Sigma Tb(3)+\Sigma Tb(4)\}/4$) of the cumulative values $\Sigma Tb(i)$ of the cylinders is calculated. Next, at step 412, the correction value $\beta(i)$ (= Mb/$\Sigma Tb(i)$) for each cylinder is'calculated. Next, at step 413, the ratio KTb(i) is updated based on the following equation:

$$KTb(i) - KTb(i)+\{\beta(i)-KTb(i)\}/4$$

In this way, the ratios KTb(1), KTb(2), KTb(3), and KTb(4) for the cylinders are calculated. For example, assuming that $\beta(1)$ has become larger than the KTb(1) used up to then, one-quarter of the difference between $\beta(1)$ and KTb(1) $\{\beta(1)-KTb(1)\}$ is added to KTb(1), therefore KTb(1) gradually approaches $\beta(1)$. When the KTb(i) for each cylinder is calculated at step 413, step 414 is proceeded to, where the cumulative value $\Sigma Tb(i)$ for each cylinder is cleared.

Next, the processing of the counter CDLNIX will be explained referring to Fig. 20. The count value of the counter CDLNIX is used for the later explained calculation of the torque fluctuation value.

Referring to Fig. 20, first, whether the No. 3 cylinder #3 is currently at ATDC 30° or not is judged. When the No. 3 cylinder #3 is currently not at ATDC 30°, the processing cycle is ended, while when the No. 3 cylinder #3 is currently at ATDC 30°, step 502 is proceeded to. At step 502, whether the conditions for calculating the torque fluctuation value stand or not is judged. For example, when the conditions for making the air-fuel ratio lean do not stand or the amount of change per unit time $\Delta PM$ of the absolute pressure of the surge tank 3 is more than the setting or the amount of change per unit time $\Delta N$ of the engine speed is more than a setting, it is judged that the conditions for calculating the fluctuation value do not stand, while at other times it is judged that the conditions for calculating the fluctuation value stand.

When it is judged at step 502 that the conditions for calculating the fluctuation value stand, step 508 is proceeded to, where the count value CDLNIX is incremented by exactly 1. The increment action of this count value CDLNIX is performed every time the No. 3 cylinder #3 reaches ATDC 30°, that is, every 720° crank angle. Next, at step 509, the average value of the engine speed $N_{AVE}$ and the average value $PM_{AVE}$ of the absolute pressure in' the surge tank 3 in the period from when the increment action of the count value CDLNIX is started to when the count value CDLNIX is cleared are calculated.

On the other hand, when it is judged at step 502 that the conditions for calculating the fluctuation value do not stand, step 503 is proceeded to, where the count value CDLNIX is cleared. Next, at step 504, the cumulative value DLNI (i) of the torque fluctuation value DLN(i) for each cylinder (this cumulative value is calculated by the later explained routine) is cleared. Next, at step 505, the cumulative count value CDLNI (i) for each cylinder (this cumulative count value is calculated by the later explained routine) is cleared.

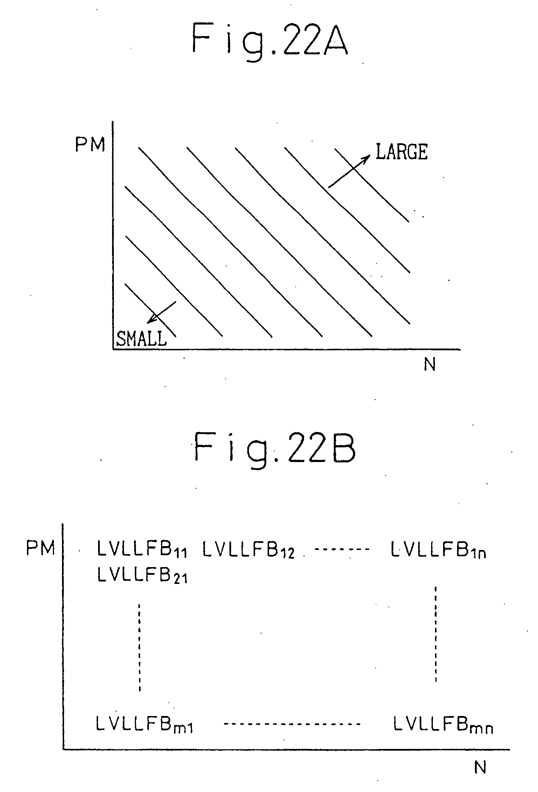

Next, at step 506, the target torque fluctuation value LVLLFB is calculated. In this embodiment according to the present invention, as explained later, the air-fuel ratio is feedback controlled so that the calculated torque fluctuation value becomes this target torque fluctuation value LVLLFB. This target torque fluctuation value LVLLFB, as shown by Fig. 22 showing the equivalent fluctuation value by the solid line, becomes larger the higher the absolute pressure PM in the surge tank 3 and becomes larger the higher the engine speed N. This target torque fluctuation value LVLLFB is stored in the ROM 22 in advance in the form of a map shown in Fig. 22B as a function of the absolute pressure PM in the surge tank 3 and the engine speed N. Next, at step 507, the mean torque fluctuation value DLNISM(i) of each cylinder (this mean torque fluctuation value is calculated by'the later explained routine) is made the target torque fluctuation value LVLLFB calculated from the map of Fig. 22B.

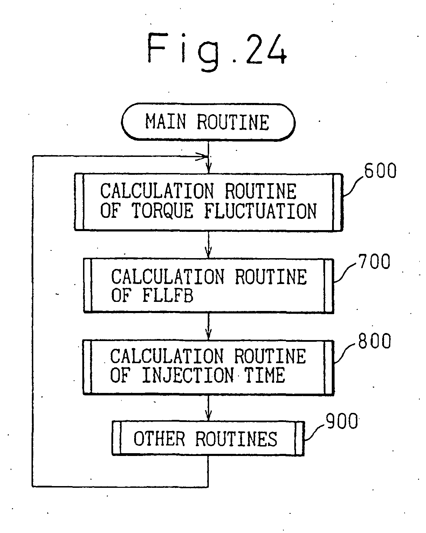

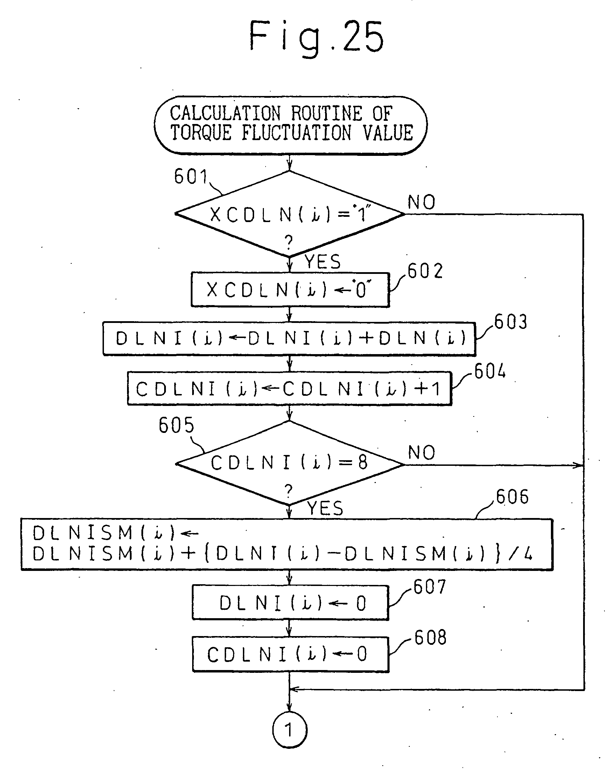

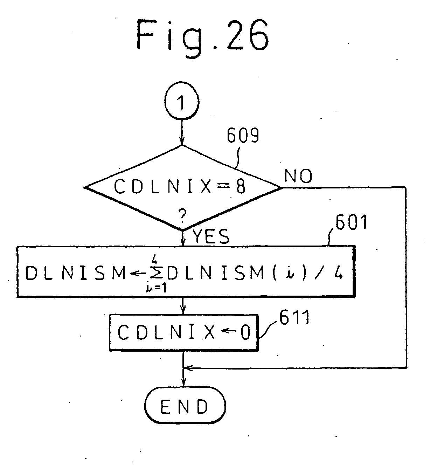

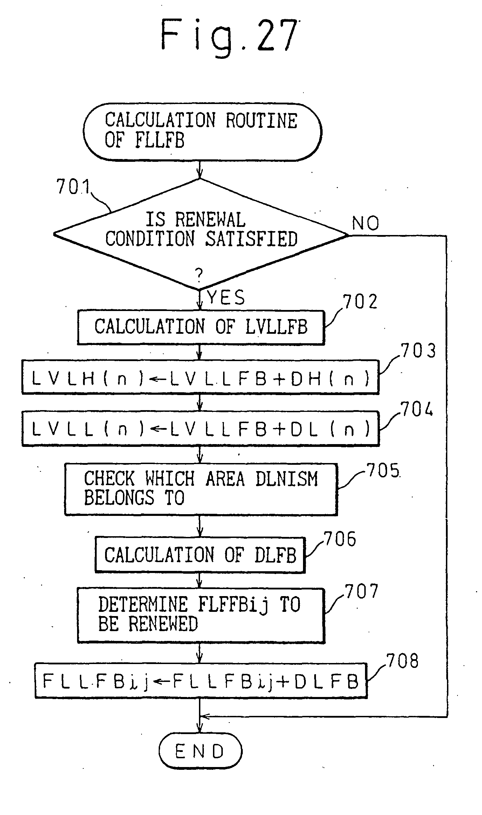

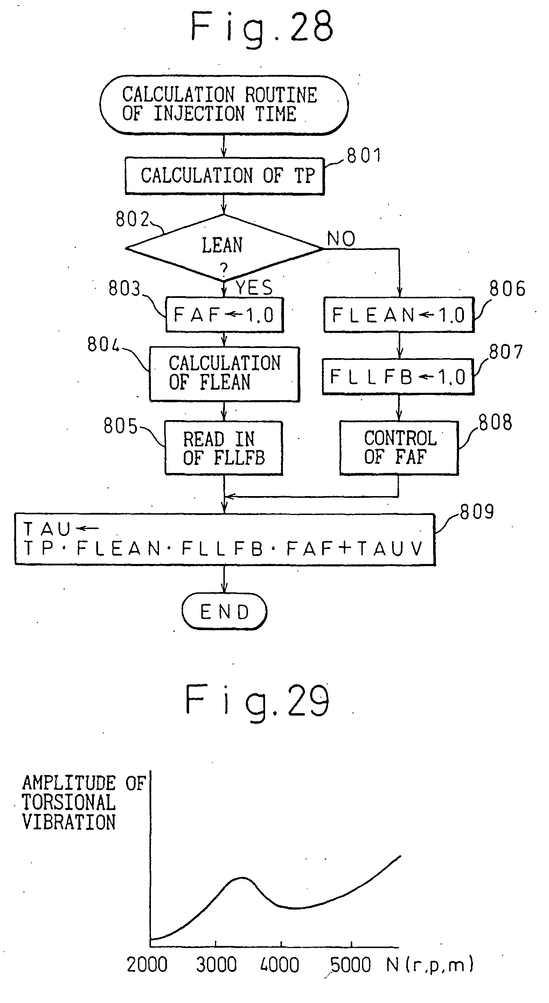

Fig. 24 shows the repeatedly executed main routine. In this main routine, first the routine for calculation of the torque fluctuation value (step 600) is executed. This routine is shown in Fig. 25 and Fig. 26. Next, the routine for calculation of the lean limit feedback correction coefficient FLLFB (step 700) is executed. This routine is shown in Fig. 27. Next, when the predetermined crank angle is reached, the routine for calculation of the injection time (step 800) is executed. This routine is shown in Fig. 28. Next, the other routines (step 900) are executed.

Next, the routine for calculation of the torque fluctuation value shown in Fig. 25 and Fig. 26 will be explained.

Referring to Fig. 25 and Fig. 26, first, at step 601, whether the cumulative addition request flag XCDLN(i) showing that the amount of fluctuation of the torque DLN(i) should be cumulatively added is set (XCDLN(i) = "1") or not is judged. When the cumulative addition request flag XCDLN(i) is not set, step 609 is jumped to, while when the cumulative addition request flag XCDLN(i) is set, step 602 is proceeded to. At step 602, the cumulative addition request flag XCDLN(i) is reset. Next, at step 603, the amount of fluctuation of the torque DLN(i) is added to the cumulative value DLNI(i) of the amount of fluctuation of the torque. Next, at step 604, the cumulative count value CDLNI(i) is incremented by exactly 1. That is, for example, at step 601, if the cumulative addition request flag XCDLN(1) is set for the No. 1 cylinder, this.flag XCDLN(1) is reset at step 602, the amount of fluctuation of the torque cumulative value DLNI(1) is calculated at step 603, and the cumulative count value CDLNI(1) is incremented by exactly 1 at step 604.

Next, at step 605, whether the cumulative count value CDLNI(i) has become "8" or not is judged. When CDLNI(i) is not "8", step 609 is jumped to, while when CDLNI(i) becomes "8", step 606 is proceeded to, where the cumulative value DLNI(i) of the amount of fluctuation of the torque is cleared. Next, at step 607, the cumulative count value CDLNI(i) is reset. Next, at step 608, the mean torque fluctuation value DLNISM(i) is calculated from the following equation:

$$DLNISM(i) = DLNISM(i)+\{DLNI(i)-DLNISM(i)\}/4$$

That is, when there is a difference between the calculated amount of fluctuation of the torque cumulative value DLNI(i) and the previously used mean amount of fluctuation of the torque DLNISM(i), the value of the difference {DLNI(i)-DLNISM(i)} multiplied by 1/4 is added to the mean amount of fluctuation of the torque DLNISM(i). Therefore, for example, when the cumulative count value CDLNI(1) for the No. 1 cylinder #1 becomes "8", at step 606, the mean torque fluctuation value DLNISM(1) is calculated.

Next, at step 609, whether the count value CDLNIX calculated at the routine shown in Fig. 20 has become "8" or not is judged. When CDLNIX is not "8", the processing cycle is ended, while when CDLNIX becomes "8", step 610 is proceeded to, where the mean value DLNISM (= {DLNISM (1)+DLNISM (2)+DLNISM (3)+DLNISM (4)}/4) of the mean torque fluctuation values DLNISM (i) of the cylinders is calculated. Next, at step 611, the count value CDLNIX is cleared. In this way, the value DLNISM expressing the amount of fluctuation of the torque of the engine is calculated.

Note that, as explained above, the count value CDLNIX is incremented by exactly 1 with each 720° crank angle. Unless the calculation of the torque is prohibited for one of the cylinders, when the count value CDLNIX has become "8", the cumulative count values CDLNI(1), CDLNI(2), CDLNI(3), and CDLNI(4) for all of the cylinders have already become "8". Therefore, in this case, the mean torque fluctuation value DLNISM(i) for all of the cylinders is calculated. On the other hand, for example, if the calculation of the torque for the No. 1 cylinder #1 is prohibited, when the count value CDLNIX has become "8", just the cumulative count value CDLNI(1) of the No. 1 cylinder #1 does not become "8", so the new amount of fluctuation of the torque cumulative value DLNI(1) for the No. 1 cylinder #1 is not calculated. Therefore, in this case, when finding the mean value DLNISM at step 610, the previously calculated amount of fluctuation of the torque cumulative value DLNISM(1) is used just for the No. 1 cylinder #1.

Next, the routine for calculation of FLLFB will be explained referring to Fig. 27.

Referring to Fig. 27, first, at step 701, whether the conditions for updating the lean limit feedback correction coefficient FLLFB stand or not is judged. For example, at the time of engine warmup or when the operating state of the engine is not in the learning region enclosed by the broken lines in Fig. 5, it is judged that the conditions for updating do not stand, while at other times it is judged that the conditions for updating stand. When the conditions for updating do not stand, the processing cycle is ended, while when the conditions for updating stand, step 702 is proceeded to.

At step 702, the target torque fluctuation value LVLLFB is calculated from the absolute pressure PM in the surge tank 3 and the engine speed N based on the map shown in Fig. 22B. Next, at step 703 and step 704, the levels of torque fluctuation LVLH(n) and LVLL(n) shown in the following equations are calculated based on the fluctuation amount judgement values DH(n) and DL(n) in accordance with the target torque fluctuation value LVLLFB:

$$LVLH(n) = LVLLFB+DH(n)$$

$$LVLL(n) = LVLLFB+DL(n)$$

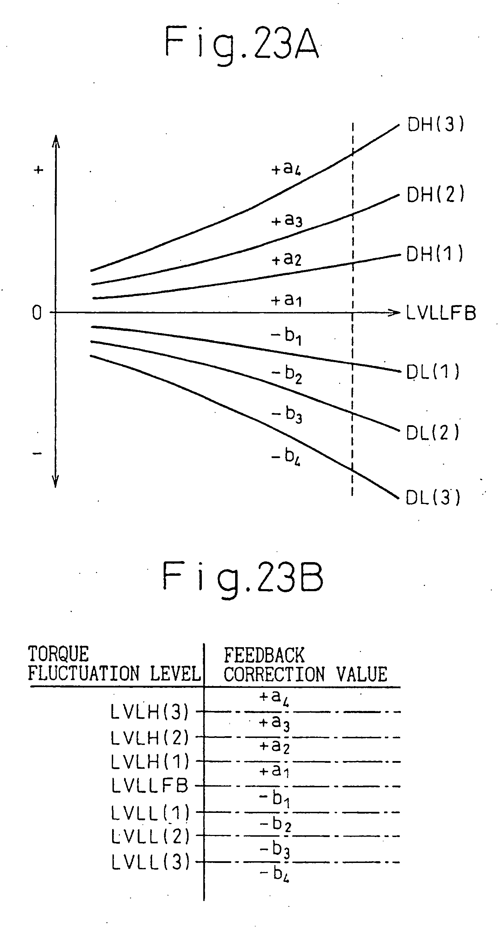

Here, the fluctuation amount judgement values DH(n) and DL(n) are determined in advance as shown in Fig. 23A. That is, as will be understood from Fig. 23A, three positive values are set for DH(n) which are in the relationship of DH(3) > DH(2) > DH(1). Further, these DH(1), DH(2), and DH(3) gradually increase as the target torque fluctuation value LVLLFB becomes larger. On the other hand, three negative values are set for DL(n) which are in the relationship of DL(1) > DL(2) > DL(3). Further, the absolute values of these DL(1), DL(2), and DL(3) gradually increase as the target torque fluctuation value LVLLFB becomes larger.

Assume however that the target torque fluctuation value LVLLFB calculated at step 702 is the value shown by the broken line. In this case, at step 703, the values of DH(1), DH(2), and DH(3) on the broken line plus the target torque fluctuation value LVLLFB are made the levels of torque fluctuation LVLH(1), LVLH(2), and LVLH(3) and, at step 704, the values of DL(1), DL(2), and DL(3) on the broken line plus the target torque fluctuation value LVLLFB are made the levels of torque fluctuation LVLL(1), LVLL(2), and LVLL(3).

On the other hand, the feedback correction values $+a_1$, $+a_2$, $+a_3$, $+a_4$, $-b_1$, $-b_2$, $-b_3$, and $-b_4$ are determined in advance for the regions between the levels of torque fluctuation LVLH(n) and LVLL(n) as shown in Fig. 23B. For example, the feedback correction value becomes $+a_2$ for the region where the level of torque fluctuation is between LVLH(1) and LVLH(2). These feedback correction values are $+a_4 > +a_3 > +a_2 > +a_1$ and $-b_1 > -b_2 > -b_3 > -b_4$. The feedback correction values $+a_1$, $+a_2$, $+a_3$, $+a_4$, $-b_1$, $-b_2$, $-b_3$, and $-b_4$ shown in Fig. 23B are shown in the corresponding regions of Fig. 23A.

When the levels of torque fluctuation LVLH(n) and LVLL(n) are calculated at step 703 and step 704, step 705 is proceeded to, where whether the mean value DLNISM of the torque fluctuation value calculated in the routine for calculation of the torque fluctuation value shown in Fig. 25 and Fig. 26 is between the levels of torque fluctuation LVLH(n) and LVLL(n) shown in Fig. 23B or not is judged. Next, at step 706, the corresponding feedback correction value DLFB is calculated. For example, when the target fluctuation level LVLLFB is the value shown by the broken line in Fig. 23A and the calculated mean value DLNISM of the torque fluctuation value is between LVLH(1) and LVLH(2) of Fig. 23B, that is the deviation of the mean value DLNISM of the torque fluctuation value from the target fluctuation level LVLLFB is between DH(1) and DH(2) on the broken line in Fig. 23A, the feedback correction value DLFB is made $+a_2$.

Next, at step 707, what lean limit feedback correction coefficient of which learning region shown in Fig. 5 the lean limit feedback correction coefficient FLLBFij to be updated based on the average value of the engine speed $N_{AVE}$ and the average value $PM_{AVE}$ of the absolute pressure in the surge tank 3 found at step 509 of the processing routine of CDLNIX shown in Fig. 20 is determined. Next, at step 708, the lean limit feedback correction coefficient FLLFBij determined at step 707 is increased by the feedback correction value DLFB.

That is, as explained above, when for example, DLNISM > LVLLFB and LVLH(1) < DLNISM < LVLH(2), the lean limit feedback correction coefficient FLLFBij is increased by $+a_2$. As a result, the air-fuel ratio becomes smaller, so the amount of fluctuation of the torque of each cylinder is reduced. On the other hand, when DLNISM < LVLLFB and LVLL(1) > DLNISM > LVLL(2), the lean limit feedback correction coefficient FLLFBij is increased by $-b_2$. As a result; the air-fuel ratio becomes large, so the amount of fluctuation of the torque of the cylinders is increased. In this way the air-fuel ratio at the time of lean operation is controlled so that the mean value DLNISM of the amount of fluctuation of the torque of all of the cylinders becomes the target torque fluctuation value LVLLFB.

Note that, when the conditions for calculation of the torque fluctuation value in the routine shown in Fig. 20 do not stand, at step 507, the DLNISM(i) for all of the cylinders is made LVLLFB and therefore the mean value DLNISM of the torque fluctuation value is also made the target torque fluctuation value LVLLFB. Therefore, at this time, the lean limit feedback correction coefficient FLLFBij is not updated.

Next, the routine for calculation of the fuel injection time will be explained with reference to Fig. 28.

Referring to Fig. 28, first, at step 801, the basic fuel injection time TP is calculated from the map shown in Fig. 2. Next, at step 802, whether the operating state is one in which a lean operation should be performed or not is judged .When the operating state is one in which a lean operation should be performed, step 803 is proceeded to, where the value of the stoichiometric air-fuel ratio feedback correction coefficient FAF is fixed at 1.0. Next, at step 804, the lean correction coefficient FLEAN is calculated from the map shown in Fig. 4, then the lean limit feedback correction coefficient FLLFB is read from the map shown in Fig. 5. Next, at step 809, the fuel injection time TAU is calculated from the following equation:

$$TAU = TP \cdot FLEAN \cdot FLLFB \cdot FAF + TAUV$$

As opposed to this, when it is judged at step 806 that the operating state is not one where a lean operation should be performed, that is, when the air-fuel ratio should be made the stoichiometric air-fuel ratio, step 806 is proceeded to, where the lean correction coefficient FLEAN is fixed at 1.0, then, at step 807, the lean limit feedback correction coefficient FLLFB is fixed at 1.0. Next, at step 808, the stoichiometric air-fuel ratio feedback correction coefficient FAF is controlled based on the output signal of the air-fuel ratio sensor 17 so that the air-fuel ratio becomes the stoichiometric air-fuel ratio. Next, step 809 is proceeded to, where the fuel injection time TAU is calculated.

By using the method explained above, the drive force generated at each cylinder or the torque generated at each cylinder can be accurately detected. Further, when the amount of fluctuation of the drive force or torque is detected from the detected drive force or torque, the amount of fluctuation of these drive force or torque can be accurately detected. However, a crankshaft experiences natural torsional vibration due to the explosive force successively generated in the cylinders. Therefore, to accurately detect the drive force generated at each cylinder and the torque generated at each cylinder, it is necessary to consider the natural torsional vibration of the crankshaft as well.

Next, an explanation will be made of a second embodiment which enables more accurate detection of the drive force generated at each cylinder or torque generated at each cylinder by considering the natural torsional vibration of the crankshaft

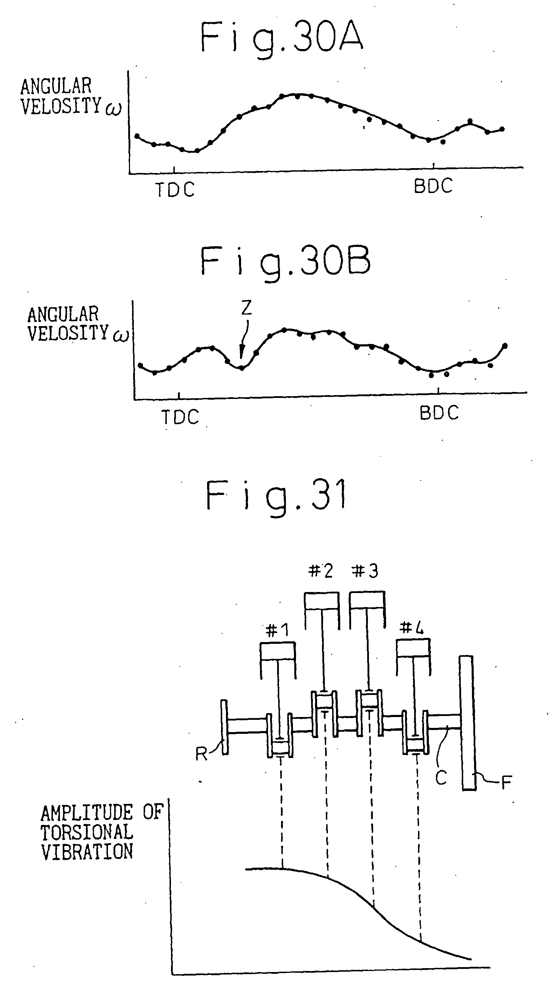

That is, when an engine is operated, the crankshaft experiences its natural torsional vibration. The amplitude of the torsional vibration becomes larger the higher the engine speed. This torsional vibration of the crankshaft occurs in the form of various orders of torsional vibration superposed on each other. Among these, in particular the rotational sixth order of torsional vibration (torsional vibration using 60° crank angle as cycle) has a large effect on the detection of the first angular velocity $\omega a$. Fig. 29 shows the relationship between the amplitude of this rotational sixth order of torsional vibration and the engine speed N. As shown in Fig. 29, when the engine speed N is low, the amplitude of the rotational sixth order of torsional vibration is small, therefore, at this time, as shown in Fig. 30A, the angular velocity $\omega$ rises relatively smoothly due to the combustion pressure when the top dead center TDC of the compression stroke is exceeded. As opposed to this, when the engine speed N becomes high, as shown in Fig. 29, the amplitude of the rotational sixth order of torsional vibration becomes larger. As a result, as shown by the arrow mark Z in Fig. 30B, the angular velocity $\omega$ falls sharply for a time due to the effect of the rotational sixth order of torsional vibration when the top dead center TDC of the compression stroke is exceeded.

Note, however, that if the angular velocity $\omega$ falls in this way due to the rotational sixth order of torsional vibration, the latter half of the crank angle range for detecting the first angular velocity $\omega a$ will end up overlapping'the first half of the region of reduction of the angular velocity $\omega$ due to the rotational sixth order of torsional vibration. As a result, due to the effect of this rotational sixth order of torsional vibration, the first angular velocity $\omega a$ can no longer be accurately detected. If the first angular velocity $\omega a$ can no longer be accurately detected, the drive force and the torque of each cylinder calculated based on the first angular velocity $\omega a$ and second angular velocity $\omega b$ will no longer show the true values.

In this way, when the engine speed N becomes high, the amplitude of the torsional vibration of the crankshaft becomes larger and it no longer becomes possible to accurately detect the first angular velocity $\omega a$. At this time, however, the amplitude of the torsional vibration generated at the crankshaft, as explained earlier, differs depending on the crankshaft position. That is, if in Fig. 31, C is a crankshaft, F is a flywheel, R is a rotational body with a smaller moment of inertia of rotation than the flywheel, for example, a rotor, the amplitude of the torsional vibration generated at the crankshaft C will differ according to the position of the crankshaft as shown in Fig. 31. The amplitude of the torsional vibration of the crankshaft C at the. crankshaft position of the No. 4 cylinder #4 closest to the flywheel F with a large moment of inertia of rotation becomes smallest, while the amplitude of the torsional vibration of the crankshaft C at the crankshaft position of the No. 1 cylinder #1 furthest away from the flywheel F becomes largest. Further, the amplitudes of torsional vibration generated at the different positions of the crankshaft C become larger the higher the engine speed.

Therefore, as shown in Fig. 29, if the engine speed N becomes higher, the crankshaft C experiences torsional vibration, but at this time, the amplitude of the torsional vibration generated at the crankshaft position of the No. 4 cylinder #4 is relatively small even if the engine speed is high, therefore it becomes possible to detect the generated torque for the No. 4 cylinder #4 regardless of the engine speed relatively accurately. However, for example, the amplitude of the torsional vibration occurring at the crankshaft position of the No. 1 cylinder #1 becomes considerably large the higher the engine speed N, therefore for the No. 1 cylinder #1, the drive force and the torque generated at the No. 1 cylinder #1 can no longer be accurately detected.

Therefore, in the second embodiment, the calculation of the drive force and the torque is prohibited in the order of the cylinders of the crankshaft positions where the amplitude of the torsional vibration becomes larger as the engine speed N becomes higher. Explaining this in more detail, in the second embodiment, when the engine speed N is low, the drive force and the torque generated at the cylinders are calculated for all of the cylinders #1, #2, #3, and #4. That is, when the engine speed N is low, the amplitude of the torsional vibration of the crankshaft is small, therefore at this time, the torsional vibration of the crankshaft C has almost no effect on the first angular velocity $\omega a$, so the drive force and the torque are calculated for all of the cylinders #1, #2, #3, and #4.

On the other hand, if the engine speed N becomes high, the amplitude of the torsional vibration at the position of the crankshaft at the side away from the flywheel F becomes larger. Therefore, at this time, calculation of the drive force and the torque for the No. 1 cylinder #1 and the No. 2 cylinder #2 is prohibited. That is, at this time, the drive force and the torque are calculated only for the No. 3 cylinder #3 and the No. 4 cylinder #4. When the engine speed N becomes further higher, the amplitude of the torsional vibration at the crankshaft position near the flywheel F becomes larger. Therefore, at this time, calculation of the drive force and the torque for the No. 1 cylinder #1, No. 2 cylinder #2, and No. 3 cylinder #3 is prohibited. That is, at this time, the drive force and the torque for only the No. 4 cylinder #4 is calculated.

If the calculation of the drive force and the torque for cylinders at crankshaft positions where the amplitude of the torsional vibration is large is prohibited in this way, the risk of calculating a mistaken drive force and the torque is eliminated.

In the second embodiment, however, the fuel injection time TAU is calculated based on the following. equation:

$$TAU = TP \cdot FLEAN \cdot FLLFB \cdot KGTP(i) \cdot FAF + TAUV$$

Here, as explained above, TP shows the basic fuel injection time, FLEAN shows the lean correction coefficient, FLLFB shows the lean limit feedback correction coefficient, FAF shows the stoichiometric air-fuel ratio feedback correction coefficient, and TAUV shows the invalid injection time. Note that in the above equation, KGTP(i) shows the intercylinder correction coefficient. The intercylinder correction coefficient KGTP(i) is the correction coefficient for correcting the amount of fuel injection for each cylinder so that the times required for the expansion stroke of the cylinders #1, #2, #3, and #4 become equal.

In the second embodiment, when the air-fuel ratio should be maintained at the stoichiometric air-fuel ratio, the lean correction coefficient FLEAN, lean limit feedback correction coefficient FLLFB, and intercylinder correction coefficient KGTP(i) are fixed at 1.0 and the stoichiometric air-fuel ratio feedback correction coefficient FAF is controlled based the output signal of the air-fuel ratio sensor 17. On the other hand, when the air-fuel ratio should be maintained at the target lean air-fuel ratio, the stoichiometric air-fuel ratio feedback correction coefficient FAF is fixed at 1.0, that is, the feedback control based on the output signal of the air-fuel ratio sensor 17 is stopped, and the air-fuel ratio is controlled to the target lean air-fuel ratio based on the lean correction coefficient FLEAN, the lean limit feedback correction coefficient FLLFB, and the intercylinder correction coefficient KGTP(i).

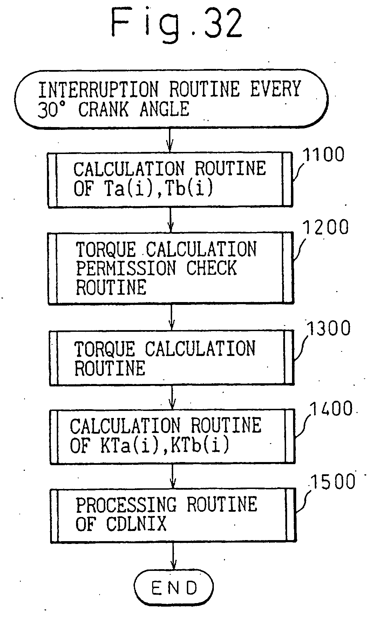

Next, the routine for finding the torque generated at each cylinder will be explained referring to Fig. 32 to Fig. 35.

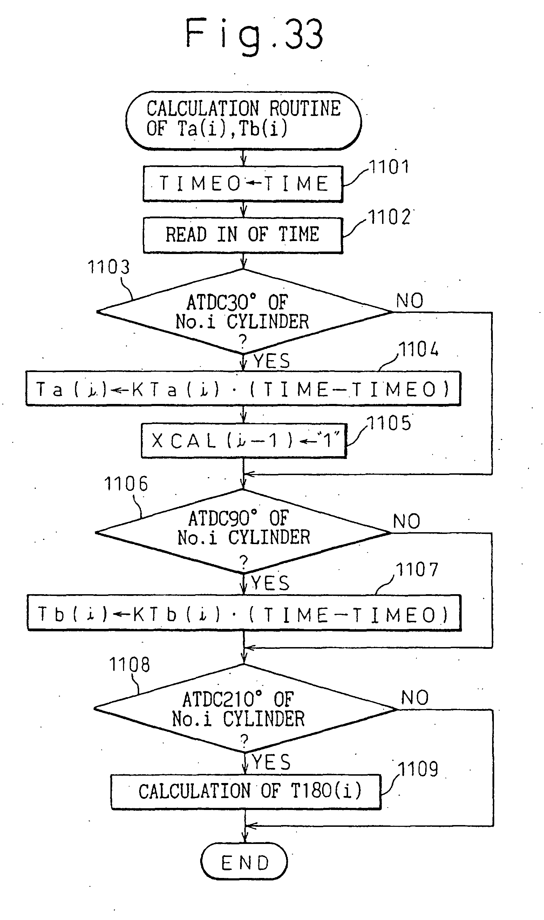

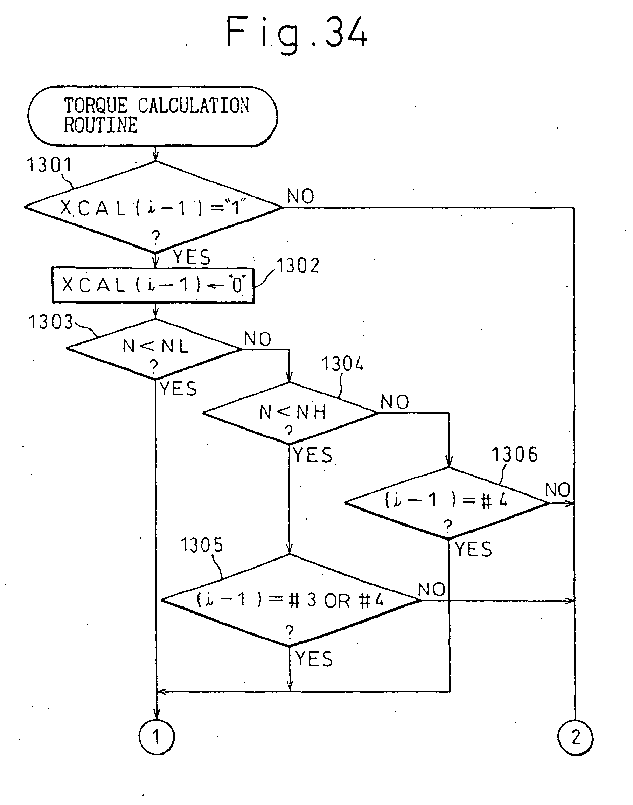

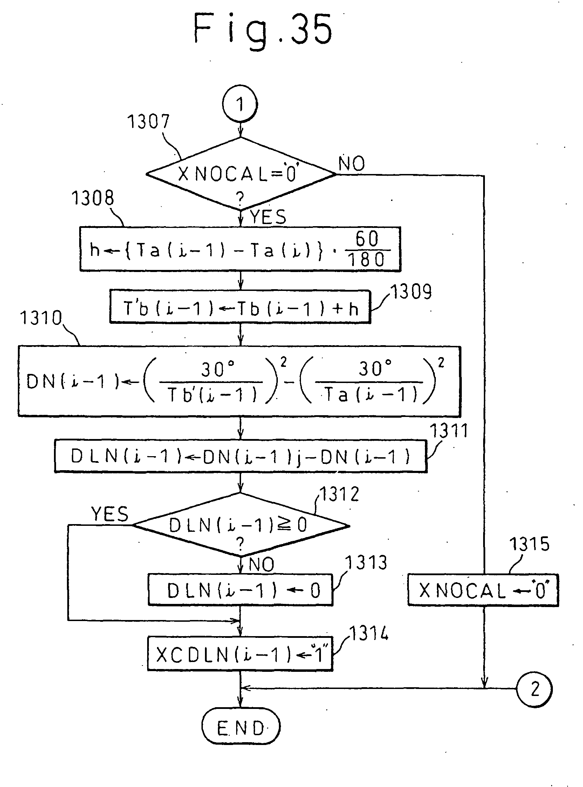

Fig. 32 shows the interruption routine performed at every 30° crank angle. Referring to Fig. 32, first, the routine (step 1100) for calculating the elapsed times Ta(i) and Tb(i) is proceeded to. This routine is shown in Fig. 33. Next, the routine (step 1200) for checking if the calculation of the torque is permitted or not is proceeded to. This routine is shown in the previously explained Fig. 13 to Fig. 15. Next, the routine for calculating the torque (step 1300) is proceeded to. This routine is shown in Fig.34 and Fig. 35. Next, the routine for calculating the ratios KTa(i) and KTb(i) (step 1400) is proceeded to. This routine is shown in the previously explained Fig.18 and Fig. 19. Next, the routine (step 1500) for processing of the counter CDLNIX used for calculation of the torque fluctuation value is proceeded to. This routine is shown in the previously explained Fig. 20.

Referring to Fig. 33 showing the routine for calculating the elapsed times Ta(i) and Tb(i), first, at step 1101, the time is made the TIME0. The electronic control unit 2 is provided with a free run counter showing the time. The time is calculated from the count value of this free run counter. Next, at step 1102, the current time is fetched. Therefore, the TIME0 at step 1101 comes to express the time of 30° crank angle before.

Next, at step 1103, whether the No. 1 cylinder is currently at ATDC 30° or not is judged. When the No. 1 cylinder is not currently at ATDC 30°, step 1106 is jumped to, where whether the No. 1 cylinder is currently at ATDC 90° or not is judged. When the No. 1 cylinder is not currently at ATDC 90°, step 1108 is jumped to.

As opposed to this, when it is judged at step 1103 that the No. 1 cylinder is currently at ATDC 30°, step 1104 is proceeded to, where the final elapsed time Ta(i) from TDC to ATDC 30° of the No. 1 cylinder is calculated based on the following equation:

$$Ta(i) = KTa(i)·(TIME-TIME0)$$

That is, for example, when the No. 1 cylinder #1 is currently at ATDC 30°, the final elapsed time Ta(1) from TDC to ATDC 30° of the No.1 cylinder #1 is calculated from KTa(1)·(TIME-TIME0). Here, (TIME-TIME0) expresses the elapsed time Ta(1) actually measured from the crank angle sensor 14 and KTa(1) is a ratio for correcting the error due to the spaces between the outer teeth of the rotor 13, therefore the final elapsed time Ta(1) obtained by multiplying (TIME-TIME0) with KTa(1) accurately expresses the elapsed time when the crankshaft rotates by 30° crank angle.

Next, at step 1105, the flag XCAL(i-1) of the No. (i-1) cylinder where combustion had been performed one time before showing that the generated torque should be calculated is set (XCAL(i-1) - "1"). In this embodiment according to the present invention, as explained above, the ignition sequence is 1-3-4-2, so when the No. 1 cylinder #1 is currently at ATDC 30°, the flag XCAL(2) of the No. 2 cylinder #2 where combustion had been performed one time before showing that the generated torque should be calculated is set. In the same way, when the final elapsed time Ta(3) is calculated as shown in Fig. 21, the flag XCAL(1) is set, when the final elapsed time Ta(4) is calculated, the flag XCAL(3) is set, and when the final elapsed time Ta(2) is calculated, the flag XCAL(4) is set.

On the other hand, when it is judged at step 1106 that the No. 1 cylinder is currently at ATDC 90°, step 1107 is proceeded to, where the final elapsed time Tb(i) from ATDC 60° to ATDC 90° of the No. 1 cylinder is calculated based on the following equation:

$$Tb(i) = KTb(i)·(TIME-TIME0)$$

That is, for example, when the No. 1 cylinder #1 is currently at ATDC 90°, the final elapsed time Tb(1) from ATDC 60° to ATDC 90° of the No. 1 cylinder #1 is calculated from KTb(1)·(TIME-TIME0). In this case as well, since the ratio KTb(1) for correction of the error due to the spaces between the outer teeth of the rotor 13 is multiplied with (TIME-TIME0), the final elapsed time Tb(1) comes to accurately express the elapsed time when the crankshaft rotates by 30° crank angle.

Next, at step 1108, whether the No. 1 cylinder is currently at ATDC 210° or not is judged. When the No.

1 cylinder is currently at ATDC 210°, the elapsed time T180(i) from ATDC 30° to ATDC 210° of the No. 1 cylinder, that is, the elapsed time T180(i) of the expansion stroke of the No. 1 cylinder is calculated. While not explained in detail in the specification of this application, the difference between the elapsed time T180(i) of the expansion stroke of a cylinder and the elapsed time T180(i) of the next expansion stroke of the cylinder is calculated for each cylinder and the intercylinder correction coefficient KGTP(i) for each cylinder is calculated so that the difference for each cylinder becomes smaller. Note that, this intercylinder correction coefficient KGTP(i) is disclosed in detail in for example Japanese Unexamined Patent Publication (Kokai) No. 4-370346.

Next, the torque calculation routine shown in Fig. 34 and Fig. 35 will be explained. Referring to Fig. 34 and Fig. 35, first, at step 1301, whether the flag XCAL(i-1) of the No. (i-1) cylinder where the combustion was performed one time before showing that the generated torque should be calculated is set or not is judged. When the flag XCAL(i-1) "0", that is, when the flag XCAL(i-1) is not set, the processing cycle is ended. As opposed to this, when the flag XCAL(i-1) = "1", that is, when the flag XCAL(i-1) is set, step 1302 is proceeded to, where the flag XCAL(i-1) is reset, then step 1303 is proceeded to.

At step 1303, whether the engine speed N is lower than the predetermined set speed NL or not is judged. When N < NL, step 307 is proceeded to, where whether the prohibition flag XNOCAL prohibiting the calculation of the torque for the cylinder at which the combustion was performed one time before is reset (XNOCAL = "0") or not is judged. When this prohibition flag is set (XNOCAL = "1"), step 1315 is proceeded to, where the prohibition flag XNOCAL is reset. As opposed to this, when the prohibition flag is reset, step 1308 is-proceeded to. That is, only when the flag XCAL is set and prohibition flag XNOCAL is reset is step 1308 proceeded to.

At step 1308, the amount of fluctuation h of the elapsed time (Fig. 8) due to the torsional vibration of the engine drive system is calculated based on the following equation:

$$h = \{Ta(i-1)-Ta(i)\}·60/180$$

That is, as will be understood from Fig. 8, the amount of fluctuation h of the elapsed time becomes one-third of $h_0$ (= Ta(i-1)-Ta(i)). Next, at step 1309, Tb'(i-1) expressing only the elapsed time due to the combustion pressure is calculated from the following equation:

$$Tb'(i-1)= Tb(i-1)+h$$

That is, when finding Tb'(1) for the No. 1 cylinder #1, h = {Ta(1)-Ta(3)}·60/180 and Tb'(1) Tb(1)+h. Further, when finding Tb'(3) for the No. 3 cylinder #3, h = {Ta(3)-Ta(4)}·60/180 and Tb'(3) = Tb(3)+h. Next, at step 310, the generated torque DN(i-1) of the cylinder at which the combustion was performed one' time before is calculated based on the following equation:

$$DN(i-1) = \omega b^2 - \omega a^2 = (30°/Tb'(i-1))^2 - (30°/Ta(i-1))^2$$

This generated torque DN(i-1) expresses the torque after elimination of the effect of the torsional vibration of the engine drive system and the effect of the variation in spaces between the outer teeth of the rotor 13.

Note that when finding the drive force GN(i-1) generated by a cylinder, this drive force GN(i-1) may be calculated based on the following equation:

$$GN(i-1) = (30°/Tb'(i-1))-(30°/Ta(i-1))$$

At step 1310, the generated torque DN(i-1) is calculated, then step 1311 is proceeded to, where the amount of fluctuation of the torque DLN(i-1) in one cycle of the same cylinder is calculated based on the following equation:

$$DLN(i-1) = DN(i-1)j-DN(i-1)$$

Here, DN(i-1)j expresses the generated torque of the same cylinder one cycle (720° crank angle) before for DN(i-1).

Next, at step 1312, whether the amount of fluctuation of the torque DLN(i-1) is positive or not is judged. When DLN(i-1) ≥ 0, step 1314 is jumped to, where the cumulative addition request flag XCDLN(i-1) of the cylinder at which the combustion was performed one time before showing that the amount of fluctuation of the torque DLN(i-1) should be cumulatively added is set (XCDLN(i-1) - "1"). As opposed to this, when DLN(i-1) < 0, step 1313 is proceeded to, where the DLN(i-1) is made zero, then step 1314 is proceeded to. Note that the torque of each cylinder repeatedly rises and falls. To find the amount of fluctuation of the torque in this case, it is sufficient to cumulatively add the amount of increase of the torque or the amount of decrease of the torque. In the routine shown in Fig. 34 and Fig. 35, only the amount of decrease of the torque is cumulatively added, therefore, as explained above, when DLN(i-1) < 0, DLN(i-1) is made zero.

In this way, when the engine speed N is lower than even the set speed NL, so long as the prohibition flag XNOCAL is not set, the generated torque DN(i-1) of the cylinders #1, #2, #3, and #4 and the amount of fluctuation of the torque DLN(i-1) are successively calculated.

On the other hand, at step 1303, when it is judged that N ≥ NL, step 1304 is proceeded to, where whether the engine speed N is lower than the predetermined set speed NH (> NL) or not is judged. When N < NH, step 305 is proceeded to, where whether the cylinder (i-1) at which combustion was performed one time before was the No. 3 cylinder #3 or the No. 4 cylinder #4 or not is judged. When the cylinder (i-1) at which combustion was performed one time before was the No. 3 cylinder #3 or the No. 4 cylinder #4, step 1307 is proceeded to, while when the cylinder (i-1) at which combustion was performed one time before was neither the No. 3 cylinder #3 nor the No. 4 cylinder #4, the processing cycle is ended. Therefore, when the engine speed N is NL ≤ N < NH, so long as the prohibition flag XNOCAL is not set, the generated torque DN(i-1) and the amount of fluctuation of the torque DLN(i-1) for only the No. 3 cylinder #3 and the No. 4 cylinder #4 are calculated.

On the other hand, when it is judged at step 1304 that N ≥ NH, step 306 is proceeded to, where whether the cylinder (i-1) at which combustion was performed one time before was the No. 4 cylinder #4 or not is judged. When the cylinder (i-1) at which combustion was performed one time before was the No. 4 cylinder #4, step 1307 is proceeded to, while when the cylinder (i-1) at which combustion was performed one time before was not the No. 4 cylinder #4, the processing cycle is ended. Therefore, when the engine speed N is N ≥ NH, so long as the prohibition flag XNOCAL is not set, the generated torque DN(i-1) and the amount of fluctuation of the torque DLN(i-1) for only the No. 4 cylinder #4 are calculated.

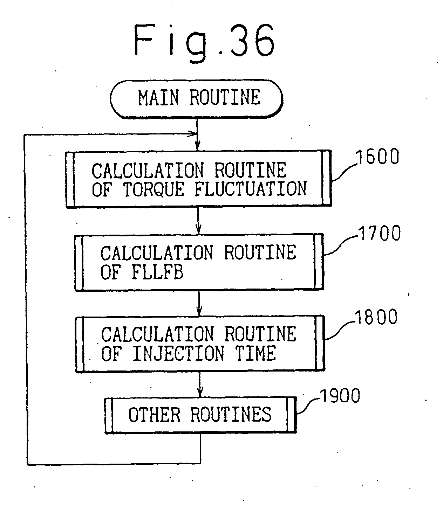

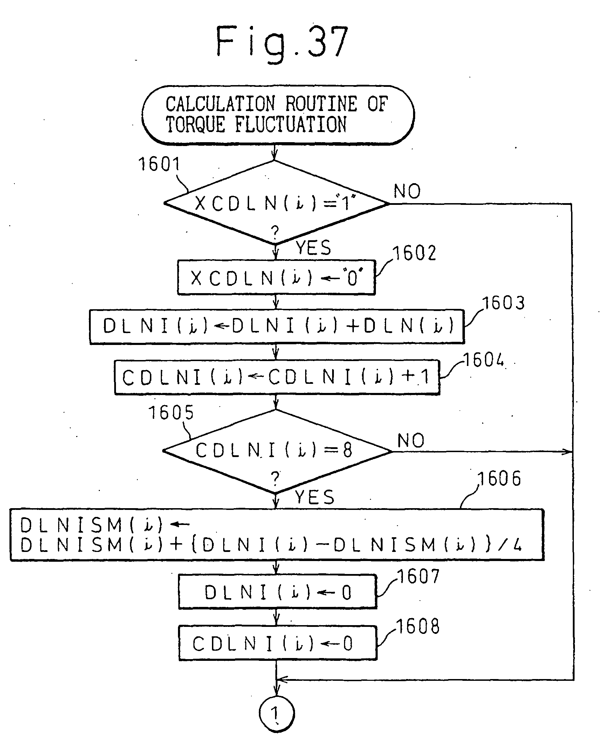

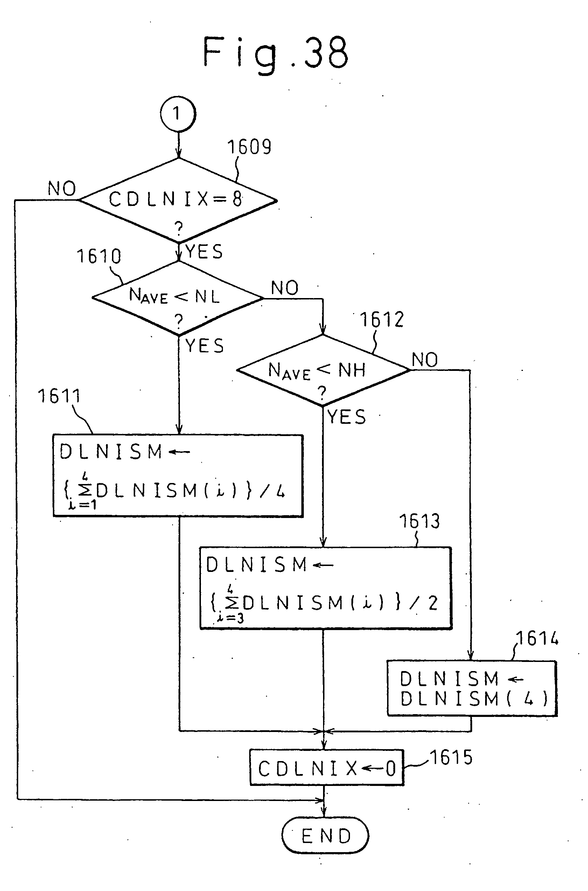

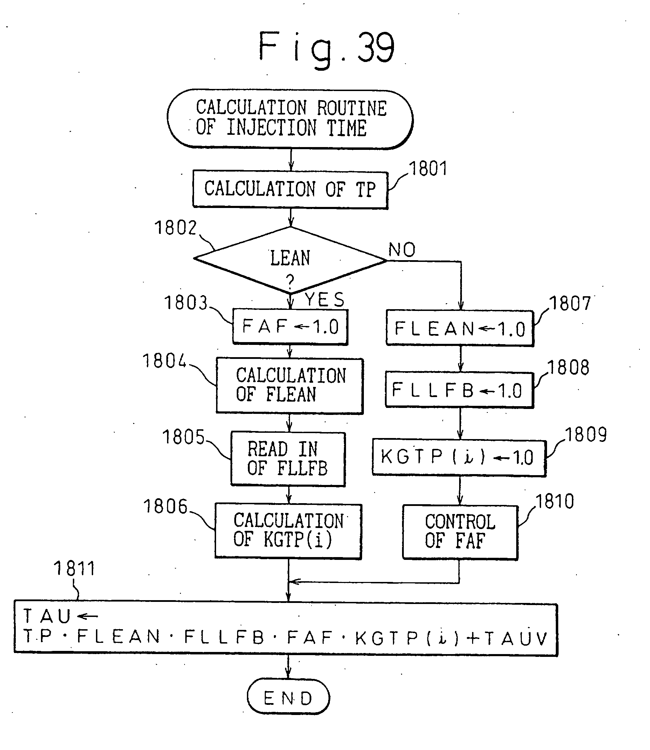

Fig. 36 shows the repeatedly executed main routine. In this main routine, first, the routine for calculation of the torque fluctuation value (step 1600) is executed. This routine is shown in Fig. 37 and Fig. 38. Next, the routine for calculation of the lean limit feedback correction coefficient FLLFB (step 1700) is executed. This routine is shown in the previously explained Fig. 27. Next, when the predetermined crank angle is reached, the injection time calculation routine (step 1800) is executed. This routine is shown in Fig. 39. Next, the other routines (step 1900) are executed.

Next, the routine for calculation of the torque fluctuation value will be explained referring to Fig. 37 and Fig. 38.

Referring to Fig. 37 and Fig. 38, first, at step 1601, whether the cumulative addition request flag XCDLN(i) showing that the amount of fluctuation of the torque DLN(i) should be cumulatively added is set (XCDLN(i) = "1") or not is judged. When the cumulative addition request flag XCDLN(i) is not set, step 1609 is jumped to, while when the cumulative addition request flag XCDLN(i) is set, step 6102 is proceeded to. At step 1602, the cumulative addition request flag XCDLN(i) is reset. Next, at step 1603, the amount of fluctuation of the torque DLN(i) is added to the cumulative value DLNI(i) of the amount of fluctuation of the torque. Next, at step 1604, the cumulative count value CDLNI(i) is incremented by exactly 1. That is, for example, if the cumulative addition request flag XCDLN(1) is set for the No. 1 cylinder at step 1601, at step 1602, this flag XCDLN (1) is reset, at step 1603, the amount of fluctuation of the torque cumulative value DLNI(1) is calculated, and, at step 1604, the cumulative count value CDLNI (1) is incremented by exactly 1.

Next, at step 1605, whether the cumulative count value CDLNI(i) has become "8" or not is judged. When CDLNI(i) is not "8", step 1609 is jumped to, while when CDLNI(i) becomes "8", step 1606 is proceeded to, where the torque fluctuation value DLNISM(i) of each cylinder is calculated from the following equation:

$$DLNISM(i) = DLNISM (i)+\{DLNI (i)-DLNISM (i)\}/4$$

Next, at step 1607, the cumulative value DLNI (i) of the amount of fluctuation of the torque for each cylinder is cleared, then, at step 1608, the cumulative count value CDLNI(i) is cleared.

That is, when there is a difference between the calculated amount of fluctuation of the torque cumulative value DLNI(i) and the previously used torque fluctuation value DLNISM(i), the value of this difference {DLNI(i)-DLNISM (i)} multiplied by 1/4 is added to the torque fluctuation value DLNISM(i). Therefore, for example, when the cumulative count value CDLNI(1) becomes "8" for the No. 1 cylinder #1, at step 1606, the torque fluctuation value DLNISM(1) is calculated.

Next, at step 1609, whether the count value CDLNIX calculated by the routine shown in Fig. 20 has become "8" or not is judged. When CDLNIX is not "8", the processing cycle is ended, while when CDLNIX becomes "8", step 1610 is proceeded to, where whether or not the average value of the engine speed $N_{AVE}$ found at step 1509 of the routine for processing CDLNIX shown in the Fig. 20 is lower than even the set speed NL or not is judged. When $N_{AVE}$ < NL, step 1611 is proceeded to, where the mean value of the torque fluctuation value DLNISM(i) of each torque, that is, the mean torque fluctuation value DLNISM (= {DLNISM(1)+DLNISM(2)+DLNISM(3)+DLNISM(4)}/4) is calculated. Next, step 1615 is proceeded to.

As opposed to this, when it is judged at step 1610 that $N_{AVE} \geq$ NL, step 1612 is proceeded to, where whether the average value of the engine speed $N_{AVE}$ is lower than the set speed NH (> NL) or not is judged. When $N_{AVE}$ < NH, step 1613 is proceeded to, where the mean value of the torque fluctuation value DLNISM (i) of the No. 3 cylinder #3 and the No. 4 cylinder #4, that is, the mean torque fluctuation value DLNISM (= {DLNISM(3)+DLNISM(4)}/2) is calculated. Next, step 1615 is proceeded to. That is, when NL $\leq N_{AVE}$ < NH, calculation of the amount of fluctuation of the torque DLN(i) for the No. 1 cylinder #1 and the No. 2 cylinder #2 is prohibited, so at this time the mean torque fluctuation value DLNISM is made the mean value of DLNISM(3) and DLNISM(4).

On the other hand, when it is judged at step 1612 that $N_{AVE} \geq$ NH, step 1614 is proceeded to, where the torque fluctuation value DLNISM (4) of the No. 4 cylinder #4 is made the mean torque fluctuation value DLNISM. That is, when $N_{AVE} \geq$ NH, calculation of the amount of fluctuation of the torque DLN(i) for the No. 1 cylinder #1, No. 2 cylinder #2, and No. 3 cylinder #3 is prohibited, so at this time DLNISM(4) is made the mean torque fluctuation value DLNISM(4). Next, step 1615 is proceeded to. At step 1611, the count value CDLNIX is cleared. The value DLNISM representing the amount of fluctuation of the torque of the engine is calculated in this way.

Next; the routine for calculation of the fuel injection time will be explained referring to Fig. 39.

Referring to Fig. 39, first, at step 1801, the basic fuel injection time TP is calculated from the map shown in Fig. 2. Next, at step 1802, whether the operating state is one where a lean operation should be performed or not is judged. When the operating state is one where a lean operation should be performed, step 1803 is proceeded to, where the value of the stoichiometric air-fuel ratio feedback correction coefficient FAF is fixed at 1.0. Next, at step 1804, the lean correction coefficient FLEAN is calculated from the map shown in Fig. 4, then at step 1805, the lean limit feedback correction coefficient FLLFB is read from the map shown in Fig. 5. Next, at step 1806, the intercylinder correction coefficient KGTP(i) is calculated. Next,'at step 1811, the fuel injection time TAU is calculated based on the following equation:

$$TAU = TP·FLEAN·FLLFB·FAF·KGTP(i)+TAUV$$

As opposed to this, when it is judged at step 1802 that the operating state is not one in which a lean operation should be performed, that is, when the air-fuel ratio should be made the stoichiometric air-fuel ratio, step 1807 is proceeded to, where the lean correction coefficient FLEAN is fixed at 1.0. Next, at step 1808, the lean limit feedback correction coefficient FLLFB is fixed at 1.0. Next, at step 1809, the intercylinder correction coefficient KGTP(i) is fixed at 1.0. Next, at step 1810, the stoichiometric air-fuel ratio feedback correction coefficient FAF is controlled based on the output signal of the air-fuel ratio sensor 17 so that the air-fuel ratio becomes the stoichiometric air-fuel ratio. Next, step 1811 is proceeded to, where the fuel injection time TAU is calculated.

Next, an explanation will be made of a third embodiment which enables even more accurate detection of the drive force generated at each cylinder or the torque generated at each cylinder.

That is, the change of the speed of reciprocal motion of the piston becomes smallest near top dead center and becomes largest near 90° after top dead center. In this case, if the change of the speed of reciprocal motion of the piston becomes large, the deceleration action caused by the 'inertia on the piston and other reciprocating members (hereinafter referred to as simply the inertia of the piston) acts on the crankshaft and therefore the change of the speed of reciprocal motion of the piston becomes largest near 90° after top dead center and the angular velocity of the crankshaft is reduced by the deceleration action due to the inertia of the piston. In this case, the higher the engine speed becomes, the larger the change of the speed of reciprocal motion of the piston and therefore the deceleration action due to the inertia of the piston becomes more powerful the higher the engine speed becomes.

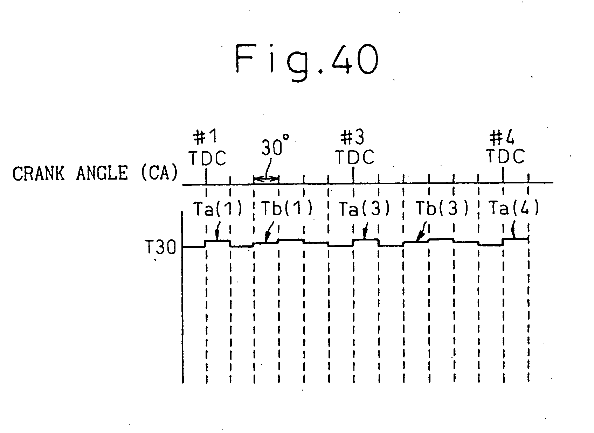

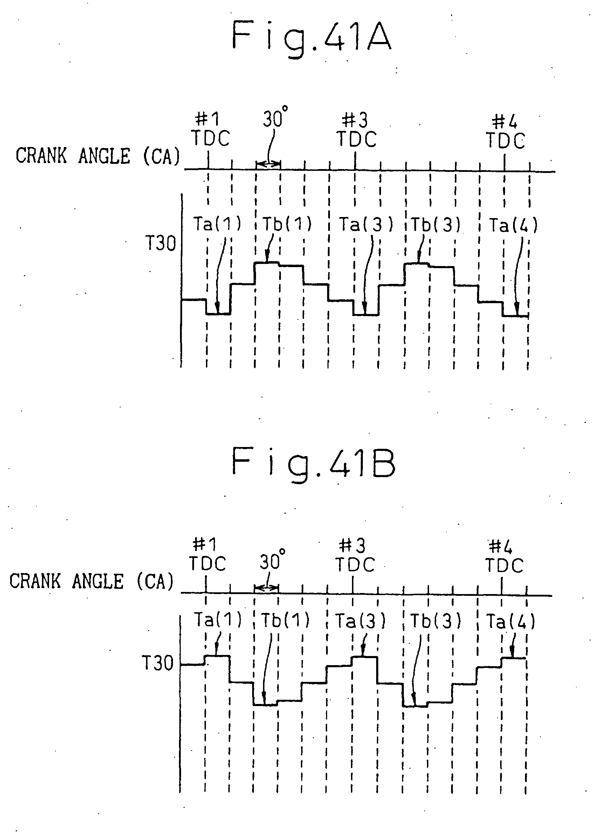

Note, however, that when the deceleration action due to the inertia of the piston works in this way, the angular velocity of the crankshaft near 90° after top dead center, that is the second angular velocity ωb, is reduced. That is, the detected second angular velocity ωb becomes the amount of increase of the angular velocity caused by the combustion pressure plus the amount of reduction of the angular velocity due to the inertia of the piston. Therefore, to find more accurately the drive force generated by each cylinder or the torque generated by each cylinder, it is necessary to consider the amount of change of the second angular velocity ωb caused by the inertia of the pistons. This will be explained next referring to Fig. 40, Fig. 41A, and Fig. 41B.

As explained earlier, when the engine speed becomes higher, the deceleration action due to the inertia of the piston becomes more powerful. As a result, the angular velocity of the crankshaft near 90° after top dead center, that is, the second angular velocity ωb, is decreased. In other words, the elapsed time T30 near 90° after top dead center becomes longer due to the deceleration action due to the inertia of the piston. Fig. 40 shows the change in the elapsed time T30 at the time of high engine speed. From Fig. 40, it is learned that the elapsed times Tb(1) and Tb(3) near 90° after top dead center become longer.

On the other hand, when combustion is performed, the combustion pressure causes the elapsed time T30 to be reduced from Ta(i) to Tb(i). That is, when combustion is performed, the combustion pressure causes the angular velocity of the crankshaft to rise from the first angular velocity ωa to the second angular velocity ωb. Note, however, that as explained above, the deceleration action due to the inertia of the piston causes the second angular velocity ωb to be decreased, therefore the detected second angular velocity ωb includes not only the amount of increase of the angular velocity due to the combustion pressure, but also the amount of decrease of the angular velocity due to the inertia of the piston. Therefore, in this case, in so far as the second angular velocity ωb is not increased by the amount of decrease of the angular velocity due to the inertia of the piston, the difference between the first angular velocity ωa and second angular velocity ωb does not express the generated drive force of the cylinder and the difference between the square of the first angular velocity ωa and the square of the second angular velocity ωb does not express the generated torque of the cylinder.

Therefore, in the third embodiment, when the supply of fuel is stopped at the time of a deceleration operation, the difference between the elapsed times Ta(i) and Tb(i) is found and then the difference is used to correct the elapsed time Tb(i). That is, when the supply of fuel is stopped, no combustion pressure occurs, therefore, at this time, only the effect due to the inertia of the piston appears in the elapsed time T30. Fig. 41A shows the change in the elapsed time T30 when the supply of fuel is stopped. As shown in Fig. 41A, when the supply of fuel is stopped, the deceleration action due to the inertia of the piston causes the elapsed times Tb(1) and Tb(3), that is, Tb(i) to become longer. At this 'time, the difference r (r= Tb(i)-Ta(i)) between the elapsed times Ta(i) and Tb(i) expresses the amount of increase of the elapsed time Tb(i) due to the inertia of the piston. Therefore, by subtracting this amount of increase r from the actually detected Tb(i) shown in Fig. 40, this result of subtraction (actually detected Tb(i)-amount of increase r) comes to express the elapsed time Tb(i) reduced by the combustion pressure. The elapsed time Tb(i) decreased by this combustion pressure is shown in Fig. 41B. Therefore, by calculating the generated drive force and the generated torque of a cylinder based on the elapsed time Ta(i), Tb(i) shown in Fig. 41B, the generated drive force and the generated torque come to express the true generated drive force and generated torque from which the effect of the inertia of the pistons has been eliminated.

In other words, at the time when the supply of fuel is stopped, the second angular velocity ωb is reduced by the inertia of the piston by exactly the difference between the first angular velocity ωa and the second angular velocity ωb. By adding the amount of decrease of the angular velocity (ωa-ωb) at this time to the actually detected second angular velocity ωb, the result of the addition comes to express the second angular velocity ωb increased by the combustion pressure.

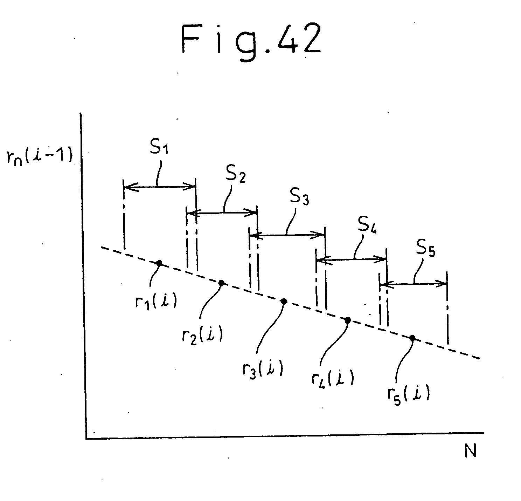

Note, however, that the amount of increase r of the elapsed time due to the above inertia of the piston becomes a function of the engine speed. That is, if the engine speed becomes high, the deceleration action due to the inertia of the piston becomes powerful, so the amount of increase r of the elapsed time becomes larger, but the elapsed times Ta(i) and Tb(i) themselves become shorter, so the amount of increase r of the elapsed time becomes smaller as the engine speed N becomes higher as shown by the broken line in Fig. 42. Therefore, in this embodiment according to the present invention, the amount of increase r of the elapsed time in accordance with the engine speed N is calculated from the relationship shown by the broken line in Fig. 42. The amount of increase r is used to correct the elapsed time Tb(i).

Note, however, that a value found in advance by experiments may be used as the amount of increase r of the elapsed time, but in this embodiment according to the present invention, this amount of increase r is learned. That is, as shown in Fig. 42, a plurality of learning regions $S_1$, $S_2$, $S_3$, $S_4$, $S_5$ ... are set for the engine speed N. When the supply of fuel is stopped at the time of a deceleration operation, the amount of increase $r_1$(i), $r_2$(i), $r_3$(i), $r_4$(i), $r_5$(i) ... of the elapsed time according to the engine speed N at that time is found for each cylinder.

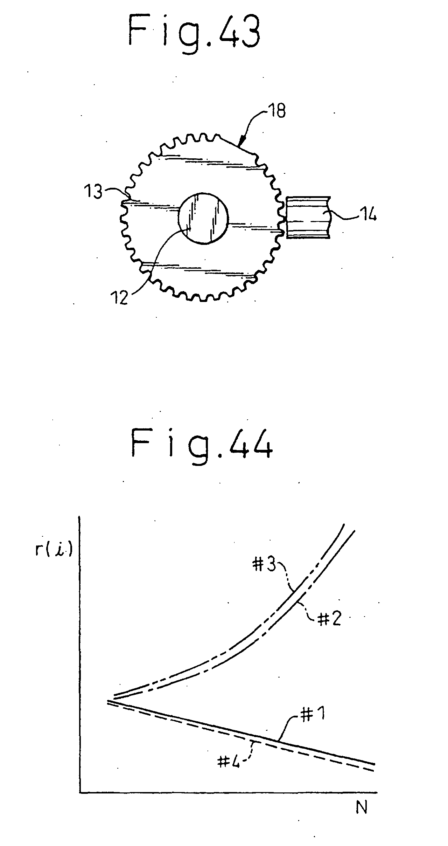

On the other hand, in the third embodiment, the rotor 13 has an outer tooth formed every 10° crank angle on its outer periphery and has some of the outer teeth removed for detection of the top dead center of compression of the No. 1 cylinder for example. The portion where the outer teeth have been removed, that is, this non-tooth portion, is shown by the reference numeral 18 in Fig. 43. Further, in the third embodiment, the positional relationship between the crank angle sensor 14 and the non-tooth portion 18 at ATDC 60° to ATDC 90° of the No. 2 cylinder #2 and the No. 3 cylinder #3 is set so that the crank angle sensor 14 faces the non-tooth portion 18. However, if the crank angle sensor 14 faces the non-tooth portion 18 at ATDC 60° to ATDC 90° of the is No. 2 cylinder #2 and the No. 3 cylinder #3 in this way, the elapsed time Tb(2) of the No. 2 cylinder #2 and the elapsed time Tb(3) of the No. 3 cylinder #3 cannot be accurately detected, therefore the amount of increase r(2) of the elapsed time for the No. 2 cylinder #2 and the elapsed time r(3) for the No. 3 cylinder #3 can no longer be accurately detected.

That is, at the non-tooth portion 18, the output signal of the crank angle sensor 14 fluctuates by a large amount according to the engine speed N. As a result, as shown in Fig. 44, the amount of increase r(i) of the elapsed time for the No. 2 cylinder #2 and the No. 3 cylinder #3 largely deviate from the amount of increase r(i) of the No. 1 cylinder #1 and the No. 4 cylinder #4 showing the true values. Therefore, in the third embodiment, the drive force and the torque generated by the cylinder cannot be accurately detected for the No. 2 cylinder #2 and the No. 3 cylinder #3, therefore the drive force and the torque generated by the cylinder are made not to be calculated for the No. 2 cylinder #2 and the No. 3 cylinder #3. Of course in this case, as in the first embodiment and the second embodiment, if the positional relationship between the crank angle sensor 14 and the non-tooth portion 18 is set so that the crank angle sensor 14 is made not to face the non-tooth portion 18 when detecting the elapsed times Ta(i) and Tb(i), it becomes possible to accurately calculate the drive force and the torque for all cylinders.

Note that in the same way as in the second embodiment, in the third embodiment as well, the fuel injection time TAU is calculated based on the following equation:

$$TAU = TP \cdot FLEAN \cdot FLLFB \cdot FAF \cdot KGTP(i) + TAUV$$

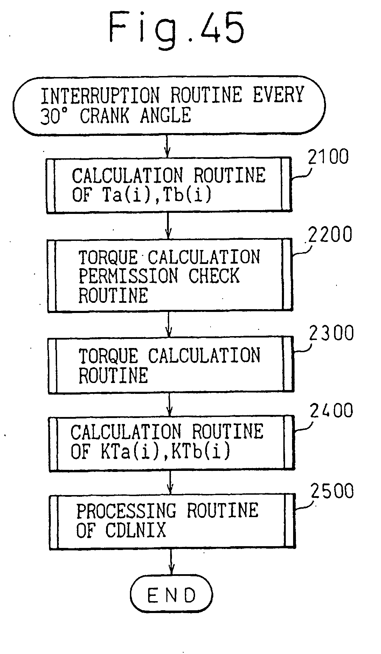

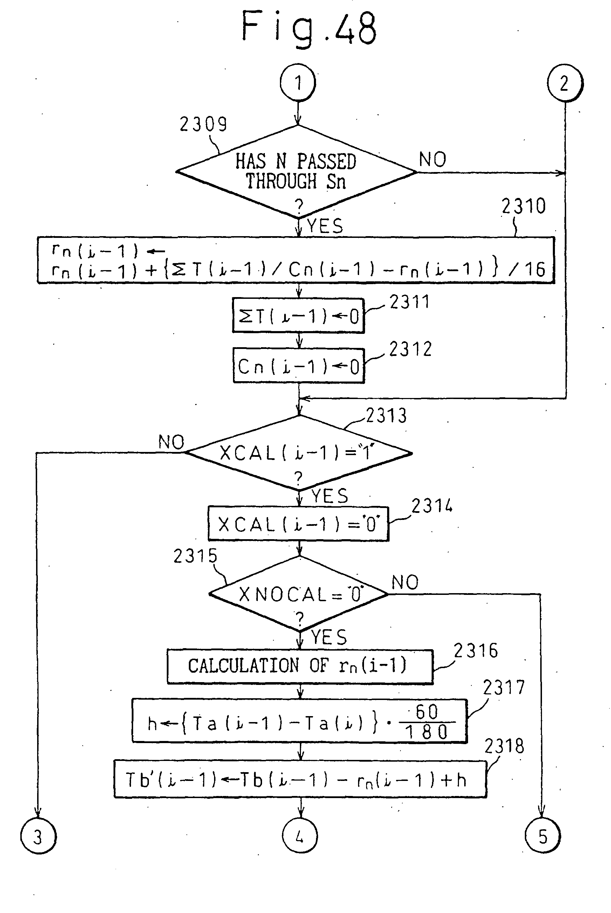

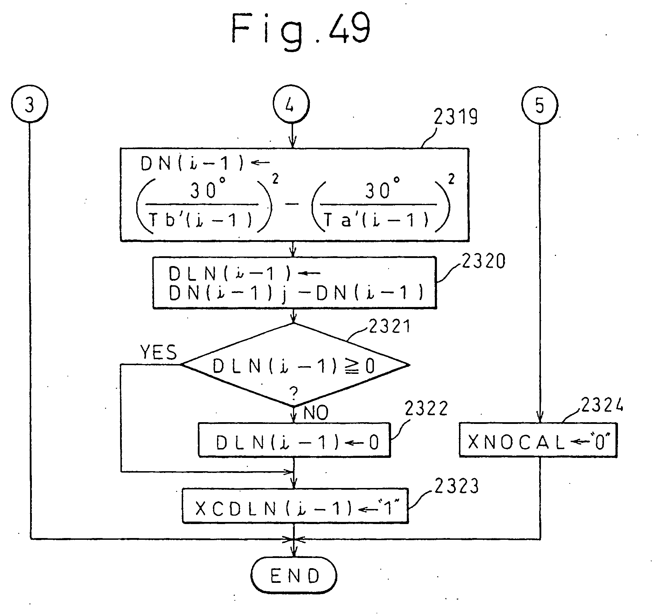

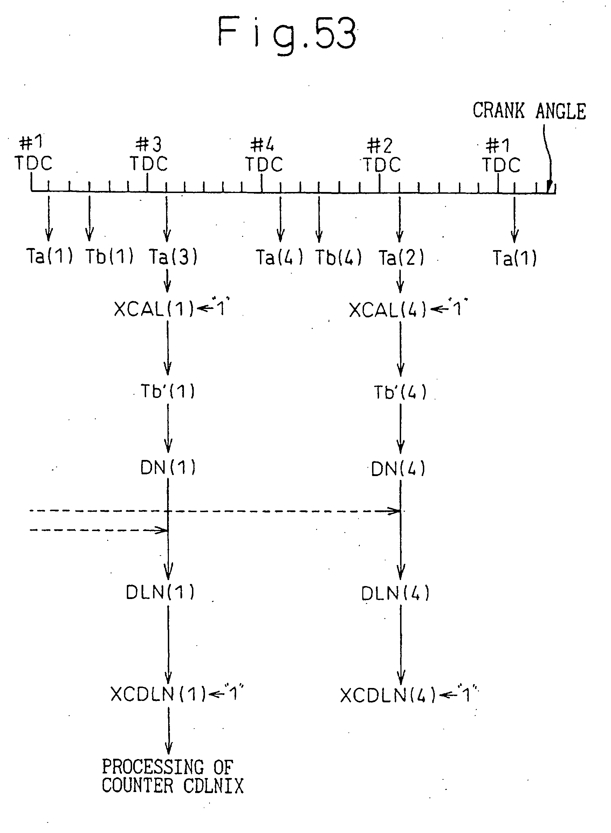

Next, the routine for finding the torque generated by each cylinder will be explained referring to Fig. 45 to Fig. 53. Note that, Fig. 53 shows the timing of calculation of the various values performed in each routine.

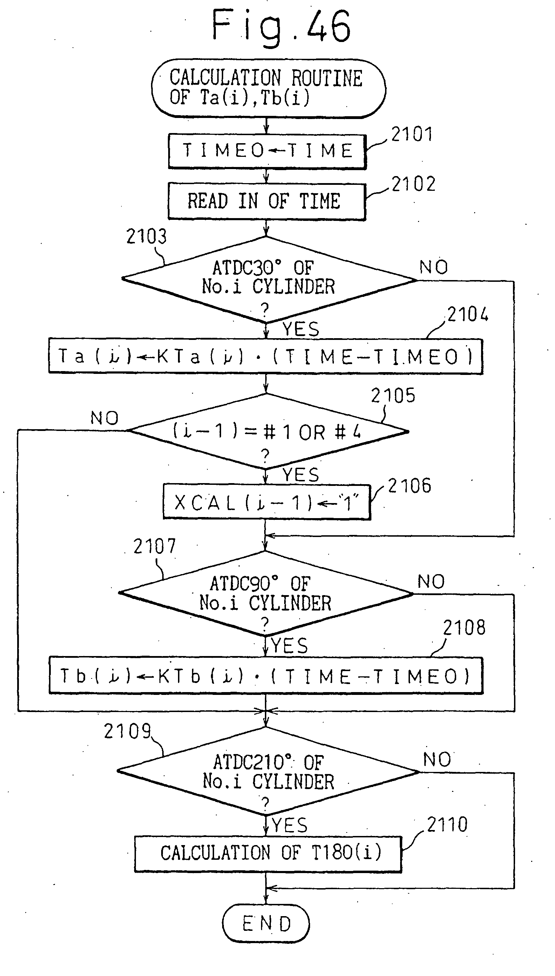

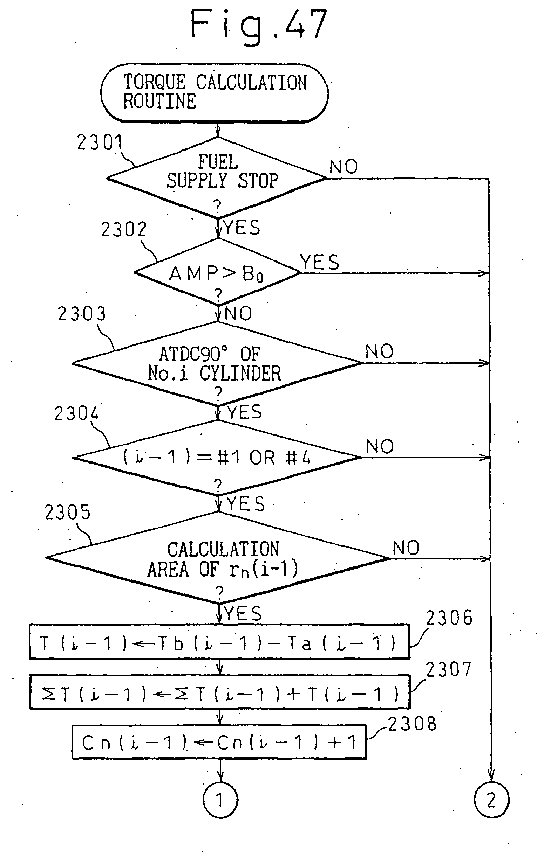

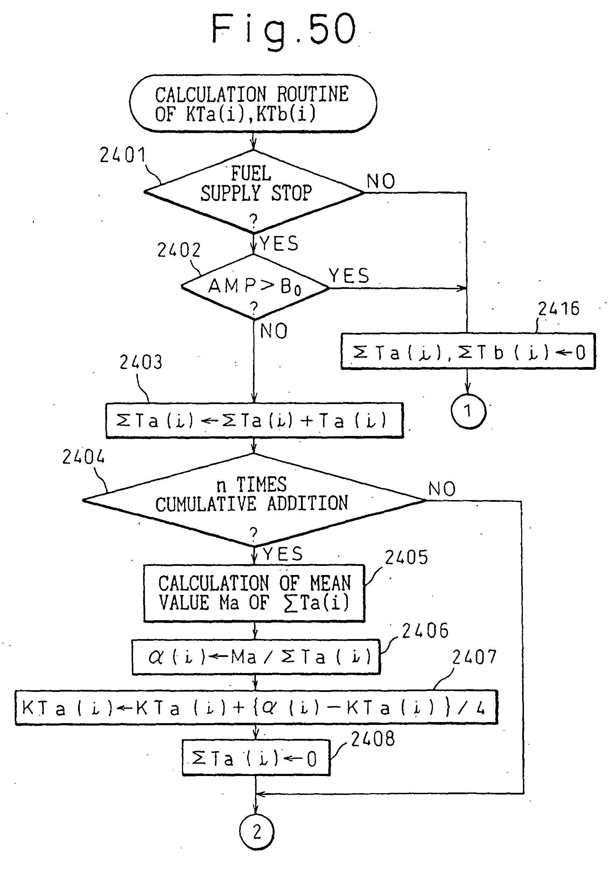

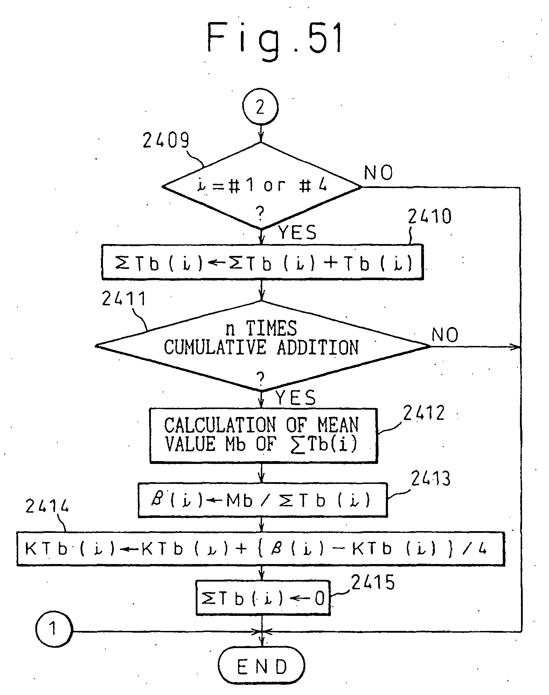

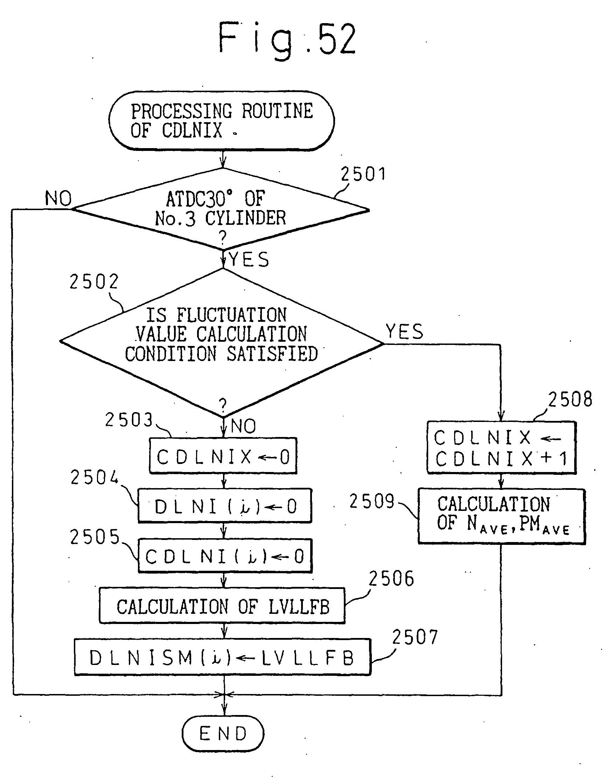

Fig. 45 shows an interruption routine performed at every 30° crank angle. Referring to Fig. 45, first, the routine (step 2100) for calculating the elapsed times Ta(i) and Tb(i) is proceeded to. This routine is shown in Fig.46. Next, the routine (step 2200) for checking whether the calculation of the torque is permitted . or not is proceeded to. This routine is explained previously in Fig. 13 to Fig. 15. Next, the routine for calculating the torque (step 2300) is proceeded to. This routine is shown in Fig. 47 to Fig. 49. Next, the routine for calculating the ratios KTa(i) and KTb(i) (step 2400) is proceeded to. This routine is shown in Fig. 50 and Fig. 51. Next, the routine for processing of the counter CDLNIX used for. calculation of the torque fluctuation value (step 2500) is proceeded to. This routine is shown in Fig. 52.

Referring to Fig. 46 showing the routine for calculation of the elapsed times Ta(i) and Tb(i), first, at step 2101, the time is made the TIME0. The electronic control unit 20 is provided with a free run counter for showing the time. The time is calculated from the count value of this free run counter. Next, at step 2102, the current time is fetched. Therefore, the TIME0 at step 101 shows the time at 30° crank angle before.

Next, at step 2103, whether the No. 1 cylinder is currently at ATDC 30° or not is judged .When the No. 1 cylinder is not currently at ATDC 30°, step 2107 is jumped to, where whether the No. 1 cylinder is currently at ATDC 90° or not is judged. When the No. 1 cylinder is not currently at ATDC 90°, step 2109 is jumped to.

As opposed to this, when it is judged at step 2103 that the No. 1 cylinder is currently at ATDC 30°, step 1204 is proceeded to, where the the final elapsed time Ta(i) from TDC to ATDC 30° of the No. 1 cylinder is calculated based on the following equation:

$$Ta(i) = KTa(i) \cdot (TIME-TIME0)$$

That is, for example, when the No. 1 cylinder #1 is currently at ATDC 30°, the final elapsed time Ta(1) from TDC to ATDC 30° of the No. 1 cylinder #1 is calculated from KTa(1)·(TIME-TIME0). Here, (TIME-TIME0) expresses the elapsed time Ta(1) actually measured from the crank angle sensor 14 and KTa (1) is the ratio for correcting the error due to the spaces between the outer teeth of the rotor 13, therefore the final elapsed time Ta(1) obtained by multiplying (TIME-TIME0) with KTa(1) accurately expresses the elapsed time when the crankshaft rotates by 30° crank angle.

Next, at step 2105, whether the No. (i-1) cylinder where combustion had been performed one time before is the No. 1 cylinder #1 or the No. 4 cylinder #4 or not is judged. When the No. (i-1) cylinder where combustion had been performed one time before is the No. 2 cylinder #2 or the No. 3 cylinder #3, step 2109 is jumped to. As opposed to this, when the No. (i-1) cylinder where combustion had been performed one time before is the No. 1 cylinder #1 or the No. 4 cylinder #4, step 2106 is proceeded to.

At step 2106, the flag XCAL (i-1) of the No. (i-1) cylinder where combustion had been performed one time before showing that the generated torque should be calculated is set (XCAL (i-1) - "1"). In this embodiment according to the present invention, as explained above, the ignition sequence is 1-3-4-2, so when the No. 3 cylinder #3 is currently at ATDC 30°, the flag XCAL(1) of the No. 1 cylinder #1 where combustion had been performed one time earlier showing that the generated torque should be calculated is set. In the same way, as shown in Fig. 53, when the final elapsed time Ta(2) is calculated, the flag XCAL(4) is set. That is, the flag showing that the generated torque should be calculated is set only for the No. 1 cylinder #1 and the No. 4 cylinder #4.

On the other hand, when it is judged at step 2107 that the No. 1 cylinder is currently at ATDC 90°, step 2108 is proceeded to, where the final elapsed time Tb(i) from ATDC 60° to ATDC 90° of the No. 1 cylinder is calculated from the following equation:

$$Tb(i) = KTb(i) \cdot (TIME-TIME0)$$

That is, for example, when the No. 1 cylinder #1 is currently at ATDC 90°, the final elapsed time Tb(1) from ATDC 60° to ATDC 90° of the No. 1 cylinder #1 is calculated from $KTb(1) \cdot (TIME-TIME0)$. In this case as well, since the ratio KTb(1) for correction of the error due to the spaces between the outer teeth of the rotor 13 is multiplied with (TIME-TIME0), the final elapsed time Tb(1) accurately expresses the elapsed time when the crankshaft rotates by 30° crank angle.

Next, at step 2109, whether the No. 1 cylinder is currently at ATDC 210° or not is judged. When the No. 1 cylinder is currently at ATDC 210°, the elapsed time T180(i) from ATDC 30° to ATDC 210° of the No. 1 cylinder, that is, the elapsed time T180(i) of the expansion stroke of the No. 1 cylinder is calculated. While not explained in detail in the specification of this application, the difference between the elapsed time T180(i) of the expansion stroke of each cylinder and the elapsed time T180(i) of the next expansion stroke of the cylinder is calculated for each cylinder and the intercylinder correction coefficient KGTP(i) is calculated for each cylinder so that the difference for each cylinder becomes smaller. Note that, this intercylinder correction coefficient KGTP (i) is disclosed in detail in for example, Japanese Unexamined Patent Publication (Kokai) No. 4-370346 as mentioned above.

Next, the torque calculation routine shown in Fig. 47 to Fig. 48 will be explained. Referring to Fig. 47 to Fig. 48, first, at step 2301, whether the supply of the fuel has been stopped or not at the time of a deceleration operation, that is whether the fuel has been cut or not is judged. When the supply of fuel is not stopped, step 2313 is jumped to, while when the supply of fuel is stopped, step 2302 is proceeded to. At step 2302, whether the amplitude AMP calculated in the routine for checking permission for calculation of the torque shown in Fig. 13 to Fig. 18 is larger than the setting $B_0$ or not is judged. When AMP > $B_0$, step 2313 is jumped to, while when AMP $\leq$ $B_0$, step 2303 is proceeded to. At step 2303, whether the No. 1 cylinder is currently at ATDC 90° or not is judged. When the No. 1 cylinder is not currently at ATDC 90°, step 2313 is jumped to. As opposed to this, when the No. 1 cylinder is currently at ATDC 90°, step 2304 is proceeded to.

At step 2304, whether the No. (i-1) cylinder which was in the expansion stroke one time before (at this time, no combustion is performed) is the No. 1 cylinder #1 or the No. 4 cylinder #4 or not is judged.When the No. (i-1) cylinder which was in the expansion stroke one time before is the No. 2 cylinder #2 or the No. 3 cylinder #3, step 2313 is jumped to. As opposed to this, when the No. (i-1) cylinder which was in the expansion stroke one time before is the No. 1 cylinder #1 or the No. 4 cylinder #4, step 2305 is proceeded to.

At step 2305, whether the No. (i-1) cylinder which was in the expansion stroke one time before was at one of the calculation regions $S_1$ , $S_2$, $S_3$, $S_4$, $S_5$ ... shown in Fig. 42 for the engine speed N is judged. When the No. (i-1) cylinder was not at one of the calculation regions $S_1$, $S_2$, $S_3$, $S_4$, $S_5$ ..., step 2313 is jumped to, while when the No. (i-1) cylinder was at one of the calculation regions $S_1$, $S_2$, $S_3$ , $S_4$, $S_5$ ..., step 2306 is proceeded to. At step 2306, the difference T(i-1) (= Tb(i-1) -Ta(i-1)) between the elapsed time Tb(i-1) of the No. (i-1) cylinder which was in the expansion stroke one time before and the elapsed time Ta(i-1) is calculated. That is, when the cylinder which was in the expansion stroke one time before is the No. 1 cylinder #1, the difference T(1) (= Tb(1)-Ta(1)) is calculated, while when the cylinder which was in the expansion stroke one time before is the No. 4 cylinder #4, the difference T(4) (= Tb(4)-Ta(4)) is calculated.

Next, at step 2307, the difference T(i-1) is added to the cumulative value $\Sigma T(i-1)$ of the difference T(i-1) $(\Sigma T(i-1) = \Sigma T(i-1)+T(i-1))$. Next, at step 2308, the count value Cn(i-1) for the calculation region SN of the No.' (i-1) cylinder is incremented by exactly 1. Next, at step 2309, whether the engine speed N has passed the calculation region Sn or not is judged. When the engine speed N is in the calculation region Sn, step 2313 is jumped to, while when engine speed N has passed the calculation region Sn, step 2310 is proceeded to. At step 2310, the amount of increase $r_n(i-1)$ of the elapsed time is calculated based on the following equation.

$$r_n(i-1) = r_n(i-1)+\{\Sigma T(i-1)/C_n(i-1)-r_n(i-1)\}/16$$

That is, for example, when the No. (i-1) cylinder which was in the expansion stroke one time before is the No. 1 cylinder #1 and the calculation region SN is $S_1$ in Fig. 42, the amount of increase $r_1(1)$ of the elapsed time is represented as shown in the following equation:

$$r_1(1) = r_1(1)+\{\Sigma T(1)/C_1(1)-r_1(1)\}/16$$

That is, $\Sigma T(1)/C_1(1)$ shows the mean value of the difference $T(i-1)$ of the elapsed time when the No. 1 cylinder #1 is in the calculation region $S_1$. When there is a difference between this mean value $\Sigma T(1)/C_1(1)$ and the previously used amount of increase $r_1(1)$, the amount of increase $r_1(1)$ is updated so as to approach the mean value $\Sigma T(1)/C_1(1)$. At step 310, the amount of increase $r_n(i-1)$ is updated, then step 2311 is proceeded to, where the cumulative value $\Sigma T(i-1)$ is cleared, then at step 312, the count value $C_n(i-1)$ is cleared.

On the other hand, at step 2313, whether the flag XCAL(i-1) of the No. (i-1) cylinder where combustion had been performed one time before showing that the generated torque should be calculated is set or not is judged. When the flag XCAL(i-1) = "0", that is, the flag XCAL(i-1) is not set, the processing cycle is ended. As opposed to this, when the flag XCAL(i-1) = "1", that is, the flag XCAL(i-1) is set, step 2314 is proceeded to, where the flag XCAL(i-1) is reset, then step 2315 is proceeded to.

At step 2315, whether the prohibition flag XNOCAL of the cylinder at which the combustion was performed one time before prohibiting the calculation of the torque is reset (XNOCAL = "0") or not is judged. When this prohibition flag is set (XNOCAL = "1"), step 2324 is proceeded to, where the prohibition flag XNOCAL is reset. As opposed to this, when the prohibition flag is reset, step 2316 is proceeded to. That is, when the flag XCAL is set and the prohibition flag XNOCAL is reset, step 2316 is proceeded to.

At step 2316, the amount of increase $r_n(i-1)$ according to the current engine speed N is calculated by interpolation from the amounts of increase $r_1(i)$, $r_2(i)$, $r_3(i)$, $r_4(i)$, $r_5(i)$ ... found for the calculation regions $S_1$, $S_2$, $S_3$, $S_4$, $S_5$ ... Next, at step 2317, the amount of fluctuation h of the elapsed time due to the torsional vibration of the engine drive system (Fig. 8) is calculated based on the following equation:

$$h = \{Ta(i-1)-Ta(i)\}\cdot60/180$$

That is, as will be understood from Fig. 8, the amount of fluctuation h of the elapsed time becomes one-third of $h_o$ (= Ta(i-1)-Ta(i)). Next, at step 2318, Tb'(i-1) expressing only the elapsed time reduced due to the combustion pressure is calculated based on the following equation:

$$Tb'(i-1)=Tb(i-1)-r_n(i-1)+h$$

That is, when finding Tb'(1) for the No. 1 cylinder #1, h = {Ta(1)-Ta(3)}·60/180 and Tb'(1) = Tb(1)-$r_n$(1)+h. Further, when finding Tb'(4) for the No. 4 cylinder #4, h = {Ta(4)-Ta(2)}·60/180 and Tb'(4) = Tb(4)-$r_n$(4)+h.

Next, at step 2319, the generated torque DN(i-1) of the cylinder at which the combustion was performed one time before is calculated based on the following equation:

$$DN(i-1) = \omega b^2-\omega a^2 = (30^\circ/Tb'(i-1))^2-(30^\circ/Ta(i-1))^2$$

This generated torque DN(i-1) expresses the torque after the elimination of the effect due to the inertia of the piston, the effect due to the torsional vibration of the engine drive system, and the effect due to the variation in spaces between the outer teeth of the rotor 13.

Note that, when finding the drive force GN(i-1) generated by the cylinders, this drive force GN(i-1) may be calculated based on the following equation:

$$GN(i-1) = (30^\circ/Tb'(i-1))-(30^\circ/Ta(i-1))$$

At step 2319, the generated torque DN(i-1) is calculated, then step 2320 is proceeded to, where the amount of fluctuation of the torque DLN(i-1) in one cycle of the same cylinder is calculated based on the following equation:

$$DLN(i-1) = DN(i-1)j-DN(i-1)$$

Here, DN(i-1)j expresses the generated torque of the same cylinder one cycle (720° crank angle) before for DN(i-1)

Next, at step 2321, whether the amount of fluctuation of the torque DLN(i-1) is positive or not is judged. When DLN(i-1) ≥ 0, step 2323 is jumped to, where the cumulative addition request flag XCDLN(i-1) of the cylinder at which the combustion was performed one time before showing that the amount of fluctuation of the torque DLN(i-1) should be cumulatively added is set (XCDLN(i-1) - "1"). As opposed to this, when DLN(i-1) < 0, step 2322 is proceeded to, where DLN(i-1) is made zero, then step 2323 is proceeded to. Note that, the torque of each cylinder repeatedly rises and falls. In this case, to find the amount of fluctuation of the torque, it is sufficient to cumulatively add either of the amount of increase of the torque or the amount of decrease of the torque. In the routine shown in Fig. 47 to Fig. 49, only the amount of decrease of the torque is cumulatively added. Therefore, as explained above, when DLN(i-1) < 0, DLN(i-1) is made zero.

Next, the routine for calculating the ratios KTa(i) and KTb(i) will be explained referring to Fig. 50 and Fig. 51.

Referring to Fig. 50 and Fig. 51, first, at step 2401, whether the supply of fuel has been stopped during the deceleration operation or not, that is whether the fuel has been cut or not is judged. When the fuel has not been cut, step 2415 is proceeded to, where the cumulative values $\Sigma Ta(i)$ and $\Sigma Tb(i)$ of the elapsed times $Ta(i)$ and $Tb(i)$ are cleared, then the processing cycle is ended. As opposed to this, when the fuel is cut, step 2402 is proceeded to, where whether the amplitude AMP calculated by the routine for checking permission for calculation of the torque is larger than the setting $B_0$ or not is judged. When AMP > $B_0$, step 2415 is proceeded to, while when AMP $\leq$ $B_0$, step 2403 is proceeded to.

At step 2403 to step 2408, KTa(i) is calculated. That is, at step 2403, 'the corresponding elapsed time $Ta(i)$ for each cylinder is added to the cumulative value $\Sigma Ta(i)$. For example, $Ta(1)$ is added to $\Sigma Ta(1)$ and $Ta(2)$ is added to $\Sigma Ta(2)$. Next, at step 2404, whether the $Ta(i)$ for each cylinder has been cumulatively added n number of times each or not is judged. When not cumulatively added n number of times each, step 2409 is jumped to, while when cumulatively added n number of times, step 2405 is proceeded to. At step 2405, the mean value $Ma(= \{\Sigma Ta(1)+\Sigma Ta(2)+\Sigma Ta(3)+\Sigma Ta(4)\}/4)$ of the cumulative values $\Sigma Ta(i)$ of the cylinders is calculated. Next, at step 2406, the correction value $\alpha(i)$ $(= Ma/\Sigma Ta(i))$ for each cylinder is calculated. Next, at step 2407, the ratio KTa(i) is updated based on the following equation:

$$KTa(i) - KTa(i)+\{\alpha(i)-KTa(i)\}/4$$

In this way, the ratios KTa(1), KTa(2), KTa(3), and KTa(4) for the cylinders are calculated. For example, when $\alpha(1)$ has become larger than the KTa(1) used up to then, one-quarter of the difference between $\alpha(1)$ and KTa(1) $\{\alpha(1)-KTa(1)\}$ is added to KTa(1), so KTa(1) gradually approaches $\alpha(1)$. When the KTa(i) is calculated for each cylinder at step 2407, step 2408 is proceeded to, where the cumulative value $\Sigma Ta(i)$ for each cylinder is cleared.

On the other hand, at step 2409 to step 2415, the KTb(i) for the No. 1 cylinder #1 and the No. 4 cylinder #4 are calculated. That is, at step 2409, whether the Tb(1) of the No. 1 cylinder #1 or the Tb(4) of the No. 4 cylinder #4 has been calculated or not is judged. If the Tb(1) of the No. 1 cylinder #1 or the Tb(4) of the No. 4 cylinder #4 have not been calculated, the processing cycle is ended. As opposed to this, when the Tb(1) of the No. 1 cylinder #1 or the Tb(4) of the No. 4 cylinder #4 has been calculated, step 2410 is proceeded to.

At step 2410, the corresponding elapsed time $Tb(i)$ is added to the cumulative value $\Sigma Tb(i)$ for the No. 1 cylinder #1 or the No. 4 cylinder #4. That is, $Tb(1)$ is added to $\Sigma Tb(1)$, while $Tb(4)$ is added to $\Sigma Tb(4)$. Next, at step 2411, whether $Tb(i)$ has been cumulatively added n number of times or not is judged. When not cumulatively added n number of times each, the processing cycle is ended, while if cumulatively added n number of times, step 2412 is proceeded to. At step 2412, the mean value $Mb(= \{\Sigma Tb(1)+\Sigma Tb(4)\}/2)$ of each cumulative value $\Sigma Tb(i)$ is calculated. Next, at step 2413, the correction value $\beta(i)$ $(= Mb/\Sigma Tb(i))$ for each of the No. 1 cylinder #1 and No. 4 cylinder #4 is calculated. Next, at step 2414, the ratio KTb(i) is updated based on the following equation:

$$KTb(i) - KTb(i)+\{\beta(i)-KTb(i)\}/4$$

In this way, the ratios KTb(1) and KTb(4) are calculated for the No. 1 cylinder #1 and the No. 4 cylinder #4. For example, if $\beta(1)$ becomes larger than the KTb(1) used up to now, the 1/4 of the difference between $\beta$(1) and KTb(1) $\{\beta(1)-KTb(1)\}/4$ is added to KTb(1) and therefore KTb(1) gradually approaches $\beta(1)$. When the KTb(i) is calculated at step 2414, step 2415 is proceeded to, where the cumulative value $\Sigma Tb(i)$ is cleared.

Next, the processing of the counter CDLNIX will be explained referring to Fig. 52.

Referring to Fig. 52, first, whether the No. 3 cylinder #3 is currently at ATDC 30° or not is judged. When the No. 3 cylinder #3 is not currently at ATDC 30°, the processing cycle is ended, while when the No. 3 cylinder #3 is currently at ATDC 30°, step 2502 is proceeded to. At step 2502, whether the conditions for calculating the torque fluctuation value stand or not is judged. For example, when the conditions for making the air-fuel ratio lean do not stand or the amount of change per unit time $\Delta PM$ of the absolute pressure in the surge tank 3 is more than a setting or the amount of change per unit time $\Delta N$ of the engine speed is more than a setting, it is judged that the conditions for calculating the fluctuation value do not stand, while at other times, it is judged that the conditions for calculating the fluctuation value stand.

When it is judged at step 2502 that the conditions for calculating the fluctuation value stand, step 2508 is proceeded to, where the count value CDLNIX is incremented by exactly 1. The increment action of this count value CDLNIX is performed each time the No. 3 cylinder #3 reaches ATDC 30°, that is, with each 720° crank angle. Next, at step 2509, the average value of the engine speed $N_{AVE}$ and the average value $PM_{AVE}$ of the absolute pressure in the surge tank 3 are calculated in the period from when the increment action of the count value CDLNIX is started to when the count value CDLNIX is cleared.

On the other hand, when it is judged at step 2502 that the conditions for calculating the fluctuation value do not stand, step 2503 is proceeded to, where the count value CDLNIX is cleared. Next, at step 2504, the cumulative value DLNI(i) of the torque fluctuation value DLN(i) for each of the No. 1 cylinder #1 and the No. 4 cylinder #4 is cleared, then at step 2505, the cumulative count value CDLNI(i) for these cylinders is cleared.

Next, at step 2506, the target torque fluctuation value LVLLFB is calculated. Next, at step 2507, the mean torque fluctuation value DLNISM(i) of each of the No. 1 cylinder #1 and No. 4 cylinder #4 is made the target torque fluctuation value LVLLFB calculated from the map of Fig. 22B.

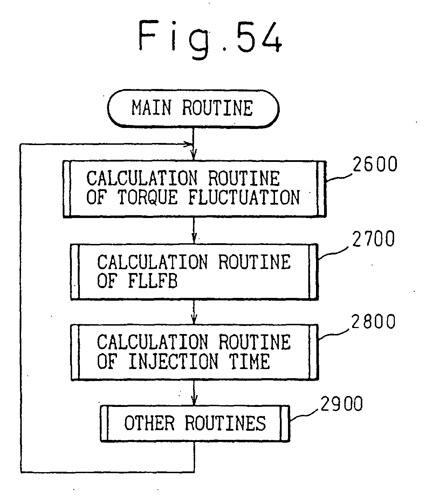

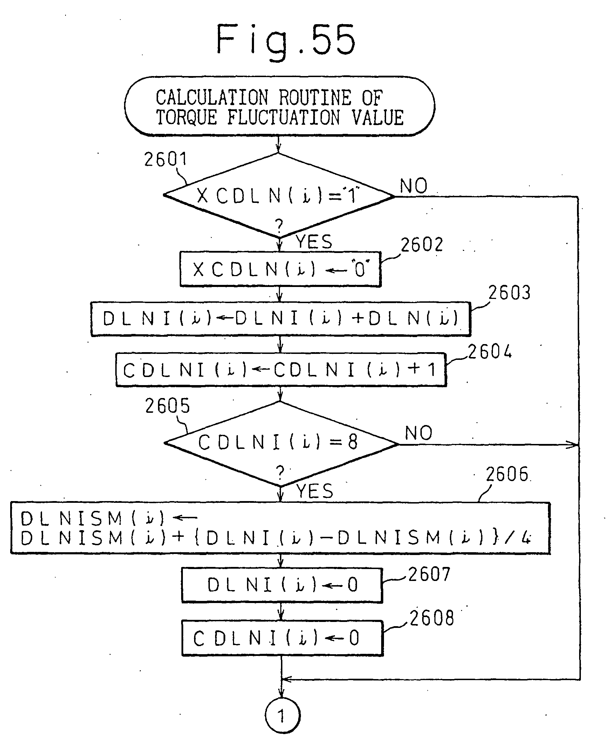

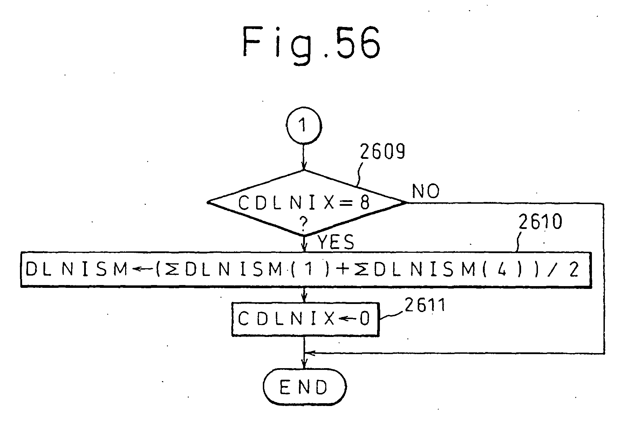

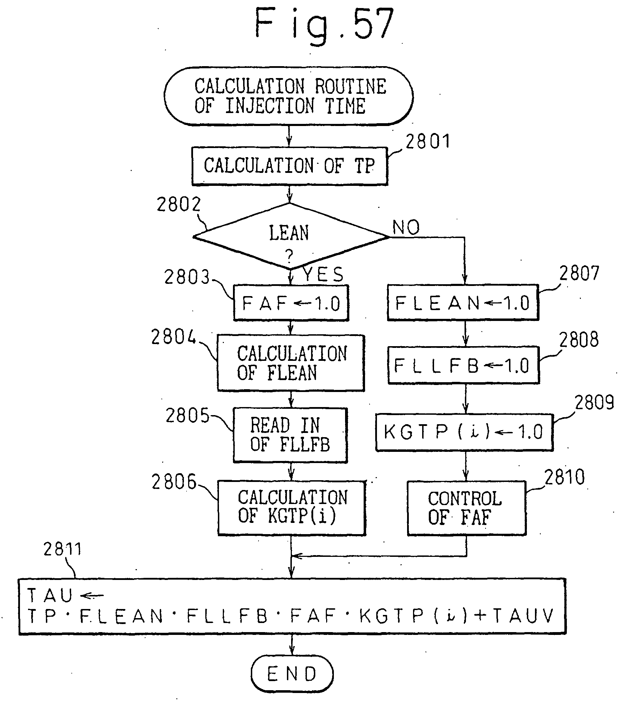

Fig. 54 shows the repeatedly executed main routine. In this main routine, first, the routine (step 2600) for calculation of the torque fluctuation value is executed. This routine is shown in Fig. 55 and Fig. 56. Next, the routine (step 2700) for calculation of the lean limit feedback correction coefficient FLLFB is executed. This routine is shown in the previously explained Fig. 27. Next, when the predetermined crank angle is reached, the routine (step 2800) for calculation of the injection time is executed. This routine is shown in Fig. 57. Next, the other routines (step 2900) are executed.

Next, the routine for calculation of the torque fluctuation value shown in Fig. 55 and Fig. 56 will be explained.

Referring to Fig. 55 and Fig. 56, first, at step 2601, whether the cumulative addition request flag XCDLN(i) showing that the amount of fluctuation of the torque DLN(i) should be cumulatively added is set (XCDLN(i) = "1") or not is judged. When the cumulative addition request flag XCDLN(i) is not set, step 2609 is jumped to, while when the cumulation request flag XCDLN(i) is set, step 2602 is proceeded to. At step 2602, the cumulative addition request flag XCDLN(i) is reset. Next, at step 2603, the amount of fluctuation of the torque DLN(i) is added to the cumulative value DLNI(i) of the amount of fluctuation of the torque. Next, at step 2604, the cumulative count value CDLNI(i) is incremented by exactly 1. That is, for example, assuming that at step 2601 the cumulative addition request flag XCDLN(1) is set for the No. 1 cylinder, at step 2602, this flag XCDLN(1) is reset, at step 2603, the amount of fluctuation of the torque cumulative value DLNI(1) is calculated, and at step 2604 the cumulative count value CDLNI (1) is incremented by exactly 1.

Next, at step 2605, whether the cumulative count value CDLNI(i) has become "8" or not is judged. When CDLNI(i) is not "8", step 2609 is jumped to, while when CDLNI(i) becomes "8", step 2606 is proceeded to, where the mean torque fluctuation value DLNISM(i) of the cylinders is calculated from the following equation:

$$DLNISM(i) = DLNISM(i)+\{DLNI(i)-DLNISM(i)\}/4$$

Next, at step 2607, the cumulative value DLNI (i) of the amount of fluctuation of the torque for No. 1 cylinder #1 or the No. 4 cylinder #4 is cleared, then, at step 2608, the cumulative count value CDLNI(i) is reset.

That is, if there is a difference between the calculated amount of fluctuation of the torque cumulative value DLNI(i) and the previously used amount of fluctuation of the torque DLNISM(i), the value of this difference $\{DLNI(i)-DLNISM(i)\}$ multiplied by 1/4 is added to the amount of fluctuation of the torque DLNISM(i). Therefore, for example, when the cumulative count value CDLNI(1) for the No. 1 cylinder #1 becomes "8", at step 2606, the torque fluctuation value DLNISM(1) is calculated.

Next, at step 2609, whether the count value CDLNIX calculated in the routine shown in Fig. 52 has become "8" or not is judged. When CDLNIX is not "8", the processing cycle is ended, while when CDLNIX becomes "8", step 2610 is proceeded to, where the mean value of the torque fluctuation value DLNISM(i) of the No. 1 cylinder #1 and the No. 4 cylinder #4, that is, the mean torque fluctuation value DLNISM (= {DLNISM(1) +DLNISM(4)}/2), is calculated. Next, at step 2611, the count value CDLNIX is cleared. In this way, the value DLNISM showing the amount of fluctuation of the torque of the engine is calculated.

Note that, as explained above, if the count value CDLNIX is increased by exactly 1 every 720° crank angle and the calculation of the torque for both of the No. 1 cylinder #1 and No. 4 cylinder #4 is not prohibited, when the count value CDLNIX has become "8", the cumulative count values CDLNI(1) and the CDLNI(4) for these cylinders will already be "8". Therefore, in this case, the torque fluctuation value DLNISM(i) for these cylinders is calculated. On the other hand, for example, if calculation of the torque for the No. 1 cylinder #1 is prohibited, when the count value CDLNIX has become "8", the cumulative count value CDLNI(1) for the No. 1 cylinder #1 will not become "8", therefore the new amount of fluctuation of the torque cumulative value DLNI (1) for the No. 1 cylinder #1 is not calculated. Therefore, in this case, when finding the mean torque fluctuation value DLNISM at step 2610, the previously calculated torque fluctuation value DLNISM(1) is used for just the No. 1 cylinder #1.

Next, the routine for calculation of the fuel injection time will be explained referring to Fig. 57.

Referring to Fig. 57, first, at step 2801, the basic fuel injection time TP is calculated from the map shown in Fig. 2. Next, at step 2802, whether the operating state is one where a lean operation should be performed or not is judged. When the operating state is one where a lean operation should be performed, step 2803 is proceeded to, where the value of the stoichiometric air-fuel ratio feedback correction coefficient FAF is fixed at 1.0. Next, at step 2804, the lean correction coefficient FLEAN is calculated from the map shown in Fig. 4, then at step 2805, the lean limit feedback correction coefficient FLLFB is read from the map shown in Fig. 5. Next, at step 2806,'the intercylinder correction coefficient KGTP(i) is calculated. Next, at step 2811, the fuel injection time TAU is calculated based on the following equation:

$$TAU = TP \cdot FLEAN \cdot FLLFB \cdot FAF \cdot KGTP(i) + TAUV$$

As opposed to this, when it is judged at step 2802 that the operating state is not one where a lean operation should be performed, that is when the air-fuel ratio should be made the stoichiometric air-fuel ratio, step 2807 is proceeded to, where the lean correction coefficient FLEAN is fixed at 1.0, then, at step 2808, the lean limit feedback correction coefficient FLLFB is fixed at 1.0. Next, at step 2809, the intercylinder correction coefficient KGTP(i) is fixed at 1.0. Next, at step 2810, the stoichiometric air-fuel ratio feedback correction coefficient FAF is controlled based on the output signal of the air-fuel ratio sensor 17 so that the air-fuel ratio becomes the stoichiometric air-fuel ratio. Next, step 2811 is proceeded to, where the fuel injection time TAU is calculated.

As already explained with reference to Fig. 29, Fig. 30A, and Fig. 30B, when the engine is operated, various orders of torsional vibration occur in the crankshaft. Among these, particularly the sixth order of torsional vibration (torsional vibration having 60° crank angle as cycle) has a major impact on the detection of the first angular velocity ωa. Therefore, in the previously explained second embodiment, to prevent the drive force generated in each cylinder and the torque generated in each cylinder from being mistakenly detected, the torque was not detected for some of the cylinders. In the fourth embodiment to be explained below, a method separate from the second embodiment is used to accurately find the drive force generated at each cylinder or the torque generated at each cylinder.

That is, for the generated torque to be accurately found from the first angular velocity ωa and the second angular velocity ωb, the first angular velocity ωa and the second angular velocity ωb must be accurately detected. However, the angular velocity repeatedly fluctuates both when the first angular velocity ωa should be detected and when the second angular velocity ωb should be detected, therefore in the crank angle region where the generated torque can be suitably detected, as the value most accurately expressing each of the first angular velocity ωa and the second angular velocity ωb, a mean value of the angular velocity in a period of a certain length must be used. In this embodiment according to the present invention, the mean value of this angular velocity is calculated from the elapsed time required for the crankshaft to rotate by a predetermined crank angle, therefore, in this embodiment according to the present invention, to find the accurate first angular velocity ωa and second angular velocity ωb, the above-mentioned predetermined crank angle degree must be made a crank angle degree of a certain length.

However, when the predetermined crank angle degree for detecting the angular velocity is made a crank angle degree of a certain length in this way, a separate problem sometimes occurs.

For example, if the crank angle range for detecting an angular velocity is made long, the latter half of the angular range for detecting the first angular velocity ωa ends up overlapping the first half of the region of reduction (Z of Fig. 30B) of the angular velocity ω due to the sixth order of torsional vibration. As a result, this sixth order of torsional vibration causes the first angular velocity ωa to be no longer accurately detectable. To solve this problem, it is possible to shift the crank angle range for detection of the first angular velocity ωa to the compression stroke side so that the region of reduction of the angular velocity ω due to the sixth order of torsional vibration is not overlapped. However, if the crank angle range for detection of the first angular velocity ωa is shifted to the compression stroke side, the first half of the crank angle range ends up overlapping the crank angle region unsuitable as the region for detection of the first angular velocity for detection of the generated torque, therefore it is impossible to detect the accurate generated torque.

Therefore, in the fourth embodiment according to the present invention, the crank angle range for detecting the first angular velocity ωa is set to a crank angle smaller than the crank angle range for detecting the second angular velocity ωb. Explaining this with reference to the specific example used in this embodiment according to the present invention, the crank angle range for detecting the first angular velocity ωa is made the 30° crank angle from 20° before the top dead center of the compression stroke (hereinafter referred to as BTDC) to 10° after the top dead center of the compression stroke (hereinafter referred to as ATDC), while the crank angle range for detecting the second angular velocity ωb is made the 50° crank angle from ATDC 50° to ATDC 100°.

If crank angle range for detecting the first angular velocity ωa is set to a crank angle smaller than the crank angle range for detecting the second angular velocity ωb in this way, the crank angle range for detecting the first angular velocity ωa will not overlap the region of reduction of the angular velocity caused by the sixth order of torsional vibration and further will not overlap the crank angle region unsuitable as the region of detection of the first angular velocity, so the second angular velocity ωb of course and also the first angular velocity ωa can be accurately detected.

Note that, even in cases other than when the sixth order of torsional vibration occurs, there are cases where it is necessary to set the magnitude of the crank angle range for detecting the first angular velocity ωa and the magnitude of the crank angle range for detecting the second angular velocity ωb to different magnitudes so as to accurately detect the first angular velocity ωa and the second angular velocity ωb. For example, when the timing for detection of the second angular velocity ωb and the timing where the crank angle sensor 14 faces the non-tooth portion of the rotor 13 overlap, to accurately detect the second angular velocity ωb, the crank angle range for detecting the second angular velocity ωb is made a crank angle larger than the crank angle range for detecting the first angular velocity ωa.

In the fourth embodiment, the rotor 13 has an outer tooth formed every 10° crank angle on its outer periphery and has some of the outer teeth removed for detection of the top dead center of compression of the No. 1 cylinder for example. The crank angle sensor 14 produces an output pulse every time the output shaft 12 rotates by 10° crank angle except at the portion where the outer teeth have been removed, that is, this non-tooth portion. The output pulse is input to the input port 26.

Next, the method for calculating the drive force generated by each cylinder and the torque generated by each cylinder will be explained using a specific example.

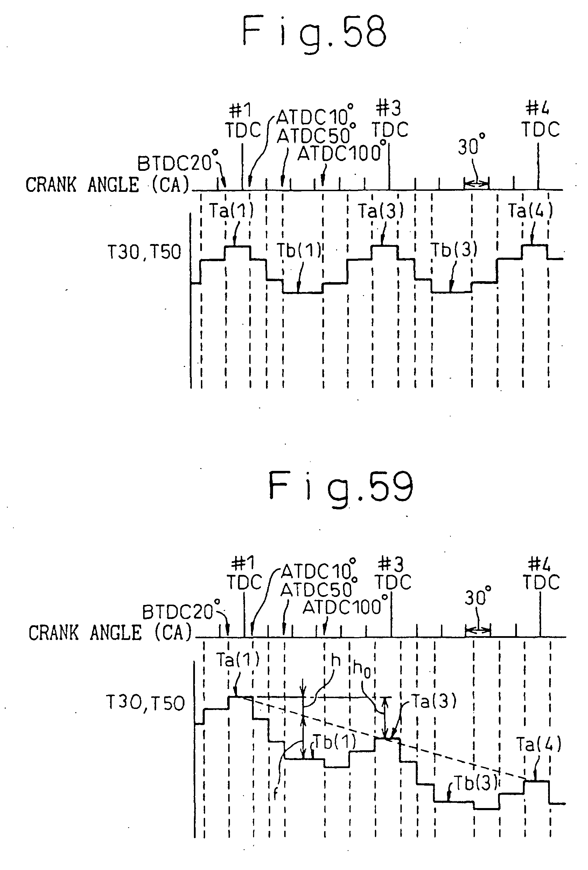

First, the method of calculating the drive force generated by a cylinder and the torque generated by a cylinder will be explained with reference to Fig. 58 showing the steady state operation. As explained above, the crank angle sensor 14 generates an output pulse each time the crankshaft rotates by 10° crank angle. Further, the crank angle sensor 14 is disposed so as to generate an output pulse at the top dead center of the compression stroke (hereinafter referred to as TDC) of the cylinders #1, #2, #3, and #4. Therefore, the crank angle sensor 14 generates an output pulse with each 10° crank angle giving the TDC of the cylinders #1, #2, #3, and #4. Note that, the ignition sequence of the internal combustion engine used in the present invention is 1-3-4-2.

The solid line of Fig. 58 shows the elapsed time when converting the time required for the crankshaft to rotate in each crank angle range divided by the broken lines to the time required for the crankshaft to rotate 30° crank angle. That is, in Fig. 58; Ta(i) shows the elapsed time T30 of the 30° crank angle from BTDC 20° to ATDC 10° of the No. 1 cylinder. As opposed to this, Tb(i) shows the time for conversion of the elapsed time T50 of the 50° crank angle from ATDC 50° to ATDC 100° of the No. 1 cylinder to the elapsed time of 30° crank angle, that is, three-fifths of the elapsed time T50 of 50° crank angle. Therefore, for example, Ta(1) shows the elapsed time from BTDC 20° to ATDC 10° of the No. 1 cylinder and Tb(1) shows three-fifths of the elapsed time from ATDC 50° to ATDC 100° of the No. 1 cylinder. On the other hand, if each crank angle degree divided by the broken lines is divided by the elapsed time, the result of the division expresses the angular velocity ω. In the fourth embodiment, 30° crank angle/Ta(i) is called the first angular velocity ωa of the No. 1 cylinder, while 30° crank angle/Tb(i) is called the second angular velocity ωb of the No. 1 cylinder.

Note that the change in the elapsed time shown in Fig. 58 differs somewhat by engine, therefore the crank angle range for detecting the first angular velocity ωa and the crank angle range for detecting the second angular velocity ωb are determined so that in accordance with the engine (ωb-ωa) best expresses the drive force generated by the engine or (ωb²-ωa²) best expresses the torque generated by the engine. Therefore, depending on the engine, the angular range for detecting the first angular velocity ωa may be from before top dead center of the compression stroke BTDC 25° to ATDC 5° and the crank angle range for detecting the second angular velocity ωb may be ATDC 45° to ATDC 95°.

Fig. 59 shows in an enlarged manner the portion where the elapsed time Ta(i) successively calculated for each cylinder when the engine drive system experiences torsional vibration decreases. As shown in Fig. 59, the elapsed time Ta(i) decreases between Ta(1) and Ta(3) by exactly the time ho. The decrease in this time ho may be considered to be due to the increase in the amount of torsion due to the torsional vibration. In this case, the amount of decrease of the elapsed time due to the torsional vibration between the time Ta(1) and Ta(3) may be considered to increase substantially linearly along with the elapse of time. Therefore, this amount of decrease of the elapsed time due to the torsional vibration is expressed by the difference between the broken line connecting Ta(1) and Ta(3) and the horizontal line passing through Ta(1). Therefore, the torsional vibration causes the elapsed time to decrease by exactly h between Ta(1) and Tb(1).

Therefore, in the fourth embodiment as well, h is added or subtracted to find the elapsed time Tb'(1) decreased by the combustion pressure.

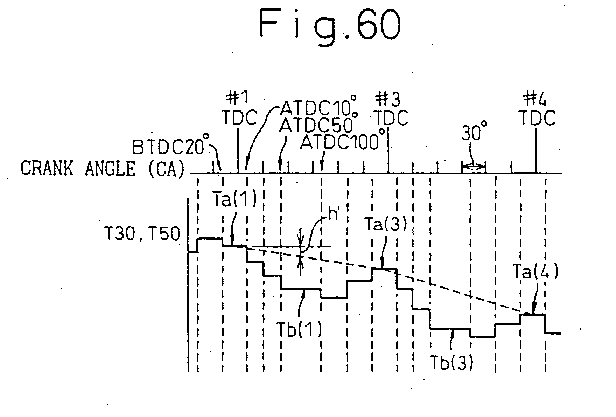

Fig. 60 shows the case where the space between the outer tooth of the rotor 13 showing BTDC 20° of the No. 1 cylinder #1 and the outer tooth of the rotor 13 showing ATDC 10° is smaller than the space between other outer teeth. In this case, as will be understood from a comparison of Fig. 8 and Fig. 9, the elapsed time Ta(1) ends up becoming smaller than the correct elapsed time for 30° crank angle. Further, at this time, as will be understood from a comparison of Fig. 8 and Fig. 9, the amount of decrease of the elapsed time due to the torsional vibration h' becomes smaller than the correct amount of decrease h, therefore the value of Tb' (1) expressing only the elapsed time decreased by the combustion pressure also becomes smaller than the correct value.

Therefore, in the fourth embodiment as well, at the time of a deceleration operation when the engine drive system does not experience torsional vibration, when the supply of fuel has been stopped, the ratio KTa (i) (= Ta(i)m/Ta(i)) of the mean value Ta(i)m of the elapsed times Ta(i) of all of the cylinders and the mean value Tb(i)m of the elapsed time Ta(i) of each cylinder and the ratio KTb(i) (= Tb(i) m/Tb(i)) of the elapsed times Tb(i) of all of the cylinders and the elapsed time Tb(i) of each cylinder are found, while when the fuel is being supplied, the actually detected elapsed time Ta(i) for each cylinder is multiplied by the ratio KTa(i) to find the final elapsed time Ta(i) for each cylinder, while the actually detected elapsed time Tb(i) for each cylinder is multiplied by the ratio KTb(i) to find the final elapsed time Tb(i) for each cylinder.

On the other hand, as already explained with reference to Fig. 10, the Ta(i) for each cylinder fluctuates when the vehicle is driving over a bumpy road. In this case, as explained above, Therefore, for example, as explained above, if the value of the amount of decrease h with respect to Tb(1) of the No. 1 cylinder #1 is found from the inclination of the broken line connecting Ta(1) and Ta(3) ,the value of this amount of decrease h is calculated considerably larger than even the actual value. As a result, Tb'(1) no longer shows the correct value , therefore the drive force and the torque generated by the cylinder can no longer be accurately detected. When the amplitude AMP becomes large, the same occurs at the cylinder giving the smallest Ta(i).

Further, at the cylinder where Ta(i) changes sharply from the Ta(i) of the cylinder at which the combustion was performed one time before, the value of h deviates from the actual value, therefore the drive force and the torque generated by the cylinder can no longer be accurately detected. Therefore, in the fourth embodiment as well, when the amplitude AMP is large, the drive force or the torque for the cylinder at which Ta(i) becomes maximum or minimum is not found and further the drive force or the torque for the cylinder where Ta(i) changed sharply with respect to the Ta(i) of the cylinder where combustion was performed one time before is made not to be found.

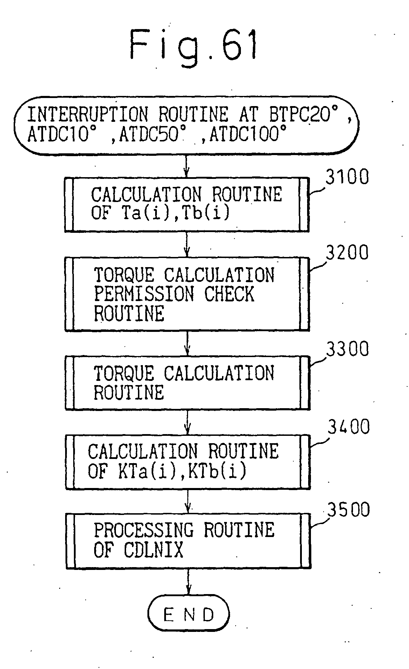

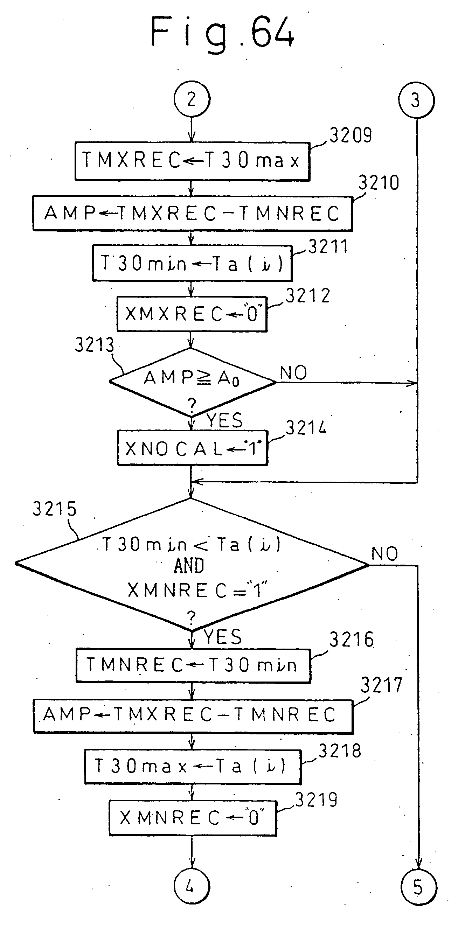

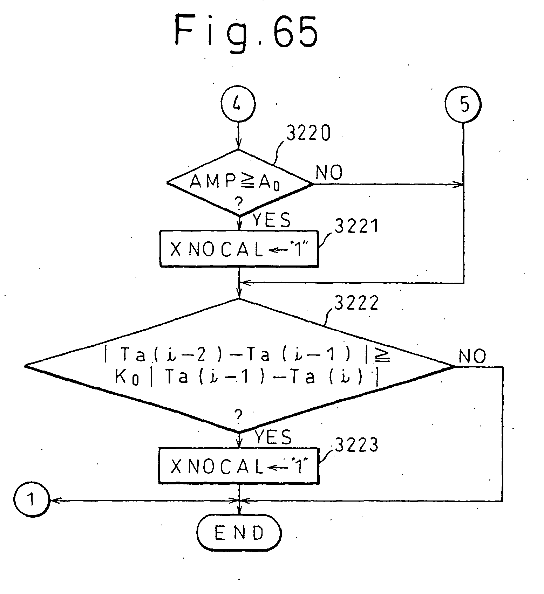

Next, the routine for finding the torque generate at each cylinder will be explained referring to Fig. 61 to Fig. 66.

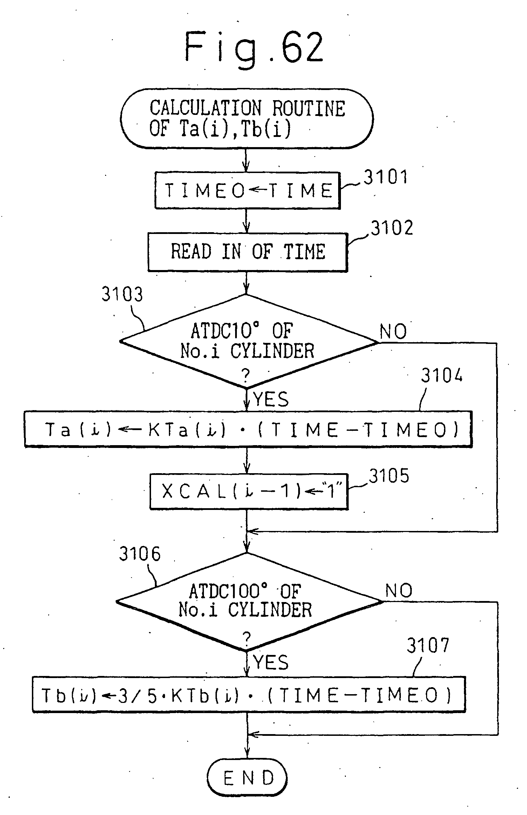

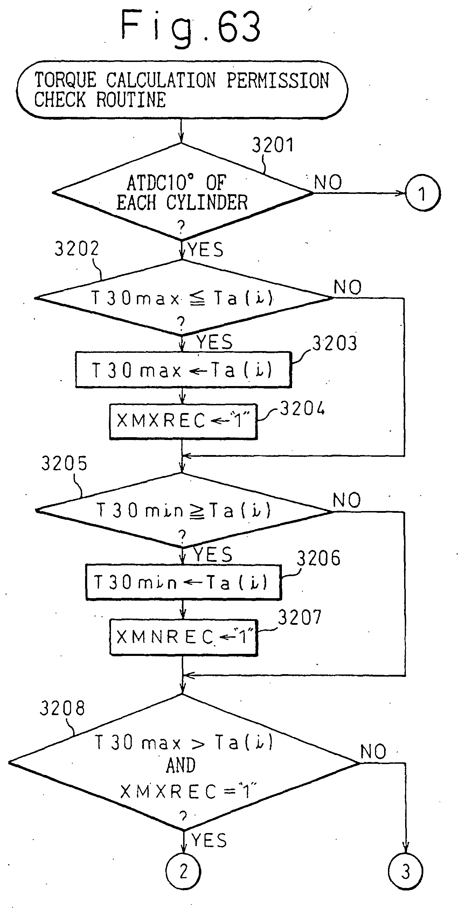

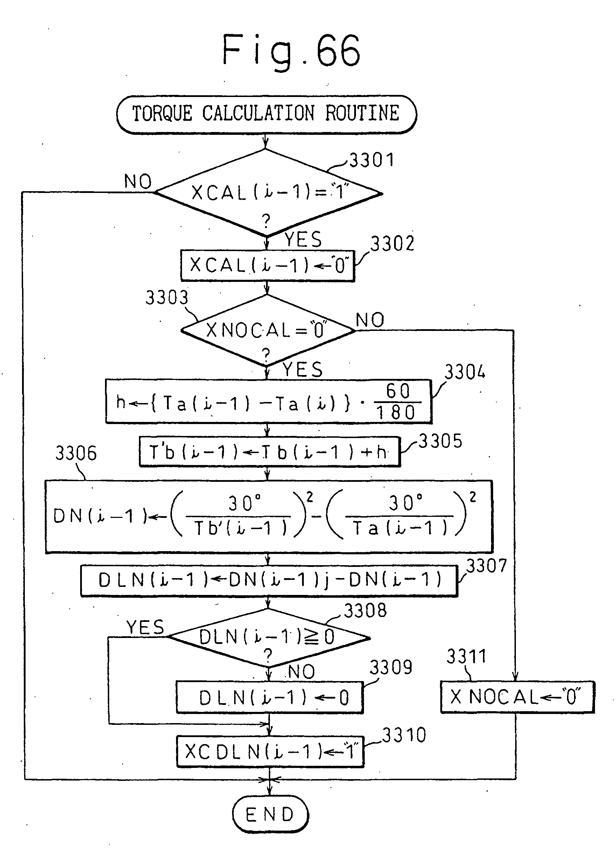

Fig. 61 shows the interruption routine performed at BTDC 20°, ATDC 10°, ATDC 50°, and ATDC 100°. Referring to Fig. 61, first the routine (step 3100) for calculating the elapsed times Ta(i) and Tb(i) is proceeded to. This routine is shown in Fig.62. Next, the routine (step 3200) for checking whether calculation of the torque is permitted or not is proceeded to. This routine is shown in Fig. 63 to Fig. 65. Next, the routine for calculating the torque (step 3300) is proceeded to. This routine is shown in Fig. 66. Next, the routine for calculating the ratios KTa(i) and KTb(i) (step 3400) is proceeded to. This routine is shown in the previously explained Fig.18 and Fig. 19. Next, the processing routine (step 3500) of the counter CDLNIX used for calculation of the torque fluctuation value is proceeded to. This routine is shown in the previously explained Fig. 20.

Referring to Fig. 62 showing the routine for calculation of the elapsed times Ta(i) and Tb(i), first, at step 3101, the time is made the TIME0. The electronic control unit 20 is provided with a free run counter for counting the time. The time is calculated from the count value of this free run counter. Next, at step 3102, the current time is fetched. Therefore, the TIME0 of step 3101 comes to express the time when the previous interruption was performed, that is, BTDC 20°, ATDC 10°, ATDC 50°, or ATDC 100°.

Next, at step 3103, whether the No. 1 cylinder is currently at ATDC 10° or not is judged .When the No. 1 cylinder is not currently at ATDC 10°, step 3106 is jumped to, where whether the No. 1 cylinder is currently at ATDC 100° or not is judged .When the No. 1 cylinder is not currently at ATDC 100°, the routine for calculation of the elapsed time sTa(i) and Tb(i) is ended.

As opposed to this, when it is judged at step 3103 that the No. 1 cylinder is currently at ATDC 10°, step 3104 is proceeded to, where the final elapsed time Ta(i) from BTDC 20° to ATDC 10° of the No. 1 cylinder is calculated from the following equation:

$$Ta(i) = KTa(i) \cdot (TIME-TIME0)$$

Here, TIME0 shows the time at BTDC 20°.

That is, for example, if the No. 1 cylinder #1 is currently at ATDC 10°, the final elapsed time Ta(1) from BTDC 20° to ATDC 10° of the No. 1 cylinder #1 is calculated from KTa(1)·(TIME-TIME0). Here, (TIME-TIME0) expresses the elapsed time Ta(1) of 30° crank angle actually measured by the crank angle sensor 14 and KTa(1) is a ratio for correction of the error due to the space between the outer teeth of the rotor 13 therefore the final elapsed time Ta(1) obtained by multiplying (TIME-TIME0) with KTa(1) accurately expresses the elapsed time when the crankshaft rotates 30° crank angle.

Next, at step 3105, the flag XCAL(i-1) of the No. (i-1) cylinder where combustion had been performed one time before showing that the generated torque should be calculated is set (XCAL (i-1) - "1"). In this embodiment according to the present invention, as explained above, the ignition sequence is 1-3-4-2, so if the No. 1 cylinder #1 currently is at ATDC 10°, the flag XCAL(2) of the No. 2 cylinder #2 where combustion was performed one time before showing that the generated torque should be calculated is set. In the same way, if the final elapsed time Ta(3) is calculated as shown in Fig. 21, the flag XCAL(1) is set, if the final elapsed time Ta(4) is calculated, the flag XCAL(3) is set, and if the final elapsed time Ta(2) is calculated, the flag XCAL(4) is set.

On the other hand, when it is judged at step 3106 that the No. 1 cylinder is currently at ATDC 100°, step 3107 is proceeded to, where the final elapsed time Tb(i) obtained by converting the elapsed time of 50° crank angle from the ATDC 50° to ATDC 100° of the No. 1 cylinder to the elapsed time of 30° crank angle is calculated based on the following equation:

$$Tb(i) = 3/5.KTb(i)\cdot(TIME-TIME0)$$

Here, TIME0 expresses the time at ATDC 50°.

That is, for example, when the No. 1 cylinder is currently at ATDC 100°, the final elapsed time Tb(1) of the No. 1 cylinder #1 is calculated from $3/5\cdot KTb(1)\cdot$ (TIME-TIMEO). Here, (TIME-TIME0) shows the elapsed time of the 50° crank angle actually measured by the crank angle sensor 14, and KTb(1) is the ratio for correction of the error due to the spaces between the outer teeth of the rotor 13. Therefore, the final elapsed time Tb(1) obtained by multiplying the (TIME-TIME0) by 3/5 and KTb(1) accurately expresses the elapsed time while rotating by 30° crank angle.

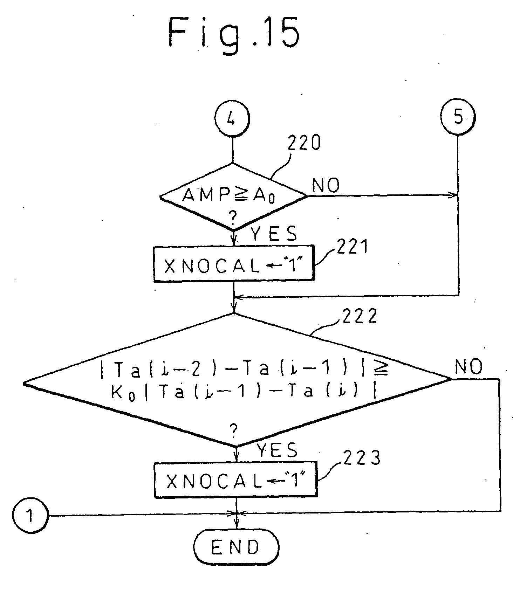

Next, the routine for checking permission for calculation of the torque shown in Fig. 63 to Fig. 65 will be explained. This routine is provided for prohibiting the calculation of the torque for a specific cylinder when the amplitude AMP of the fluctuation of Ta(i) (Fig. 10) becomes larger due to the vehicle traveling over a bumpy road. Referring to Fig. 63, first, at step 3201, whether one of the cylinders is currently at ATDC 10° or not is judged. When none of the cylinders is currently at ATDC 10°, the processing cycle is ended, while when one of the cylinders is currently at ATDC 10°, step 3202 is proceeded to. The routine from step 3202 to step 3223 is the same as the routine from step 202 to step 223 shown in Fig. 15, therefore the explanation of the routine from step 3202 to step 3223 will be omitted.

Next, the torque calculation routine shown in Fig. 66 will be explained. Referring to Fig. 66, first, at step 3301, whether the flag XCAL(i-1) of the No. (i-1) cylinder where combustion had been performed one time before showing that the generated torque should be calculated is set or not is judged. When the flag XCAL(i-1) = "0", that is, when the flag XCAL(i-1) is not set, the processing cycle is ended. As opposed to this, when the flag XCAL(i-1) = "1", that is, the flag XCAL(i-1) is set, step 3302 is proceeded to, where the flag XCAL(i-1) is reset, then step 3303 is proceeded to.

At step 3303, whether the prohibition flag XNOCAL prohibiting the calculation of the torque for the cylinder at which the combustion was performed one time before is reset (XNOCAL = "0") or not is judged. When this prohibition flag is set (XNOCAL = "1"), step 3310 is proceeded to, where the prohibition flag XNOCAL is reset. As opposed to this, when the prohibition flag is reset, step 3304 is proceeded to. That is, step 3304 is proceeded to only when the flag XCAL is set and the prohibition flag XNOCAL is reset.

At step 3304, the amount of fluctuation h of the elapsed time (Fig. 59) based on the torsional vibration of the engine drive system is calculated based on the following equation:

$$h = \{Ta(i-1)-Ta(i)\}\cdot80/180$$

That is, as will be understood from Fig. 59, the amount of fluctuation h of the elapsed time becomes four-ninths of ho (= Ta(i-1)-Ta(i)). Next, at step 305, Tb' (i-1) expressing just the elapsed time decreased due to the combustion pressure is calculated based on the following equation:

$$Tb'(i-1) = Tb(i-1)+h$$

That is, when finding Tb'(1) for the No. 1 cylinder #1, h = {Ta(1)-Ta(3)}·80/180 and Tb'(1) = Tb(1)+h. Further, when finding Tb'(3) for the No. 3 cylinder #3, h = {Ta(3)-Ta(4)}·80/180 and Tb'(3) = Tb(3)+h.

Next, at step 3306, the generated torque DN(i-1) of the cylinder at which the combustion was performed one time before is calculated based on the following equation:

$$DN(i-1) = \omega b^2-\omega a^2 = (30°/Tb'(i-1))^2-(30°/Ta(i-1))^2$$

This generated torque DN(i-1) expresses the torque after elimination of the effect of the torsional vibration of the engine drive system and the effect of the fluctuation in the spaces between the outer teeth of the rotor 13, therefore this generated torque DN(i-1) expresses the true torque generated due to the combustion pressure.

Note that, when finding the drive force GN(i-1) generated by the cylinder, this drive force GN(i-1) may be calculated based on the following equation:

$$GN(i-1) = (30°/Tb'(i-1))-(30°/Ta(i-1))$$

At step 3306, the generated torque DN(i-1) is calculated, then step 3307 is proceeded to, where the amount of fluctuation of the torque DLN(i-1) due to one cycle of the same cylinder is calculated based on the following equation:

$$DLN(i-1) = DN(i-1)j-DN(i-1)$$

Here, DN(i-1)j expresses the generated torque of the same cylinder one cycle (720° crank angle) before for DN(i-1).

Next, at step 3308, whether the amount of fluctuation of the torque DLN(i-1) is positive or not is judged. When DLN(i-1) ≥ 0, step 3310 is jumped to, where the cumulative addition request flag XCDLN(i-1) of the cylinder at which the combustion was performed one time before showing that the amount of fluctuation of the torque DLN(i-1) should be cumulatively added is set (XCDLN(i-1) - "1"). As opposed to this, when DLN(i-1) < 0, step 3309 is proceeded to, where the DLN(i-1) is made 0, then step 3310 is proceeded to. Note that, the torque of each cylinder repeatedly rises and falls. In this case, to find the amount of fluctuation of the torque, it is sufficient to cumulatively add either of the amount of increase of the torque or the amount of decrease of the torque. In the routine shown in Fig. 66, only the amount of decrease of the torque is cumulatively added, therefore, as explained above, when DLN(i-1) < 0, DLN(i-1) is made 0.

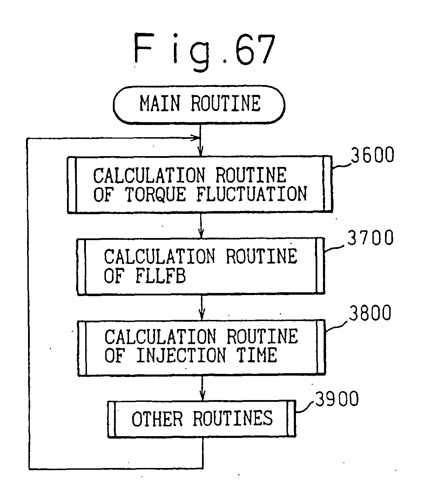

Fig. 67 shows the repeatedly executed main routine. In this main routine, first, the routine (step 3600) for calculation of the torque fluctuation value is executed. This routine is shown in the previously explained Fig. 25 and Fig. 26. Next, the routine (step 3700) for calculation of the lean limit feedback correction coefficient FLLFB is executed. This routine is shown in the previously explained Fig. 27. Next, when the predetermined crank angle is reached, the injection time calculation routine (step 3800) is executed. This routine is shown in the previously explained Fig. 28. Next, the other routines (step 3900) are executed.

**Claims**

1. A method of detecting a parameter representing the drive output from a cylinder in an internal combustion engine, comprising the steps of:

   setting a first crank angle range in a crank angle region from the end of a compression stroke to the beginning of an expansion stroke,
   setting a second crank angle range in a crank angle region in the middle of the expansion stroke a predetermined crank angle away from the first crank angle range,
   detecting a first angular velocity of the crankshaft in the first crank angle range,
   detecting a second angular velocity of the crankshaft in the second crank angle range,
   finding the amount of change of the angular velocity between cylinders from the difference of the first angular velocity of a cylinder previously performing combustion and the first angular velocity of a cylinder next performing combustion,
   correcting the second angular velocity of the cylinder previously performing the combustion in the direction of decrease when the amount of change of the angular velocity between cylinders has increased,
   correcting the second angular velocity of the cylinder previously performing the combustion in the direction of increase when the amount of change of the angular velocity between cylinders has decreased, and finding said parameter representing the drive output generated from a corresponding cylinder based on the first angular velocity and the corrected second angular velocity.

2. A method of detection as set forth in claim 1, wherein a predetermined ratio of the amount of change of the angular velocity between cylinders is made an amount of correction of said second angular velocity in a lower direction and higher direction.

3. A method of detection as set forth in claim 2, wherein said predetermined ratio is a ratio of the crank angles of the first crank angle range and the second crank angle range with respect to the crank angle between two consecutive expansion strokes.

4. A method of detection as set forth in claim 1, further having the steps of

   finding for each cylinder a first ratio between a mean value of the first angular velocities of all of the cylinders and the first angular velocity of each cylinder when the supply of fuel has stopped during engine operation,
   finding for each cylinder a second ratio between a mean value of the second angular velocities of all of the cylinders and the second angular velocity of each cylinder when the supply of fuel has stopped during engine operation,
   correcting the first angular velocity of each cylinder by the corresponding first ratio and correcting the second angular velocity of each cylinder by the corresponding second ratio when fuel is being supplied in the engine operation.

5. A method of detection as set forth in claim 1, wherein the step of finding said parameter representing the drive output comprises finding a difference of squares between a square of said first angular velocity and a square of said corrected second angular velocity, and wherein said parameter represents the generated torque expressed by said difference of squares.

6. A method of detection as set forth in claim 5, further having the step of calculating the amount of torque fluctuation of each cylinder from the fluctuation of the torque generated at each cylinder.

7. A method of detection as set forth in claim 6, wherein the amount of torque fluctuation of each cylinder is expressed by the difference between the torque generated when the previous combustion was performed and the torque generated when the next combustion is performed.

8. A method of detection as set forth in claim 6, further having the steps of

   finding the cumulative value of the amount of torque fluctuation by cumulatively adding successively calculated amounts of torque fluctuation for each cylinder exactly a predetermined number of times,

finding a representative value of the amount of torque fluctuation for each cylinder based on said cumulative value of the amount of torque fluctuation and

finding the mean amount of torque fluctuation for all cylinders, which is the mean value of the representative values of the cylinders.

9. A method of detection as set forth in claim 8, wherein when a difference occurs between a current representative value and the calculated cumulative value of the amount of torque fluctuation, the representative value is updated so as to approach the calculated cumulative value of the amount of torque fluctuation.

10. A method of detection as set forth in claim 6, wherein the angular velocity is detected based on an output signal of a crank angle sensor disposed to face the teeth of a rotor connected to the crankshaft and having non-tooth portions, the generated torque is calculated for cylinders other than cylinders where the crank angle sensor faces the non-tooth portion when detecting the angular velocity, and the amount of torque fluctuation is calculated based on the calculated generated torque.

11. A method of detection as set forth in claim 6, wherein an amplitude of the fluctuation of the successively found first angular velocities is found and, when the amplitude becomes larger than a predetermined amplitude, the fluctuations of the generated torques of the cylinders where the first angular velocities were largest and smallest are prohibited from being used for calculation of the amount of torque fluctuation.

12. A method of detection as set forth in claim 6, wherein when the difference between the first angular velocity of a cylinder where combustion had previously been performed and the first angular velocity of a cylinder where combustion is next performed becomes larger than a difference between the first angular velocity of the cylinder where combustion is next performed and the first angular velocity of a cylinder where combustion is performed after that, the use of the fluctuation of the generated torque of the cylinder where the combustion had been performed second is prohibited from being used for calculation of the amount of torque fluctuation.

13. A method of detection as set forth in claim 1, wherein when an amplitude of a torsional vibration of the crankshaft accompanying an increase in the engine speed increases, calculation of the parameter representing the drive output is prohibited for the cylinder at the crankshaft position where the amplitude of the torsional vibration becomes larger.

14. A method of detection as set forth in claim 13, wherein calculation of the parameter related to the drive output is prohibited for the cylinder at the crankshaft position where the amplitude of the torsional vibration becomes larger along with an increase of the engine speed.

15. A method of detection as set forth in claim 14, where calculation of the parameter related to the drive output is prohibited in the order from the cylinder positioned at the opposite side to a flywheel attached to the crankshaft.

16. A method of detection as set forth in claim 1, further having the steps of
detecting a difference of angular velocity obtained by subtracting from the first angular velocity the second angular velocity when the supply of fuel is stopped and
correcting the second angular velocity by adding said difference of angular velocity to the second angular velocity when the fuel is being supplied.

17. A method of detection as set forth in claim 16, wherein the difference of angular velocity is calculated for every predetermined engine speed region when the supply of fuel is stopped and the second angular velocity is corrected based on the difference of angular velocity detected for the engine speed region corresponding to the engine speed when the fuel is supplied at that time.

18. A method of detection as set forth in claim 16, further having the step of calculating a mean value of the difference of angular velocity when the supply of fuel is stopped and wherein when the fuel is being supplied, the difference of angular speed to be added to the second angular velocity is corrected so as to approach the mean value of the difference of angular velocity.

19. A method of detection as set forth in claim 1, wherein said first crank angle range is set to a crank angle range of a size different from the second crank angle range.

20. A method of detection as set forth in claim 19, wherein said first crank angle range is narrower than said second crank angle range.

21. A method of detection as set forth in claim 19, wherein said first crank angle range extends from a crank angle before top dead centre of the compression stroke to a crank angle after top dead centre of the compression stroke.

**Patentansprüche**

1.  Verfahren zum Erfassen eines Parameters, der die Antriebsleistung eines Zylinders in einem Verbrennungsmotor darstellt, die Schritte umfassend:

    einen ersten Kurbelwinkelbereich in einer Kurbelwinkelzone zwischen dem Ende eines Verdichtungshubs und dem Anfang eines Ausdehnungshubs festzulegen,
    einen zweiten Kurbelwinkelbereich in einer Kurbelwinkelzone in der Mitte des Ausdehnungshubs festzulegen, und zwar einen vorbestimmten Kurbelwinkel vom ersten Kurbelwinkelbereich entfernt,
    eine erste Winkelgeschwindigkeit der Kurbelwelle im ersten Kurbelwinkelbereich zu erfassen,
    eine zweite Winkelgeschwindigkeit der Kurbelwelle im zweiten Kurbelwinkelbereich zu erfassen,
    den Betrag der Veränderung der Winkelgeschwindigkeit zwischen Zylindern aus dem Unterschied zwischen der ersten Winkelgeschwindigkeit eines Zylinders, in dem die Verbrennung vorher erfolgte, und der ersten Winkelgeschwindigkeit eines Zylinders, in dem die Verbrennung als Nächstes erfolgt, zu finden,
    die zweite Winkelgeschwindigkeit des Zylinders, in dem die Verbrennung vorher erfolgte, nach unten zu korrigieren, wenn sich der Betrag der Änderung der Winkelgeschwindigkeit zwischen Zylindern erhöht hat,
    die zweite Winkelgeschwindigkeit des Zylinders, in dem die Verbrennung vorher erfolgte, nach oben zu korrigieren, wenn sich der Betrag der Änderung der Winkelgeschwindigkeit zwischen Zylindern verringert hat, und den benannten, die von einem entsprechenden Zylinder erzeugte Antriebsleistung repräsentierenden Parameter auf der Basis der ersten Winkelgeschwindigkeit und der korrigierten zweiten Winkelgeschwindigkeit zu finden.

2.  Verfahren zum Erfassen, wie in Anspruch 1 dargelegt, worin ein vorbestimmtes Verhältnis des Betrages der Änderung der Winkelgeschwindigkeit zwischen Zylindern zu einem Betrag der Korrektur der benannten zweiten Winkelgeschwindigkeit nach unten und nach oben gemacht wird.

3.  Verfahren zum Erfassen, wie in Anspruch 2 dargelegt, worin das benannte, vorbestimmte Verhältnis das Verhältnis der Kurbelwinkel des ersten Kurbelwinkelbereichs und des zweiten Kurbelwinkelbereichs bezüglich des Kurbelwinkels zwischen zwei aufeinanderfolgenden Ausdehnungshüben ist.

4.  Verfahren zum Erfassen, wie in Anspruch 1 dargelegt, weiter die Schritte umfassend:

    für jeden Zylinder ein erstes Verhältnis zwischen einem Mittelwert der ersten Winkelgeschwindigkeiten aller Zylinder und der ersten Winkelgeschwindigkeit jedes Zylinders zu finden, wenn die Kraftstoffzufuhr beim Motorbetrieb unterbrochen wurde,
    für jeden Zylinder ein zweites Verhältnis zwischen einem Mittelwert der zweiten Winkelgeschwindigkeiten aller Zylinder und der zweiten Winkelgeschwindigkeit jedes Zylinders zu finden, wenn die Kraftstoffzufuhr beim Motorbetrieb unterbrochen wurde,
    die erste Winkelgeschwindigkeit jedes Zylinders mit dem entsprechenden ersten Verhältnis zu korrigieren, und die zweite Winkelgeschwindigkeit jedes Zylinders mit dem entsprechenden zweiten Verhältnis zu korrigieren, wenn Kraftstoff beim Motorbetrieb zugeführt wird.

5.  Verfahren zum Erfassen, wie in Anspruch 1 dargelegt, worin der Schritt, den benannten Parameter zu finden, der die Antriebsleistung repräsentiert, umfasst, eine Differenz der Quadrate zwischen einem Quadrat der benannten ersten Winkelgeschwindigkeit und einem Quadrat der benannten, korrigierten zweiten Winkelgeschwindigkeit zu finden, und worin der benannte Parameter das durch die benannte Differenz der Quadrate ausgedrückte, erzeugte Drehmoment darstellt.

6.  Verfahren zum Erfassen, wie in Anspruch 5 dargelegt, weiter den Schritt umfassend, den Betrag der Schwankung des Drehmoments jedes Zylinders aus der Schwankung des an jedem Zylinder erzeugten Drehmoments zu berechnen.

7.  Verfahren zum Erfassen, wie in Anspruch 6 dargelegt, worin der Betrag der Schwankung des Drehmoments jedes Zylinders durch die Differenz zwischen dem Drehmoment, das erzeugt wurde, als die vorhergehende Verbrennung erfolgte, und dem Drehmoment, das erzeugt wird, wenn die nächste Verbrennung erfolgt, ausgedrückt wird.

8.  Verfahren zum Erfassen, wie in Anspruch 6 dargelegt, weiter die Schritte umfassend:

    den kumulativen Wert des Betrages der Schwankung des Drehmoments dadurch zu finden, dass aufeinanderfolgend berechnete Beträge der Schwankung des Drehmoments für jeden Zylinder genau eine vorbestimmte Anzahl von Malen kumulativ addiert werden,
    einen repräsentativen Wert des Betrages der Schwankung des Drehmoments für jeden Zylinder auf der Basis des benannten kumulativen Wertes des Betrages der Schwankung des Drehmoments zu finden und

den mittleren Betrag der Schwankung des Drehmoments für alle Zylinder zu finden, der der Mittelwert der repräsentativen Werte der Zylinder ist.

9. Verfahren zum Erfassen, wie in Anspruch 8 dargelegt, worin, wenn eine Differenz zwischen einem laufenden repräsentativen Wert und dem berechneten kumulativen Wert des Betrages der Schwankung des Drehmoments auftritt, der repräsentative Wert so aktualisiert wird, dass er sich dem berechneten kumulativen Wert des Betrages der Schwankung des Drehmoments nähert.

10. Verfahren zum Erfassen, wie in Anspruch 6 dargelegt, worin die Winkelgeschwindigkeit auf der Basis eines Ausgangssignals eines Kurbelwinkelfühlers erfasst wird, der den Zähnen eines Läufers zugekehrt ist, der mit der Kurbelwelle verbunden ist und zahnlose Abschnitte besitzt, worin das erzeugte Drehmoment für andere Zylinder als die Zylinder, bei denen der Kurbelwinkelfühler dem zahnlosen Bereich zugekehrt ist, wenn die Winkelgeschwindigkeit erfasst wird, und worin der Betrag der Schwankung des Drehmoments auf der Basis des berechneten erzeugten Drehmoments berechnet wird.

11. Verfahren zum Erfassen, wie in Anspruch 6 dargelegt, worin eine Amplitude der Schwankung von aufeinanderfolgend gefundenen ersten Winkelgeschwindigkeiten gefunden wird und, wenn die Amplitude grösser als eine vorbestimmte Amplitude wird, es verboten ist, die Schwankungen der erzeugten Drehmomente der Zylinder, bei denen die ersten Winkelgeschwindigkeiten am grössten und am kleinsten waren, für eine Berechnung des Betrages der Schwankung des Drehmoments zu verwenden.

12. Verfahren zum Erfassen, wie in Anspruch 6 dargelegt, worin, wenn die Differenz zwischen der ersten Winkelgeschwindigkeit eines Zylinders, in dem Verbrennung vorher erfolgt war, und der ersten Winkelgeschwindigkeit eines Zylinders, in dem Verbrennung als Nächstes erfolgt, grösser wird als eine Differenz zwischen der ersten Winkelgeschwindigkeit des Zylinders, in dem Verbrennung als Nächstes erfolgt, und der Winkelgeschwindigkeit eines Zylinders, in dem Verbrennung danach erfolgt, es verboten ist, die Schwankung des erzeugten Drehmoments des Zylinders, in dem die Verbrennung an zweiter Stelle erfolgte, für die Berechnung des Betrages der Schwankung des Drehmoments zu verwenden.

13. Verfahren zum Erfassen, wie in Anspruch 1 dargelegt, worin, wenn eine Amplitude einer Torsionsschwingung der Kurbelwelle, die einen Anstieg der Motordrehzahl begleitet, zunimmt, eine Berechnung des Parameters, der die Antriebsleistung repräsentiert, für den Zylinder an der Kurbelwellenposition, bei der die Amplitude der Torsionsschwingungen grösser wird, verboten ist.

14. Verfahren zum Erfassen, wie in Anspruch 13 dargelegt, worin eine Berechnung des Parameters, der sich auf die Antriebsleistung bezieht, für den Zylinder an der Kurbelwellenposition verboten ist, bei der die Amplitude der Torsionsschwingungen mit steigender Motordrehzahl grösser wird, verboten ist.

15. Verfahren zum Erfassen, wie in Anspruch 14 dargelegt, worin eine Berechnung des Parameters, der sich auf die Antriebsleistung bezieht, in der Reihenfolge ausgehend von dem Zylinder her verboten wird, der sich auf der gegenüberliegenden Seite eines an der Kurbelwelle angebrachten Schwungrads befindet.

16. Verfahren zum Erfassen, wie in Anspruch 1 dargelegt, weiter die Schritte umfassend,

eine Differenz von Winkelgeschwindigkeiten zu erfassen, die erhalten wird, indem von der ersten Winkelgeschwindigkeit die zweite Winkelgeschwindigkeit subtrahiert wird, wenn die Kraftstoffzufuhr unterbrochen wird, und

die zweite Winkelgeschwindigkeit zu korrigieren, indem die benannte Differenz von Winkelgeschwindigkeiten zur zweiten Winkelgeschwindigkeit addiert wird, wenn Kraftstoffzugeführt wird.

17. Verfahren zum Erfassen, wie in Anspruch 16 dargelegt, worin die Differenz von Winkelgeschwindigkeiten für jeden vorbestimmten Motordrehzahlbereich berechnet wird, wenn die Kraftstoffzufuhr unterbrochen wird und die zweite Winkelgeschwindigkeit auf der Basis der Differenz von Winkelgeschwindigkeiten korrigiert wird, die für den Motordrehzahlbereich erfasst wird, der der Motordrehzahl entspricht, wenn Kraftstoff zu dieser Zeit zugeführt wird.

18. Verfahren zum Erfassen, wie in Anspruch 16 dargelegt, weiter den Schritt umfassend, einen Mittelwert der Differenz von Winkelgeschwindigkeiten zu berechnen, wenn die Kraftstoffzufuhr unterbrochen ist und worin, wenn Kraftstoff zugeführt wird, die zur zweiten Winkelgeschwindigkeit zu addierende Differenz von Winkelgeschwindigkeiten so korrigiert wird, dass sie sich dem Mittelwert der Differenz von Winkelgeschwindigkeiten nähert.

**19.** Verfahren zum Erfassen, wie in Anspruch 1 dargelegt, worin der benannte erste Kurbelwinkelbereich auf einen Kurbelwinkelbereich einer Grösse festgelegt wird, die sich von der des zweiten Kurbelwinkelbereichs unterscheidet.

**20.** Verfahren zum Erfassen, wie in Anspruch 19 dargelegt, worin der benannte erste Kurbelwinkelbereich enger als der benannte zweite Kurbelwinkelbereich ist.

**21.** Verfahren zum Erfassen, wie in Anspruch 19 dargelegt, worin der benannte erste Kurbelwinkelbereich sich von einem Kurbelwinkel vor dem oberen Totpunkt des Verdichtungshubs bis zu einem Kurbelwinkel nach dem oberen Totpunkt des Verdichtungshubs erstreckt.

**Revendications**

**1.** Procédé de détection d'un paramètre représentant la puissance d'entraînement provenant d'un cylindre dans un moteur à combustion interne, comprenant les étapes consistant à :

établir une première plage d'angle de vilebrequin dans une région d'angle de vilebrequin de la fin d'une course de compression au début d'une course de détente,
établir une seconde plage d'angle de vilebrequin dans une région d'angle de vilebrequin au milieu de la course de détente à un angle de vilebrequin prédéterminé à l'écart de la première plage d'angle de vilebrequin,
détecter une première vitesse angulaire du vilebrequin à la première plage d'angle de vilebrequin,
détecter une seconde vitesse angulaire du vilebrequin à la seconde valeur de vilebrequin,
trouver la quantité de variation de la vitesse angulaire entre des cylindres à partir de la différence de la première vitesse angulaire d'un cylindre exécutant précédemment une combustion et de la première vitesse angulaire d'un cylindre exécutant ensuite une combustion,
corriger la seconde vitesse angulaire du cylindre exécutant précédemment la combustion dans le sens d'une diminution lorsque la quantité de variation de la vitesse angulaire entre les cylindres a augmenté,
corriger la seconde vitesse angulaire du cylindre exécutant précédemment la combustion dans le sens d'une augmentation lorsque la quantité de variation de la vitesse angulaire entre les cylindres a diminué, et trouver ledit paramètre représentant la puissance d'entraînement engendrée depuis un cylindre correspondant sur la base de la première vitesse angulaire et de la seconde vitesse angulaire corrigée.

**2.** Procédé de détection selon la revendication 1, dans lequel on attribut à un rapport prédéterminé de la quantité de variation de la vitesse angulaire entre les cylindres une quantité de correction de ladite seconde vitesse angulaire dans une direction inférieure et une direction supérieure.

**3.** Procédé de détection selon la revendication 2, dans lequel ledit rapport prédéterminé est un rapport des angles de vilebrequin de la première plage d'angle de vilebrequin et de la seconde valeur de vilebrequin par rapport à l'angle de vilebrequin entre deux courses de détente consécutives.

**4.** Procédé de détection selon la revendication 1, comprenant en outre les étapes consistant à

trouver pour chaque cylindre un premier rapport entre une valeur moyenne des premières vitesses angulaires de tous les cylindres et la première vitesse angulaire de chaque cylindre lorsque l'alimentation en carburant s'est arrêtée durant le fonctionnement du moteur,
trouver pour chaque cylindre un second rapporte entre une valeur moyenne des secondes vitesses angulaires de tous les cylindres et la seconde vitesse angulaire de chaque cylindre lorsque l'alimentation en carburant s'est arrêtée durant le fonctionnement du moteur,
corriger la première vitesse angulaire de chaque cylindre par le premier rapport correspondant, et corriger la seconde vitesse angulaire de chaque cylindre par le second rapport correspondant lorsque le carburant est fourni au cours du fonctionnement du moteur.

**5.** Procédé de détection selon la revendication 1, dans lequel l'étape consistant à trouver ledit paramètre représentant la puissance d'entraînement comprend l'obtention d'une différence de carrés entre un carré de ladite première vitesse angulaire et un carré de ladite seconde vitesse angulaire corrigée, et dans lequel ledit paramètre représente le couple engendré exprimé par ladite différence de carrés.

**6.** Procédé de détection selon la revendication 5, comprenant en outre l'étape consistant à calculer la quantité de fluctuation de couple de chaque cylindre à partir de la fluctuation du couple engendrée au niveau de chaque cylindre.

**7.** Procédé de détection selon la revendication 6, dans lequel la quantité de fluctuation de couple de chaque cylindre est exprimée par la différence entre le couple engendré lorsque la combustion précédente a été exécutée et le couple engendré lorsque la combustion suivante est exécutée.

8. Procédé de détection selon la revendication 6, comprenant en outre les étapes consistant à

trouver la valeur cumulative de la quantité de fluctuation de couple en ajoutant cumulativement successivement les quantités calculées de fluctuation de couple pour chaque cylindre un nombre exactement prédéterminé de fois,

trouver une valeur représentative de la quantité de fluctuation de couple pur chaque cylindre sur la base de ladite valeur cumulative de la quantité de fluctuation de couple, et

trouver la quantité moyenne de fluctuation de couple pour tous les cylindres, qui est la valeur moyenne des valeurs représentatives des cylindres.

9. Procédé de détection selon la revendication 8, dans lequel lorsqu'une différence apparaît entre une valeur représentative actuelle et la valeur cumulative calculée de la quantité de fluctuation de couple, la valeur représentative est mise à jour de façon à s'approcher de la valeur cumulative calculée de la quantité de fluctuation de couple.

10. Procédé de détection selon la revendication 6, dans lequel la vitesse angulaire est détectée sur la base d'un signal de sortie d'un détecteur d'angle de vilebrequin disposé pour faire face aux dents d'un rotor relié au vilebrequin et comprenant des parties sans dents, le couple engendré est calculé pour des cylindres autres que les cylindres où le détecteur d'angle de vilebrequin est face à la partie sans dents lors de la détection de la vitesse angulaire, et la quantité de fluctuation de couple est calculée sur la base du couple engendré calculé.

11. Procédé de détection selon la revendication 6, dans lequel une amplitude de la fluctuation des premières vitesses angulaires successivement trouvées est trouvée et, lorsque l'amplitude devient plus grande qu'une amplitude prédéterminée, les fluctuations des couples engendrés des cylindres où les premières vitesses angulaires sont les plus grandes et il est interdit d'utiliser les plus petites pour le calcul de la quantité de fluctuation de couple.

12. Procédé de détection selon la revendication 6, dans lequel lorsque la différence entre la première vitesse angulaire d'un cylindre où une combustion a précédemment été exécutée et la première vitesse angulaire d'un cylindre où une combustion est ensuite exécutée devient plus grande qu'une différence entre la première vitesse angulaire du cylindre où une combustion est exécutée ensuite et la première vitesse angulaire d'un cylindre où une combustion est exécutée après cela, l'utilisation de la fluctuation du couple engendré du cylindre où la combustion a été exécutée en deuxième est interdite pour le calcul de la quantité de fluctuation de couple.

13. Procédé de détection selon la revendication 1, dans lequel lorsqu'une amplitude d'une vibration de torsion du vilebrequin accompagnant une augmentation du régime du moteur augmente, le calcul du paramètre représentant la puissance d'entraînement est interdit pour le cylindre au niveau de la position de vilebrequin où l'amplitude de la vibration de torsion augmente.

14. Procédé de détection selon la revendication 13, dans lequel le calcul du paramètre lié à la puissance d'entraînement est interdit pour le cylindre au niveau de la position de vilebrequin où l'amplitude de la vibration de torsion devient plus grande simultanément à une augmentation du régime du moteur.

15. Procédé de détection selon la revendication 14, où le calcul du paramètre lié à la puissance d'entraînement est interdit dans l'ordre depuis le cylindre positionné au niveau du côté opposé à un volant fixé au vilebrequin.

16. Procédé de détection selon la revendication 1, comprenant en outre les étapes consistant à

détecter une différence de vitesse angulaire obtenue en soustrayant de la première vitesse angulaire la seconde vitesse angulaire lorsque la fourniture de carburant est arrêtée, et

corriger la seconde vitesse angulaire en ajoutant ladite différence de vitesse angulaire à la seconde vitesse angulaire lorsque le carburant est fourni.

17. Procédé de détection selon la revendication 16, dans lequel la différence de vitesse angulaire est calculée pour chaque région de régime du moteur prédéterminée lorsque l'alimentation en carburant est arrêtée, et la seconde vitesse angulaire est corrigée sur la base de la différence de vitesse angulaire détectée pour la région de régime du moteur correspondant au régime du moteur lorsque le carburant est fourni à ce moment.

18. Procédé de détection selon la revendication 16, comprenant en outre l'étape consistant à calculer une valeur moyenne de la différence de vitesse angulaire lorsque la fourniture de carburant est arrêtée et dans lequel, lorsque le carburant est fourni, la différence de vitesse angulaire devant être ajoutée à la seconde vitesse angulaire est corrigée de façon à s'approcher de la valeur moyenne de la différence de vitesse angulaire.

**19.** Procédé de détection selon la revendication 1, dans lequel ladite première plage d'angle de vilebrequin est établie à une plage d'angle de vilebrequin d'une taille différente de la seconde plage d'angle de vilebrequin.

**20.** Procédé de détection selon la revendication 19, dans lequel ladite première plage d'angle de vilebrequin est plus étroite que ladite seconde plage d'angle de vilebrequin.

**21.** Procédé de détection selon la revendication 19, dans lequel ladite première plage d'angle de vilebrequin s'étend d'un angle de vilebrequin avant le point mort haut de la course de compression à un angle de vilebrequin après le point mort haut de la course de compression.

EP 0 799 983 B1

# Fig.1

36

# Fig.2

# Fig.3

# Fig.4

PM

$\text{FLEAN}_{11}$   $\text{FLEAN}_{12}$   $\cdots\cdots$   $\text{FLEAN}_{1n}$

$\text{FLEAN}_{21}$

$\vdots$                                   $\vdots$

$\text{FLEAN}_{m1}$        $\cdots\cdots\cdots$        $\text{FLEAN}_{mn}$

N

# Fig.5

PM

| $\text{FLLFB}_{11}$ | $\text{FLLFB}_{21}$ | $\text{FLLFB}_{31}$ |
| $\text{FLLFB}_{12}$ | $\text{FLLFB}_{22}$ | $\text{FLLFB}_{32}$ |
| $\text{FLLFB}_{13}$ | $\text{FLLFB}_{23}$ | $\text{FLLFB}_{33}$ |

N

# Fig.6A

# Fig.6B

# Fig.7

# Fig.8

# Fig.9

# Fig.10

# Fig.11

```
       ┌──────────────────────────────┐
       │ INTERRUPTION ROUTINE EVERY   │
       │ 30° CRANK ANGLE              │
       └──────────────────────────────┘
                     │
                     ▼
       ┌──────────────────────────────┐  100
       │ CALCULATION ROUTINE          │
       │ OF Ta(i),Tb(i)               │
       └──────────────────────────────┘
                     │
                     ▼
       ┌──────────────────────────────┐  200
       │ TORQUE CALCULATION           │
       │ PERMISSION CHECK             │
       │ ROUTINE                      │
       └──────────────────────────────┘
                     │
                     ▼
       ┌──────────────────────────────┐  300
       │ TORQUE CALCULATION           │
       │ ROUTINE                      │
       └──────────────────────────────┘
                     │
                     ▼
       ┌──────────────────────────────┐  400
       │ CALCULATION ROUTINE OF       │
       │ KTa(i),KTb(i)                │
       └──────────────────────────────┘
                     │
                     ▼
       ┌──────────────────────────────┐  500
       │ PROCESSING ROUTINE           │
       │ OF CDLNIX                    │
       └──────────────────────────────┘
                     │
                     ▼
                 ┌───────┐
                 │  END  │
                 └───────┘
```

# Fig.12

CALCULATION ROUTINE
OF Ta(i),Tb(i)

TIMEO←TIME — 101

READ IN OF TIME — 102

103 — ATDC30° OF No.i CYLINDER ? — NO

YES

Ta(i)←KTa(i)·(TIME−TIMEO) — 104

XCAL(i−1)←"1" — 105

106 — ATDC90° OF No.i CYLINDER ? — NO

YES

Tb(i)←KTb(i)·(TIME−TIMEO) — 107

END

# Fig.13

```
        ┌──────────────────────────────────┐
        │ TORQUE CALCULATION PERMISSION     │
        │ CHECK ROUTINE                     │
        └──────────────────────────────────┘
                         │
                         ▼              201
                   ╱──────────╲
                  ╱  ATDC30° OF ╲      NO
                 ╱  EACH CYLINDER ╲───────────▶ ( 1 )
                  ╲      ?       ╱
                   ╲──────────╱
                      │ YES
      202             ▼
                   ╱──────────╲          NO
                  ╱ T30max ≦ Ta(i) ╲──────────┐
                   ╲     ?      ╱              │
                    ╲────────╱                │
                      │ YES                   │
               ┌──────────────┐   203         │
               │ T30max ← Ta(i)│              │
               └──────────────┘               │
                      │                       │
               ┌──────────────┐   204         │
               │ XMXREC ← "1" │               │
               └──────────────┘               │
                      │◀──────────────────────┘
      205             ▼
                   ╱──────────╲          NO
                  ╱ T30min ≧ Ta(i) ╲──────────┐
                   ╲     ?      ╱              │
                    ╲────────╱                │
                      │ YES                   │
               ┌──────────────┐   206         │
               │ T30min ← Ta(i)│              │
               └──────────────┘               │
                      │                       │
               ┌──────────────┐   207         │
               │ XMNREC ← "1" │               │
               └──────────────┘               │
                      │◀──────────────────────┘
      208             ▼
                 ╱────────────╲
                ╱  T30max > Ta(i) ╲     NO
               ╱      AND          ╲──────────┐
               ╲   XMXREC="1"      ╱          │
                ╲       ?        ╱            │
                 ╲────────────╱               │
                      │ YES                   │
                      ▼                       ▼
                    ( 2 )                   ( 3 )
```

# Fig.14

②          ③

TMXREC←T30max    209

AMP←TMXREC−TMNREC    210

T30min←Ta(i)    211

XMXREC←"0"    212

213    AMP≧A₀ ?    NO

YES

XNOCAL←"1"    214

215    T30min<Ta(i)
AND
XMNREC="1" ?    NO

YES

TMNREC←T30min    216

AMP←TMXREC−TMNREC    217

T30max←Ta(i)    218

XMNREC←"0"    219

④          ⑤

# Fig.15

AMP $\geqq A_0$ ? — 220

NO

XNOCAL ← "1" — 221

$|Ta(i-2)-Ta(i-1)| \geqq K_0|Ta(i-1)-Ta(i)|$ ? — 222

NO

YES

XNOCAL ← "1" — 223

END

# Fig.16

# Fig.17

$$\text{TORQUE CALCULATION ROUTINE}$$

301

NO ← $XCAL(i-1)="1"$ ?

YES

302

$XCAL(i-1)←"0"$

303

$XNOCAL="0"$ ? — NO

YES

304

$$h←\{Ta(i-1)-Ta(i)\}·\frac{60}{180}$$

305

$$T'b(i-1)←Tb(i-1)+h$$

306

$$DN(i-1)←\left(\frac{30°}{Tb'(i-1)}\right)^2-\left(\frac{30°}{Ta(i-1)}\right)^2$$

307

$$DLN(i-1)←DN(i-1)j-DN(i-1)$$

308

YES ← $DLN(i-1)≧0$ ?

NO

309

$$DLN(i-1)←0$$

311

$$XNOCAL←"0"$$

310

$$XCDLN(i-1)←"1"$$

$$\text{END}$$

# Fig.18

# Fig.19

②

410

n TIMES
CUMULATIVE ADDITION
?

NO

YES

411

CALCULATION OF MEAN
VALUE Mb OF $\sum Tb(i)$

412

$\beta(i) \leftarrow Mb / \sum Tb(i)$

413

$KTb(i) \leftarrow KTb(i) + \{\beta(i) - KTb(i)\} / 4$

414

$\sum Tb(i) \leftarrow 0$

①

END

# Fig.20

```
        ┌──────────────────────┐
        │ PROCESSING ROUTINE   │
        │ OF CDLNIX            │
        └──────────────────────┘
                  │
                  ▼
```

```
                    ╱ ATDC30° OF ╲         501
  NO   ◄───────────╱  No.3 CYLINDER ╲
                   ╲      ?         ╱
                    ╲──────────────╱
                         │ YES
                         ▼
```

502

$$\text{IS FLUCTUATION VALUE CALCULATION CONDITION SATISFIED ?}$$

YES ─────────────────┐

NO

503
$$CDLNIX \leftarrow 0$$

504
$$ALL\ DLNI\ (i) \leftarrow 0$$

505
$$ALL\ CDLNI\ (i) \leftarrow 0$$

506
CALCULATION OF LVLLFB

507
$$ALL\ DLNISM(i) \leftarrow LVLLFB$$

508
$$CDLNIX \leftarrow CDLNIX + 1$$

509
CALCULATION OF $N_{AVE}$, $PV_{AVE}$

```
        ┌──────┐
        │ END  │
        └──────┘
```

# Fig.21

CRANK ANGLE

| #1 TDC | #3 TDC | #4 TDC | #2 TDC | #1 TDC |

Ta(1)  Tb(1)  Ta(3)  Tb(3)  Ta(4)  Tb(4)  Ta(2)  Tb(2)  Ta(1)

XCAL(2)←"1"  XCAL(1)←"1"  XCAL(3)←"1"  XCAL(4)←"1"  XCAL(2)←"1"

Tb'(2)  Tb'(1)  Tb'(3)  Tb'(4)  Tb'(2)

DN(2)  DN(1)  DN(3)  DN(4)  DN(2)

DLN(2)  DLN(1)  DLN(3)  DLN(4)  DLN(2)

XCDLN(2)←"1"  XCDLN(3)←"1"  XCDLN(2)←"1"

XCDLN(1)←"1"  XCDLN(4)←"1"

PROCESSING OF
COUNTER CDLNIX

# Fig.22A

# Fig.22B

# Fig.23A

# Fig.23B

| TORQUE FLUCTUATION LEVEL | FEEDBACK CORRECTION VALUE |
|---|---|
| LVLH(3) | $+a_4$ |
| LVLH(2) | $+a_3$ |
| LVLH(1) | $+a_2$ |
| LVLLFB | $+a_1$ |
| LVLL(1) | $-b_1$ |
| LVLL(2) | $-b_2$ |
| LVLL(3) | $-b_3$ |
|  | $-b_4$ |

# Fig.24

```
         ┌──────────────────────┐
         │     MAIN ROUTINE     │
         └──────────────────────┘
                    │
    ┌───────────────▼──────────────┐
    │ │                          │ │  ‚600
    │ │   CALCULATION ROUTINE    │ │
    │ │   OF TORQUE FLUCTUATION  │ │
    │ └──────────────────────────┘ │
    │              │                │
    │ ┌────────────▼─────────────┐ │  ‚700
    │ │   CALCULATION ROUTINE    │ │
    │ │   OF FLLFB               │ │
    │ └──────────────────────────┘ │
    │              │                │
    │ ┌────────────▼─────────────┐ │  ‚800
    │ │   CALCULATION ROUTINE    │ │
    │ │   OF INJECTION TIME      │ │
    │ └──────────────────────────┘ │
    │              │                │
    │   ┌──────────▼───────────┐    │  ‚900
    │   │    OTHER ROUTINES    │    │
    │   └──────────────────────┘    │
    │              │                │
    └──────────────┘
```

# Fig.25

# Fig.26

EP 0 799 983 B1

# Fig.27

CALCULATION ROUTINE
OF FLLFB

701 — IS RENEWAL
CONDITION SATISFIED
?

NO

YES

702 — CALCULATION OF LVLLFB

703 — $LVLH(n) \leftarrow LVLLFB + DH(n)$

704 — $LVLL(n) \leftarrow LVLLFB + DL(n)$

705 — CHECK WHICH AREA DLNISM
BELONGS TO

706 — CALCULATION OF DLFB

707 — DETERMINE FLFFBij TO
BE RENEWED

708 — $FLLFBij \leftarrow FLLFBij + DLFB$

END

# Fig.28

```
┌─────────────────────────┐
│  CALCULATION ROUTINE    │
│  OF INJECTION TIME      │
└─────────────────────────┘
             │
             ▼
     ┌──────────────────┐ ── 801
     │ CALCULATION OF TP│
     └──────────────────┘
             │
  802 ─      ▼
       ◇──────────────◇ ── NO ──┐
        ╲    LEAN    ╱          │
         ╲    ?    ╱            │
          ◇───────◇             │
   803 ─    │ YES               │
     ┌──────────┐      ┌───────────────┐ ── 806
     │ FAF←1.0  │      │ FLEAN←1.0     │
     └──────────┘      └───────────────┘
   804 ─   │                  │
     ┌──────────────┐  ┌───────────────┐ ── 807
     │ CALCULATION  │  │ FLLFB←1.0     │
     │ OF FLEAN     │  └───────────────┘
     └──────────────┘         │
   805 ─   │           ┌──────────────┐ ── 808
     ┌──────────────┐  │  CONTROL     │
     │  READ IN     │  │  OF FAF      │
     │  OF FLLFB    │  └──────────────┘
     └──────────────┘         │
             │                │
             ▼◄───────────────┘
┌────────────────────────────────────┐ ── 809
│ TAU←                               │
│ TP·FLEAN·FLLFB·FAF+TAUV            │
└────────────────────────────────────┘
             │
             ▼
         ( END )
```

# Fig.29

AMPLITUDE OF
TORSIONAL
VIBRATION

2000  3000  4000  5000  N(r,p,m)

# Fig.30A

ANGULAR VELOSITY ω

TDC             BDC

# Fig.30B

ANGULAR VELOSITY ω

Z

TDC             BDC

# Fig.31

#1   #2   #3   #4

R           C   F

AMPLITUDE OF TORSIONAL VIBRATION

EP 0 799 983 B1

# Fig.32

INTERRUPTION ROUTINE EVERY
30° CRANK ANGLE

CALCULATION ROUTINE
OF Ta(i),Tb(i) — 1100

TORQUE CALCULATION
PERMISSION CHECK
ROUTINE — 1200

TORQUE CALCULATION
ROUTINE — 1300

CALCULATION ROUTINE
OF KTa(i),KTb(i) — 1400

PROCESSING ROUTINE
OF CDLNIX — 1500

END

61

# Fig.33

```
     ╭─────────────────────╮
     │ CALCULATION ROUTINE │
     │   OF Ta(i),Tb(i)    │
     ╰─────────────────────╯
                │
     ┌─────────────────────┐ 1101
     │   TIMEO ← TIME      │
     └─────────────────────┘
                │
     ┌─────────────────────┐ 1102
     │   READ IN OF TIME   │
     └─────────────────────┘
                │
1103       ╱─────────╲           NO
         ╱   ATDC30° OF  ╲──────────┐
         ╲  No.i CYLINDER ╱          │
           ╲      ?     ╱            │
             ╲───────╱              │
                │ YES                │
     ┌─────────────────────────────┐ 1104
     │ Ta(i) ← KTa(i)·(TIME−TIMEO) │
     └─────────────────────────────┘
                │
     ┌─────────────────────┐ 1105
     │  XCAL(i−1) ← "1"    │
     └─────────────────────┘
                │←──────────────────┘
1106       ╱─────────╲           NO
         ╱   ATDC90° OF  ╲──────────┐
         ╲  No.i CYLINDER ╱          │
           ╲      ?     ╱            │
             ╲───────╱              │
                │ YES                │
     ┌─────────────────────────────┐ 1107
     │ Tb(i) ← KTb(i)·(TIME−TIMEO) │
     └─────────────────────────────┘
                │←──────────────────┘
1108       ╱─────────╲           NO
         ╱  ATDC210° OF  ╲──────────┐
         ╲  No.i CYLINDER ╱          │
           ╲      ?     ╱            │
             ╲───────╱              │
                │ YES                │
     ┌─────────────────────────────┐ 1109
     │   CALCULATION OF T180(i)    │
     └─────────────────────────────┘
                │←──────────────────┘
           ╭─────────╮
           │   END   │
           ╰─────────╯
```

# Fig.34

# Fig.35

1307

X NOCAL='0' ?  — NO

YES

1308

$$h \leftarrow \{Ta(i-1) - Ta(i)\} \cdot \frac{60}{180}$$

$$T'b(i-1) \leftarrow Tb(i-1) + h$$   1309

1310

$$DN(i-1) \leftarrow \left(\frac{30°}{Tb'(i-1)}\right)^2 - \left(\frac{30°}{Ta(i-1)}\right)^2$$

1311

$$DLN(i-1) \leftarrow DN(i-1)j - DN(i-1)$$

1312

$DLN(i-1) \geqq 0$ ?

YES

NO

1313

$$DLN(i-1) \leftarrow 0$$

1315

$$X NOCAL \leftarrow '0'$$

1314

$$XCDLN(i-1) \leftarrow '1'$$

2

END

# Fig.36

MAIN ROUTINE

CALCULATION ROUTINE
OF TORQUE FLUCTUATION — 1600

CALCULATION ROUTINE
OF FLLFB — 1700

CALCULATION ROUTINE
OF INJECTION TIME — 1800

OTHER ROUTINES — 1900

# Fig.37

```
        CALCULATION ROUTINE OF
        TORQUE FLUCTUATION

  1601
              XCDLN(i)="1"        NO
                    ?
                   YES      1602
              XCDLN(i)←"0"

              DLNI(i)←DLNI(i)+DLN(i)    1603

              CDLNI(i)←CDLNI(i)+1      1604

  1605
              CDLNI(i)=8          NO
                    ?
                   YES           1606

  DLNISM(i)←
  DLNISM(i)+{DLNI(i)−DLNISM(i)}/4

              DLNI(i)←0         1607

              CDLNI(i)←0        1608

                    1
```

# Fig.38

# Fig.39

```
        ╭─────────────────────────╮
        │  CALCULATION ROUTINE    │
        │  OF INJECTION TIME      │
        ╰─────────────────────────╯
                     │
                     ▼
        ┌─────────────────────────┐  1801
        │   CALCULATION OF TP     │
        └─────────────────────────┘
                     │
   1802              ▼
        ◇───────────────────────◇      NO
        ◇        LEAN           ◇───────────────┐
        ◇          ?            ◇               │
        ◇───────────────────────◇               │
                     │ YES                       │
   1803              ▼                           ▼
        ┌──────────────────┐         ┌─────────────────────┐  1807
        │   FAF ← 1.0      │         │   FLEAN ← 1.0       │
        └──────────────────┘         └─────────────────────┘
                     │                           │
   1804              ▼                           ▼
        ┌──────────────────┐         ┌─────────────────────┐  1808
        │   CALCULATION    │         │   FLLFB ← 1.0       │
        │   OF FLEAN       │         └─────────────────────┘
        └──────────────────┘                     │
                     │                           ▼
   1805              ▼                 ┌─────────────────────┐  1809
        ┌──────────────────┐         │   KGTP(i) ← 1.0     │
        │   READ IN        │         └─────────────────────┘
        │   OF FLLFB       │                     │
        └──────────────────┘                     ▼
                     │               ┌─────────────────────┐  1810
   1806              ▼               │   CONTROL           │
        ┌──────────────────┐         │   OF FAF            │
        │   CALCULATION    │         └─────────────────────┘
        │   OF KGTP(i)     │                     │
        └──────────────────┘                     │
                     │                           │
   1811              ▼◄──────────────────────────┘
        ┌────────────────────────────────────────────────────┐
        │ TAU ←                                              │
        │ TP · FLEAN · FLLFB · FAF · KGTP(i) + TAUV          │
        └────────────────────────────────────────────────────┘
                     │
                     ▼
              ╭─────────────╮
              │    END      │
              ╰─────────────╯
```

# Fig.40

CRANK ANGLE (CA)

#1 TDC    30°    #3 TDC    #4 TDC

Ta(1)  Tb(1)  Ta(3)  Tb(3)  Ta(4)

T30

# Fig.41A

# Fig.41B

# Fig.42

$r_n(i-1)$

$S_1$

$S_2$

$S_3$

$S_4$

$S_5$

$r_1(i)$

$r_2(i)$

$r_3(i)$

$r_4(i)$

$r_5(i)$

N

Fig.43

Fig.44

# Fig.45

```
┌─────────────────────────────────┐
│ INTERRUPTION ROUTINE EVERY      │
│ 30° CRANK ANGLE                 │
└─────────────────────────────────┘
                │
                ▼
┌─────────────────────────────────┐  2100
│ CALCULATION ROUTINE             │
│ OF Ta(i),Tb(i)                  │
└─────────────────────────────────┘
                │
                ▼
┌─────────────────────────────────┐  2200
│ TORQUE CALCULATION              │
│ PERMISSION CHECK                │
│ ROUTINE                         │
└─────────────────────────────────┘
                │
                ▼
┌─────────────────────────────────┐  2300
│ TORQUE CALCULATION              │
│ ROUTINE                         │
└─────────────────────────────────┘
                │
                ▼
┌─────────────────────────────────┐  2400
│ CALCULATION ROUTINE             │
│ OF KTa(i),KTb(i)                │
└─────────────────────────────────┘
                │
                ▼
┌─────────────────────────────────┐  2500
│ PROCESSING ROUTINE              │
│ OF CDLNIX                       │
└─────────────────────────────────┘
                │
                ▼
            ( END )
```

# Fig.46

```
        ┌─────────────────────┐
        │ CALCULATION ROUTINE │
        │   OF Ta(i),Tb(i)    │
        └─────────────────────┘
                   │
                   ▼
        ┌─────────────────────┐
        │   TIMEO←TIME        │──── 2101
        └─────────────────────┘
                   │
                   ▼
        ┌─────────────────────┐
        │   READ IN OF TIME   │──── 2102
        └─────────────────────┘
                   │
   2103            ▼
         ◇ ATDC30° OF ◇        NO
         ◇ No.i CYLINDER ◇ ──────────┐
         ◇     ?     ◇               │
              │ YES                  │
              ▼                      │
        ┌─────────────────────────────────┐  2104
        │ Ta(i)←KTa(i)·(TIME-TIMEO)       │
        └─────────────────────────────────┘
              │
              ▼                2105
   NO   ◇ (i-1)=#1 OR #4 ◇
  ┌─────◇       ?        ◇
  │          │ YES
  │          ▼
  │     ┌──────────────────┐  2106
  │     │  XCAL(i-1)←"1"    │
  │     └──────────────────┘
  │          │                   │
  │          ▼◄──────────────────┘
  │   2107
  │     ◇ ATDC90° OF ◇      NO
  │     ◇ No.i CYLINDER ◇ ───────┐
  │     ◇     ?     ◇            │
  │          │ YES               │
  │          ▼            2108    │
  │     ┌─────────────────────────────────┐
  │     │ Tb(i)←KTb(i)·(TIME-TIMEO)       │
  │     └─────────────────────────────────┘
  │          │                   │
  └──────────┼───────────────────┘
             ▼
   2109
     ◇ ATDC210° OF ◇        NO
     ◇ No.i CYLINDER ◇ ──────────┐
     ◇     ?     ◇               │
          │ YES          2110     │
          ▼                      │
    ┌─────────────────────┐      │
    │ CALCULATION OF T180(i) │   │
    └─────────────────────┘      │
          │                      │
          ▼◄─────────────────────┘
       ┌───────┐
       │  END  │
       └───────┘
```

# Fig.47

TORQUE CALCULATION ROUTINE

2301 — FUEL SUPPLY STOP ? — NO

YES

2302 — $AMP > B_0$ ? — YES

NO

2303 — ATDC90° OF No.i CYLINDER ? — NO

YES

2304 — $(i-1) = \#1\ OR\ \#4$ ? — NO

YES

2305 — CALCULATION AREA OF $r_n(i-1)$ ? — NO

YES

2306 — $T(i-1) \leftarrow Tb(i-1) - Ta(i-1)$

2307 — $\Sigma T(i-1) \leftarrow \Sigma T(i-1) + T(i-1)$

2308 — $Cn(i-1) \leftarrow Cn(i-1) + 1$

(1)   (2)

# Fig.48

# Fig.49

③     ④     ⑤

2319

$$DN(\iota-1) \leftarrow \left(\dfrac{30°}{Tb'(\iota-1)}\right)^2 - \left(\dfrac{30°}{Ta'(\iota-1)}\right)^2$$

2320

$$DLN(\iota-1) \leftarrow DN(\iota-1)j - DN(\iota-1)$$

2321

$DLN(\iota-1) \geqq 0$ ?

YES

NO

2322

$DLN(\iota-1) \leftarrow 0$

2324

$XNOCAL \leftarrow "0"$

2323

$XCDLN(\iota-1) \leftarrow "1"$

END

# EP 0 799 983 B1

# Fig.50

```
        ┌─────────────────────────┐
        │  CALCULATION ROUTINE    │
        │  OF KTa(i),KTb(i)       │
        └─────────────────────────┘
                    │
2401                ▼
            ╱───────────────╲          NO
           ╱      FUEL        ╲──────────────────┐
           ╲  SUPPLY STOP     ╱                  │
            ╲───────?───────╱                    │
                    │ YES                         │
2402                ▼                             │
            ╱───────────────╲     YES             │
           ╱   AMP > B₀      ╲───────────────────┤
           ╲──────?─────────╱                     │
                    │ NO                          │
                    │                2416         │
2403                │          ┌──────────────────────────┐
                    │          │ ΣTa(ι),ΣTb(ι)←0          │
                    ▼          └──────────────────────────┘
        ┌──────────────────────────┐            │
        │ ΣTa(ι)←ΣTa(ι)+Ta(ι)      │            ▼
        └──────────────────────────┘          ( 1 )
2404                │
            ╱───────────────────────╲     NO
           ╱      n TIMES             ╲──────────────┐
           ╲  CUMULATIVE ADDITION    ╱               │
            ╲──────────?────────────╱                │
                    │ YES                            │
2405                ▼                                │
        ┌──────────────────────────┐                │
        │  CALCULATION OF MEAN      │                │
        │  VALUE Ma OF ΣTa(i)       │                │
        └──────────────────────────┘                │
                    │          2406                  │
                    ▼                                │
        ┌──────────────────────────┐   2407         │
        │  α(ι)←Ma/ΣTa(ι)          │                │
        └──────────────────────────┘                │
                    │                                │
                    ▼                                │
   ┌──────────────────────────────────────────┐     │
   │ KTa(ι)←KTa(ι)+{α(ι)-KTa(ι)}/4            │     │
   └──────────────────────────────────────────┘     │
                    │          2408                  │
                    ▼                                │
        ┌──────────────────────────┐                │
        │ ΣTa(ι)←0                 │                │
        └──────────────────────────┘                │
                    │                                │
                    │◄───────────────────────────────┘
                    ▼
                  ( 2 )
```

EP 0 799 983 B1

# Fig.51

2409

$i = \#1$ or $\#4$ ?

NO

YES

2410

$\sum Tb(i) \leftarrow \sum Tb(i) + Tb(i)$

2411

n TIMES
CUMULATIVE ADDITION
?

NO

YES

2412

CALCULATION OF MEAN
VALUE Mb OF $\sum Tb(i)$

2413

$\beta(i) \leftarrow Mb / \sum Tb(i)$

2414

$KTb(i) \leftarrow KTb(i) + \{\beta(i) - KTb(i)\} / 4$

2415

$\sum Tb(i) \leftarrow 0$

1

END

79

# Fig.52

PROCESSING ROUTINE
OF CDLNIX .

ATDC30° OF
No.3 CYLINDER
?
— 2501

NO

YES

IS FLUCTUATION
VALUE CALCULATION
CONDITION SATISFIED
?
2502

YES

NO

2503 — CDLNIX ← 0

2504 — DLNI (ⅰ) ← 0

2505 — CDLNI (ⅰ) ← 0

2506 — CALCULATION OF LVLLFB

2507 — DLNISM (ⅰ) ← LVLLFB

2508 — CDLNIX ←
CDLNIX + 1

2509 — CALCULATION
OF N$_{AVE}$,PM$_{AVE}$

END

# Fig.53

# Fig.54

```
      ┌──────────────────┐
      │   MAIN ROUTINE   │
      └────────┬─────────┘
               │
   ┌───────────▼────────────┐
   │  CALCULATION ROUTINE   │ 2600
   │  OF TORQUE FLUCTUATION │
   └───────────┬────────────┘
               │
   ┌───────────▼────────────┐
   │  CALCULATION ROUTINE   │ 2700
   │  OF FLLFB              │
   └───────────┬────────────┘
               │
   ┌───────────▼────────────┐
   │  CALCULATION ROUTINE   │ 2800
   │  OF INJECTION TIME     │
   └───────────┬────────────┘
               │
      ┌────────▼─────────┐
      │  OTHER ROUTINES  │ 2900
      └──────────────────┘
```

# Fig.55

```
        CALCULATION ROUTINE OF
        TORQUE FLUCTUATION VALUE
```

2601
XCDLN(i)=1 ? —NO→

YES
2602
XCDLN(i)←0

2603
DLNI(i)←DLNI(i)+DLN(i)

2604
CDLNI(i)←CDLNI(i)+1

2605
CDLNI(i)=8 ? —NO→

YES
2606
DLNISM(i)←
DLNISM(i)+{DLNI(i)−DLNISM(i)}/4

2607
DLNI(i)←0

2608
CDLNI(i)←0

(1)

# Fig.56

① 

2609

CDLNIX=8 ?  — NO

YES

2610

DLNISM←(ΣDLNISM( 1 )+ΣDLNISM( 4 ) )／2

CDLNIX←0  2611

END

# Fig.57

```
        ┌──────────────────────────┐
        │  CALCULATION ROUTINE     │
        │  OF INJECTION TIME       │
        └──────────────────────────┘
                    │
        ┌──────────────────────────┐  2801
        │   CALCULATION OF TP      │
        └──────────────────────────┘
                    │
  2802           ◇ LEAN ? ◇───── NO ────┐
                    │                     │
                   YES                    │
  2803     ┌──────────────┐      ┌──────────────┐  2807
          │  FAF←1.0     │      │ FLEAN←1.0    │
          └──────────────┘      └──────────────┘
                 │                      │
  2804     ┌──────────────┐      ┌──────────────┐  2808
          │ CALCULATION  │      │ FLLFB←1.0    │
          │ OF FLEAN     │      └──────────────┘
          └──────────────┘              │
                 │               ┌──────────────┐  2809
  2805     ┌──────────────┐      │ KGTP(i)←1.0  │
          │  READ IN     │      └──────────────┘
          │  OF FLLFB    │              │
          └──────────────┘      ┌──────────────┐  2810
                 │               │  CONTROL     │
  2806     ┌──────────────┐      │  OF FAF      │
          │ CALCULATION  │      └──────────────┘
          │ OF KGTP(i)   │              │
          └──────────────┘              │
                 └──────────────────────┘
```

2811

$$TAU \leftarrow TP \cdot FLEAN \cdot FLLFB \cdot FAF \cdot KGTP(i) + TAUV$$

```
        ┌──────────┐
        │  END     │
        └──────────┘
```

# Fig.58

# Fig.59

# Fig.60

# Fig.61

INTERRUPTION ROUTINE AT BTPC20°,
ATDC10°, ATDC50°, ATDC100°

CALCULATION ROUTINE
OF Ta(i),Tb(i) — 3100

TORQUE CALCULATION
PERMISSION CHECK
ROUTINE — 3200

TORQUE CALCULATION
ROUTINE — 3300

CALCULATION ROUTINE
OF KTa(i),KTb(i) — 3400

PROCESSING ROUTINE
OF CDLNIX — 3500

E N D

# Fig.62

```
┌────────────────────────┐
│  CALCULATION ROUTINE   │
│  OF Ta(i),Tb(i)        │
└────────────────────────┘
            │
┌────────────────────────┐
│  TIMEO ← TIME          │ ~3101
└────────────────────────┘
            │
┌────────────────────────┐
│  READ IN OF TIME       │ ~3102
└────────────────────────┘
            │
       3103 ◇ ATDC10° OF
         No.i CYLINDER ? ──NO──┐
            │ YES               │
┌────────────────────────────┐ │
│ Ta(i) ← KTa(i)·(TIME-TIMEO)│ │ 3104
└────────────────────────────┘ │
            │                   │
┌────────────────────────┐     │
│ XCAL(i-1) ← "1"        │3105 │
└────────────────────────┘     │
            │←──────────────────┘
       3106 ◇ ATDC100° OF
         No.i CYLINDER ? ──NO──┐
            │ YES               │
┌──────────────────────────────┐│
│ Tb(i)←3/5·KTb(i)·(TIME-TIMEO)││ 3107
└──────────────────────────────┘│
            │←──────────────────┘
         ( END )
```

EP 0 799 983 B1

# Fig.63

TORQUE CALCULATION PERMISSION
CHECK ROUTINE

3201

ATDC10° OF
EACH CYLINDER
? — NO → ( 1 )

↓ YES

3202

T30max ≦ Ta(ⅈ)
? — NO →

↓ YES

3203
T30max ← Ta(ⅈ)

3204
XMXREC ← "1"

3205

T30min ≧ Ta(ⅈ)
? — NO →

↓ YES

3206
T30min ← Ta(ⅈ)

3207
XMNREC ← "1"

3208

T30max > Ta(ⅈ)
AND
XMXREC = "1"
? — NO → ( 3 )

↓ YES

( 2 )

90

# Fig.64

②           ③

TMXREC←T30max   3209

AMP←TMXREC−TMNREC   3210

T30min←Ta(i)   3211

XMXREC←"0"   3212

3213    AMP ≧ A_0 ?    NO

YES

XNOCAL←"1"   3214

3215    T30min < Ta(i) AND XMNREC="1" ?    NO

YES

TMNREC←T30min   3216

AMP←TMXREC−TMNREC   3217

T30max←Ta(i)   3218

XMNREC←"0"   3219

④           ⑤

# Fig.65

④          ⑤

3220

$AMP \geqq A_0$ ?     NO

YES   3221

$XNOCAL \leftarrow "1"$

3222

$|Ta(i-2) - Ta(i-1)| \geqq$
$K_0 |Ta(i-1) - Ta(i)|$ ?    NO

YES  3223

$XNOCAL \leftarrow "1"$

① 

END

# Fig.66

TORQUE CALCULATION ROUTINE

NO ← XCAL($i-1$)="1" ? 3301

↓ YES

XCAL($i-1$)←"0" 3302

3303 XNOCAL="0" ? NO →

↓ YES

$h \leftarrow \{Ta(i-1) - Ta(i)\} \cdot \dfrac{60}{180}$ 3304

$T'b(i-1) \leftarrow Tb(i-1) + h$ 3305

3306 $DN(i-1) \leftarrow \left(\dfrac{30°}{Tb'(i-1)}\right)^2 - \left(\dfrac{30°}{Ta(i-1)}\right)^2$

$DLN(i-1) \leftarrow DN(i-1)j - DN(i-1)$ 3307

3308 YES ← $DLN(i-1) \geqq 0$ ? 

↓ NO

$DLN(i-1) \leftarrow 0$ 3309

3311 $XNOCAL \leftarrow "0"$

$XCDLN(i-1) \leftarrow "1"$ 3310

END

# Fig.67

```
        ┌─────────────────┐
        │  MAIN ROUTINE   │
        └─────────────────┘
                 │
   ┌─────────────▼─────────────────┐
   │    CALCULATION ROUTINE         │── 3600
   │    OF TORQUE FLUCTUATION        │
   └───────────────┬────────────────┘
                   │
   ┌───────────────▼────────────────┐
   │    CALCULATION ROUTINE          │── 3700
   │    OF FLLFB                      │
   └───────────────┬────────────────┘
                   │
   ┌───────────────▼────────────────┐
   │    CALCULATION ROUTINE          │── 3800
   │    OF INJECTION TIME            │
   └───────────────┬────────────────┘
                   │
       ┌───────────▼─────────────┐
       │    OTHER ROUTINES        │── 3900
       └─────────────────────────┘
```